# EUROPÄISCHE PATENTANMELDUNG

(11) **EP 4 819 458 A1**
(43) Veröffentlichungstag der Anmeldung: **07.10.2026**
(21) Anmeldenummer: 25192840.4
(22) Anmeldetag: 30.07.2025
(51) Int. Cl.: H02K 15/0421

(54) **KRANZANORDNUNGSVORRICHTUNG UND KRANZANORDNUNGSVERFAHREN MIT GEGENLÄUFIGEN SCHIEBERN**

(30) Priorität: 04.04.2025 DE 102025113302; 26.06.2025 EP 25185623
(71) Anmelder: Grob-Werke GmbH & Co. KG, 87719 Mindelheim (DE)
(72) Erfinder: Dreher, Clemens, 87719 Mindelheim (DE); Lutzenberger, Markus, 87719 Mindelheim (DE)
(74) Vertreter: KASTEL Patentanwälte PartG mbB

(57) **Zusammenfassung**

Die Erfindung betrifft eine Kranzanordnungsvorrichtung (10) zum Bilden einer Kranzanordnung (12) von elektrischen Leitern (16, 18) zum Bilden einer Spulenwicklung, mit einer Sammelaufnahme (22) mit mehreren um eine Achse angeordneten Aufnahmeräumen (24) zur Aufnahme von beim Bilden des Kranzes (14, 14.1, 14.2) darin axial einzufügenden Leiterabschnitten (16.1, 16.2) der Leiter (16, 18). Zur prozesstechnischen Verbesserung wird jeweils wenigstens ein radial innerer Schieber (28) pro Aufnahmeraum (24) mit einer ersten Klemmfläche (32) und jeweils wenigstens ein radial äußerer Schieber (30) pro Aufnahmeraum (24) mit einer zweiten Klemmfläche (34) vorgeschlagen, wobei die radial inneren und die radial äußeren Schieber (28, 30) insbesondere gegenläufig radial bewegbar sind.

## Beschreibung

Die Erfindung betrifft eine Kranzanordnungsvorrichtung und ein Kranzanordnungsverfahren, zum Bilden einer Kranzanordnung aus einem Kranz oder aus mehreren konzentrisch angeordneten Kränzen von elektrischen Leitern, um eine Spulenwicklung eines Bauteils einer elektrischen Maschine zu bilden.

Zum technologischen Hintergrund und zum Stand der Technik wird auf folgende Literaturstellen verwiesen:
[1] Wikipedia: Hairpin-Technologie, heruntergeladen am 06.06.2025 unter https://de.wikipedia.org/wiki/Hairpin-Technologie
[2] WO 2018/233771 A1,
[3] WO 2018/233774 A1
[4] WO 2018/233769 A1
[5] WO 2013/153564A1
[6] EP 3 771 079 A1

Die Erfindung liegt auf dem Gebiet der Herstellung, insbesondere Großserienherstellung, von Bauteilen von elektrischen Maschinen, wie insbesondere Motoren und Generatoren, und mehr insbesondere auf dem Gebiet der Herstellung von Spulenwicklungen für ein solches Bauteil, wie z.B. einen Stator. Insbesondere liegt die Erfindung auf dem Gebiet der Hairpin-Technologie, siehe [1]. Gemäß dieser Technologie ist es bekannt, derartige Spulenwicklungen aus einzelnen Leitern, z.B. I-Pins oder Hairpins, zu bilden, die in Nuten eines Gehäuses des Bauteils eingefügt werden, wobei die Leiterenden umgeformt und anschließend zu Spulenwicklungen verbunden werden. Zum Einfügen der Leiter ist es aus den Literaturstellen [2] bis [6] bekannt, die Leiter zunächst zu einem Kranz anzuordnen und dann den Kranz in das Gehäuse einzufügen.

Um einen Stator für elektrische Maschinen herzustellen, gibt es demnach die Möglichkeit, die dafür benötigten Spulenwicklungen durch die Anordnung von mehreren gebogenen elektrischen Leitern herzustellen. Bevor diese einzelnen, gebogenen elektrischen Leiter (nachfolgend Hairpins genannt) zur Herstellung des Stators in dafür vorgesehenes Blechpaket eingebracht werden können, wird aus diesen zunächst eine Kranzanordnung gebildet. Eine solche Kranzanordnungsvorrichtung wird in der Literaturstelle [6] beschrieben, die den nächstliegenden Stand der Technik bildet und bereits eine Kranzanordnungsvorrichtung und ein Kranzanordnungsverfahren beschreibt, wobei Leiter in eine Sammelaufnahme mit Nuten eingefügt werden, um dort einen Kranz zu bilden. Pro Nut ist ein Schieber vorgesehen. Auf den Schiebern können die Leiter beim Bilden des Kranzes aufsitzen. Werden die Schieber aus den Sammelaufnahmenuten gezogen, kann der Kranz in eine tiefere Position überführt werden, wo sie dann durch Klemmen mit den Schiebern festgehalten werden können.

Genauer beschreibt [6] eine Kranzanordnungsvorrichtung zur Bildung von Kranzanordnungen für vorzugsweise U-förmige Hairpins. Hierbei werden die Hairpins in eine Sammelaufnahme mit radial angeordneten Nuten eingebracht. Die in den Nuten befindlichen Schieber besitzen mehrere Aufgaben: So stützen diese mit ihrer Oberseite die eingebrachten Hairpins in einer höhergelegenen Position, der sogenannten Steckposition ab. Ist ein Kranz fertig gesteckt, wird dieser in eine niedrigere Lagerposition gebracht. Hier stützen die Schieber diesen fertig gesteckten Kranz mit ihrer radial nach außen gewandten Seite ab. Der anschließend zu steckende, radial weiter innen liegende, Kranz kann anschließend wieder auf der Schieberoberseite aufgestellt werden, bis dieser vervollständigt ist.

Die in [6] beschriebenen Schieber können sowohl von innen nach außen als auch von außen nach innen wirkend ausgestaltet werden. In [6] ist außerdem eine mechanische Kopplung zwischen einem Betätigungselement und den radialen Schiebern des Vorstecknests beschrieben. Über diese mechanische Kopplung wird die Bewegung des Betätigungselements mithilfe eines Getriebes in die Radialbewegung aller Schieber umgewandelt. Somit können mit einem Aktor alle Schieber betätigt werden. Zur Umsetzung dieser Kopplung wird beispielhaft in [6] der Einsatz eines Kegelflansches beschrieben, der in die schrägen Nuten der Schieber eingreift. Auch der Einsatz einer Kurvenscheibe wird in [6] als möglich betrachtet.

Ausgehend von [6] hat sich die Erfindung zur Aufgabe gestellt, prozesstechnisch weiter verbesserte Möglichkeiten zur Anordnung von Leitern in Kränze zur Bildung von Spulenwicklungen aufzuzeigen.

Zum Lösen dieser Aufgabe schafft die Erfindung eine Kranzanordnungsvorrichtung gemäß Anspruch 1 und ein Kranzanordnungsverfahren gemäß dem Nebenanspruch.

Vorteilhafte Ausgestaltungen sind Gegenstand der Unteransprüche.

Die Erfindung schafft gemäß einem Aspekt davon eine Kranzanordnungsvorrichtung zum Bilden einer Kranzanordnung aus einem Kranz oder aus mehreren konzentrisch angeordneten Kränzen von elektrischen Leitern, um eine Spulenwicklung eines Bauteils einer elektrischen Maschine zu bilden, mit
einer Sammelaufnahme mit mehreren um eine Achse ringförmig angeordneten in axialer Richtung offenen und durch sich in radialer Richtung erstreckende Begrenzungen begrenzte Aufnahmeräume zur Aufnahme von beim Bilden des Kranzes darin axial einzufügenden Leiterabschnitten der Leiter,
jeweils wenigstens einem radial inneren Schieber pro Aufnahmeraum, wobei der radial innere Schieber eine in die eine radiale Richtung gerichtete (erste) Klemmfläche in dem Aufnahmeraum aufweist,
jeweils wenigstens einem radial äußeren Schieber pro Aufnahmeraum, wobei der radial äußere Schieber eine in die andere radiale Richtung gerichtete (zweite) Klemmfläche in dem Aufnahmeraum aufweist,
wobei die radial inneren Schieber radial bewegbar sind und wobei die radial äußeren Schieber radial bewegbar sind.

Insbesondere ist vorgesehen, dass der radial innere Schieber eine radial nach außen gerichtete Stirnfläche als innere Klemmfläche in dem Aufnahmeraum aufweist und der radial äußere Schieber eine radial nach innen gerichtete Stirnfläche als äußere Klemmfläche in dem Aufnahmeraum aufweist. Insbesondere ist die an dem radial inneren Schieber ausgebildete erste (Schieber-)Klemmfläche eine innere Klemmfläche in dem jeweiligen Aufnahmeraum, während die an dem radial äußeren Schieber ausgebildete zweite (Schieber-)Klemmfläche eine äußere Klemmfläche in dem jeweiligen Aufnahmeraum ist. Ein Klemmen kann dann durch relatives Aufeinander zu Bewegen der Schieber oder mit anderen Worten ein Zusammendrücken der Schieber erfolgen.

Insbesondere werden hier die jeweiligen mit der inneren Klemmfläche des jeweiligen Aufnahmeraums versehenen Schieber unabhängig davon, ob sie von innen oder von außen betätigbar sind und sich entsprechend mit Anschlüssen oder Verbindungsstücken oder insgesamt als Bauteil radial nach innen oder radial nach außen erstrecken, als radial innere Schieber bezeichnet, während die mit der äußeren Klemmfläche des jeweiligen Aufnahmeraums versehenen Schieber unabhängig davon, ob sie von innen oder von außen betätigbar sind und sich entsprechend mit Anschlüssen oder Verbindungsstücken oder insgesamt als Bauteil radial nach innen oder radial nach außen erstrecken, als radial äußere Schieber bezeichnet.

Bei einigen Ausführungsformen sind die jeweiligen mit der inneren Klemmfläche versehenen radial inneren Schieber von radial innen betätigbar und die jeweiligen mit der äußeren Klemmfläche versehenen radial äußeren Schieber sind von radial außen betätigbar. Bei einigen Ausführungsformen sind die jeweiligen mit der inneren Klemmfläche versehenen radial inneren Schieber von radial außen betätigbar und die jeweiligen mit der äußeren Klemmfläche versehenen radial äußeren Schieber sind von radial innen betätigbar. Bei einigen Ausführungsformen sind die jeweiligen mit der inneren Klemmfläche versehenen radial inneren Schieber von radial innen betätigbar und die jeweiligen mit der äußeren Klemmfläche versehenen radial äußeren Schieber sind von radial innen betätigbar. Bei bevorzugten Ausführungsformen sind die jeweiligen mit der inneren Klemmfläche versehenen radial inneren Schieber von radial außen betätigbar und die jeweiligen mit der äußeren Klemmfläche versehenen radial äußeren Schieber sind von radial außen betätigbar.

Die Sammelaufnahme kann unterschiedlich gestaltet werden. Bei einigen Ausführungsformen ist als Sammelaufnahme ein eigenes Bauteil mit z.B. radialen Begrenzungen der Aufnahmeräume vorgesehen. Bei einigen anderen Ausführungsformen ist die Sammelaufnahme kein eigenes Bauteil; sie kann, gegebenenfalls auch ausschließlich, durch eine der Gruppen von Schiebern, z.B. die radial inneren Schieber, gebildet werden.

Bei einigen Ausführungsformen werden die radial inneren und die radial äußeren Schieber gemeinsam angetrieben. Bei einigen, besonders bevorzugten Ausführungsformen sind die radial äußeren Schieber unabhängig von den radial inneren Schiebern radial bewegbar.

Bei einigen Ausführungsformen ist vorgesehen, dass die radial inneren Schieber und/oder die radial äußeren Schieber jeweils an ihrer Oberseite einen ebenen Stützflächenbereich aufweisen, auf dem jeweils wenigstens ein Leiter zur Positionierung beim Bilden eines Kranzes abstützbar ist.

Bei einigen Ausführungsformen ist vorgesehen, dass von den jeweils einem Aufnahmeraum zugordneten Schiebern einer den anderen übergreift.

Bei einigen Ausführungsformen ist vorgesehen, dass die radial inneren Schieber jeweils einen radial äußeren Schieber umgreifen.

Bei einigen Ausführungsformen ist vorgesehen, dass die sich in radialer Richtung erstreckenden Begrenzungen eines Aufnahmeraums jeweils zumindest teilweise an einem der dem Aufnahmeraum zugeordneten Schieber ausgebildet sind.

Bei einigen Ausführungsformen ist vorgesehen, dass wenigstens einer, mehrere oder alle der radial inneren und/oder radial äußeren Schieber jeweils mehrteilig ausgebildet sind. Insbesondere ist dabei vorgesehen, dass an einem ersten Schieberteil die als Klemmfläche wirkende Stirnfläche und an einem zweiten Schieberteil ein Anschluss zum Verbinden mit einer Schiebergruppen-Bewegungseinrichtung zum gemeinsamen Bewegen einer Schiebergruppe ausgebildet ist. Bei einigen Ausführungsformen ist dabei vorgesehen, dass der erste und der zweite Schieberteil durch einen Kraftspeicher oder ein elastisches Element miteinander verbunden sind. Vorzugsweise ist dabei der erste Schieberteil gegen den Widerstand des Kraftspeichers oder des elastischen Elements relativ zu dem zweiten Schieberteil radial beweglich.

Bei einigen Ausführungsformen umgreift der erste Schieberteil den zweiten Schieberteil.

Bei einigen Ausführungsformen ist vorgesehen, dass an dem ersten Schieberteil ein Anschluss zum Verbinden mit einer Individualbewegungseinrichtung ausgebildet ist, mittels welcher der erste Schieberteil gegen den Widerstand des Kraftspeichers oder des elastischen Elements relativ zu dem zweiten Schieberteil radial beweglich ist.

Einige Ausführungsformen der Kranzanordnungsvorrichtung haben eine erste Schiebergruppen-Bewegungseinrichtung zum gemeinsamen radialen Bewegen der radial inneren Schieber. Einige Ausführungsformen der Kranzanordnungsvorrichtung haben eine zweite Schiebergruppen-Bewegungseinrichtung zum gemeinsamen radialen Bewegen der radial äußeren Schieber. Einige Ausführungsformen haben sowohl die erste und die zweite Schiebergruppen-Bewegungseinrichtung. Bei besonders bevorzugten Ausführungsformen ist die zweite Schiebergruppen-Bewegungseinrichtung unabhängig von der ersten Schiebergruppen-Bewegungseinrichtung betätigbar.

Bei einigen Ausführungsformen ist vorgesehen, dass die erste Schiebergruppen-Bewegungseinrichtung eine erste Kurvenscheibe hat, die mittels eines ersten Aktors drehbar ist und deren Drehbewegung mittels einer Kurven-Mitnehmer-Kopplung in eine Radialbewegung der radial inneren Schieber umwandelbar ist.

Bei einigen Ausführungsformen ist vorgesehen, dass die zweite Schiebergruppen-Bewegungseinrichtung eine zweite Kurvenscheibe hat, die mittels eines zweiten Aktors drehbar ist und deren Drehbewegung mittels einer Kurven-Mitnehmer-Kopplung in eine Radialbewegung der radial äußeren Schieber umwandelbar ist.

Bei einigen Ausführungsformen ist vorgesehen, dass die Schiebergruppen-Bewegungseinrichtungen zueinander konzentrische Kurvenscheiben haben.

Bei einigen Ausführungsformen ist vorgesehen, dass die erste und die zweite Schiebergruppen-Bewegungseinrichtung mittels radial außen angeordneter Aktoren angetrieben werden.

Einige Ausführungsformen der Kranzanordnungsvorrichtung haben eine an den ersten Schieberteil eines der Schieber angeschlossene Individualbewegungseinrichtung, die dazu eingerichtet ist, den ersten Schieberteil individuell und unabhängig von der Schiebergruppen-Bewegungseinrichtung, an die der zweite Schieberteil des Schiebers zusammen mit anderen Schiebern der gleichen Schiebergruppe gekoppelt ist, zu bewegen.

Bei einigen Ausführungsformen ist vorgesehen, dass die Sammelaufnahme einen axial versetzt zu den Schiebern angeordneten Vorstecknestring hat, in dem zumindest ein Teilbereich der Aufnahmeräume durch feststehende radiale Begrenzungswandbereiche begrenzt sind.

Bei einigen Ausführungsformen sind in dem Vorstecknestring zumindest ein Teilbereich der Aufnahmeräume durch radiale und in Umfangsrichtung verlaufende Begrenzungswandbereiche begrenzt. Eine Begrenzung in Umfangsrichtung ist bei anderen Ausführungen weggelassen.

Bei einigen Ausführungsformen ist vorgesehen, dass der Vorstecknestring axial relativ zu den radial inneren und radial äußeren Schieber bewegbar ist.

Beispielsweise ist der Vorstecknestring axial zur Sammelaufnahme bewegbar, um die vorgesteckten Kränze in die Lagerposition zu bringen.

Bei einigen Ausführungsformen ist hierzu vorgesehen, dass die radial inneren und radial äußeren Schieber an einer Schieberführung geführt sind, die axial relativ zu dem Vorstecknestring bewegbar ist.

Gemäß einem weiteren Aspekt schafft die Erfindung ein Kranzanordnungsverfahren zum Bilden einer Kranzanordnung aus einem Kranz oder mehreren konzentrisch angeordneten Kränzen von elektrischen Leitern, um eine Spulenwicklung eines Bauteils einer elektrischen Maschine zu bilden, umfassend:
a) Bereitstellen einer Kranzanordnungsvorrichtung nach einem der voranstehenden Ansprüche,
b) Bereitstellen der radial inneren und/oder radial äußeren Schieber in einer Vorsteckstellung, in der sie zumindest teilweise in die Aufnahmeräume eingefahren sind;
c) Einstecken von Leiterabschnitten elektrischer Leiter in die Aufnahmeräume so, dass die Leiterabschnitte auf den in der Vorsteckstellung zumindest teilweise in die Aufnahmeräume eingefahrenen Schiebern aufstützen und ein Kranz aus den elektrischen Leitern gebildet wird,
d) Verlagern des Kranzes aus einer Vorsteckposition, in der die den Kranz bildenden Leiter aus der Sammelaufnahme vorstehen, in eine Lagerposition, in der die einen zuvorigen Kranz bildenden Leiter zum Stecken eines weiteren Kranzes gelagert werden oder in eine zwischen der Vorsteckposition und der Lagerposition angeordnete Zwischenposition;
e) relatives Verfahren der radial inneren und äußeren Schieber, um die Leiter in der Vorsteckposition oder der Zwischenposition zwischen den an den Schiebern ausgebildeten Klemmflächen zu klemmen.

Schritt e) kann dabei je nach Ausrichtung der Klemmflächen an den jeweiligen Schieber durch ein relatives Verfahren der Schieber in Richtung aufeinander zu (in Richtung "zusammendrücken") oder in Richtung voneinander weg (in Richtung "auseinanderziehen) erfolgen.

Einige Ausführungsformen der Kranzanordnungsvorrichtung haben eine Steuerung, die dazu eingerichtet ist, die Kranzanordnungsvorrichtung zum Durchführen des zuvor genannten Kranzanordnungsverfahrens zu veranlassen.

Ausführungsformen der Erfindung betreffen die Hairpintechnologie und betreffen insbesondere eine Kranzanordnungsvorrichtung mit mechanisch voneinander entkoppelten Halteschiebern.

Im Folgenden werden einige Vorteile bevorzugter Ausführungsformen der Erfindung näher erläutert.

Im Unterschied zum Stand der Technik sind bei einigen Ausführungsformen in wenigstens einigen der Aufnahmeräume pro Aufnahmeraum ein radial innerer und ein radial äußerer Schieber vorgesehen. Wenn man pro Aufnahmeraum wenigstens einen radial inneren als auch einen radial äußeren Schieber zur Verfügung stellt, kann ein verbessertes Klemmen zwischen den Schiebern stattfinden. Das Klemmen kann an unterschiedlichen radialen Positionen stattfinden. Insbesondere können die Hairpin-Kränze nicht entweder nur an einer radial innenliegenden Nutwandung oder einer radial außenliegenden Nutwandung wie bei [6] geklemmt werden, sondern auch auf Zwischenpositionen zwischen den beiden gegenläufigen Schiebern. Auch kann wahlweise radial innerhalb eines bereits gesteckten Kranzes als auch radial außerhalb eines gesteckten Kranzes eine Stützfläche für das Aufstützen weiterer Leiter zum Stecken eines benachbarten Kranzes zur Verfügung gestellt werden. Somit können beispielsweise Kränze mit unterschiedlichen Radien gesteckt werden, auch können innere und äußere Kränze in beliebiger Reihenfolge gesteckt werden. Auch kann je nach Ansteuerung der Schieber ein Klemmen einzelner Leiter auf Zwischenpositionen stattfinden. Dadurch sind die Vorrichtung und das Verfahren universeller verwendbar.

Bei einigen Ausführungsformen ist wenigstens einer der Schieber mehrteilig aufgebaut, wobei ein erster und ein zweiter Schieberteil relativ zueinander bewegbar sind. Dies ermöglicht beispielsweise eine Ansteuerung des Schiebers mit unterschiedlichen Betätigungselementen. Vorzugsweise sind die Schieberteile miteinander gekoppelt, z.B. elastisch miteinander gekoppelt. Beispielsweise sind zweiteilige Schieber vorgesehen, bei denen die beiden Teile kinematisch durch eine Feder entkoppelt sind. Das Vorsehen von mehrteiligen Schiebern ist auch bei Ausführungen mit nur einem Schieberje Aufnahmeraum möglich, und nicht nur bei Ausführungen, wo in jedem Aufnahmeraum jeweils zwei gegenläufige Schieber vorgesehen sind.

Bei einigen Ausführungsformen sind je zwei gegenläufige Schieber pro Aufnahmenut vorhanden, wobei eine besondere konkrete Gestaltung und Anordnung von zweiteiligen, in ihren beiden Teilen jeweils federentkoppelten Schiebern vorgesehen sind. Bei einigen Ausführungsformen wird hierbei der radial innere Schieber nicht auch von radial innen betätigt - was vom Bauraum her schwieriger zu bewerkstelligen ist - sondern von radial außerhalb des radial äußeren Schiebers betätigt. Hierfür ist bei einigen Ausführungsformen vorgesehen, dass der radial innere Schieber den radial äußeren Schieber umfasst, d.h. mit anderen Worten, der radial innere Schieber umschließt den radial äußeren Schieber.

Einige Vorteile von Ausführungsformen, die einen oder mehrere mehrteilige Schieber (eventuell in Kombination mit gegenläufigen Schiebern) aufweisen, werden im Folgenden anhand eines Vergleichs mit dem Stand der Technik nach [6] näher erläutert.

Bei [6] sind die Halteschieber miteinander durch eine gemeinsame Betätigung gekoppelt. Die miteinander gekoppelten Halteschieber können alle in die Kranzanordnungsvorrichtung befindlichen Hairpins nur dann klemmen, wenn sich in jeder Nut der Kranzanordnungsvorrichtung dieselbe Anzahl an Hairpinschenkeln befindet. Befinden sich in einer Nut mehr Hairpinschenkel als in anderen Nuten, so können aufgrund der mechanischen Kopplung der Schieber nur die Pinschenkel dieser einen Nut geklemmt werden. Ist die Position einiger Hairpins nicht exakt durch die Halteschieber definiert, können diese die gewünschte Position verlassen, wodurch der Prozessablauf gestört werden kann. Die bisherige Kranzanordnungsvorrichtung ist daher für einen Betrieb mit gleichmäßig gefüllten Nuten vorgesehen. Bei ungleichmäßig gefüllten Nuten birgt, abgesehen von Prozessunsicherheiten, die beschriebene mechanische Kopplung der einzelnen Schieber beim Einsatz einer oder mehrerer Kurvenscheiben die Gefahr, dass die gesamte Motorkraft im schlimmsten Fall auf einen einzelnen Schieber wirkt. Die Vorrichtung muss daher sehr robust aufgebaut werden, ansonsten könnte eine solche Situation zur Zerstörung des Schiebers bzw. der Kurvenrolle führen.

Außerdem müssen zum Einbringen einzelner Hairpins aufgrund der mechanischen Kopplung bei [6] zwangsweise die Schieber aller Nuten geöffnet werden. Auch hier werden die Hairpins aller Nuten in einem undefinierten Zustand überlassen, den diese im schlimmsten Fall verlassen können und so den Prozessablauf stören können.

Des Weiteren stehen beim bisherigen Stand der Technik Hairpins mit unterschiedlich langen Schenkeln in der Steckposition mit nur einem Schenkel auf dem Halteschieber auf. Der andere Pinschenkel hat keinen Kontakt zum Schieber. Somit ist ein unkontrolliertes Verkippen dieses Pins möglich.

Darüber hinaus ist ein Klemmen eines einzelnen Pins in einer Position zwischen Steckposition und Lagerposition nicht möglich. Es gibt Hairpins, für die ein Klemmen in einer solchen Zwischenposition von Vorteil ist. Hierzu gehören beispielsweise Hairpins mit einem Pinschenkel - sogenannte I-Pins.

Um einen dauerhaft geklemmten Zustand jedes Hairpins nach dessen Sammeln in einer Kranzanordnungsvorrichtung zu erreichen, ist bei einigen Ausführungsformen vorgesehen, dass die Halteschieber der einzelnen Aufnahmeräume (z.B. Nuten) der Sammelaufnahme unabhängig voneinander geöffnet oder geschlossen werden können. Bei einigen Ausführungsformen wird ein geklemmter Zustand der in einem Aufnahmeraum (z.B. einer Nut) befindlichen Hairpins unabhängig von der Anzahl an Pinschenkeln erreicht, mit der die entsprechenden Aufnahmeräume befüllt sind. Darüber hinaus ist es weiterhin möglich, die Position aller Halteschieber der Vorrichtung gemeinsam relativ zu den Hairpins zu verändern, um diese wahlweise gesammelt in einen geklemmten oder ungeklemmten Zustand überführen zu können. Diese Zustände sind für den Prozessschritt des Sammelns selbst sowie für nachfolgende Prozessschritte vorzusehen, wie ein gesammeltes Ausheben der Hairpins aus der Vorrichtung.

Um die vorgenannten Anforderungen zu erfüllen, ist bei besonders bevorzugten Ausführungsformen keine starre mechanische Kopplung der zum Angreifen an den Pins vorzusehenden einzelnen Schieberteile zu einer zentralen Stelleinrichtung mehr vorhanden. Die zum Erfassen der Pins vorgesehenen einzelnen Schieberteile der Kranzanordnungsvorrichtung werden vielmehr mithilfe eines insbesondere federgelagerten Schiebersystems von der Bewegung des Betätigungselements bzw. des Getriebes entkoppelt.

So wird die Haltekraft der an den Hairpins anliegenden Schieberteile über das Stauchen der Feder mithilfe des Getriebes aufgebracht. Durch den Federweg kann eine ungleiche Befüllung der Aufnahmeräume (z.B. Nuten) der Sammelaufnahme ausgeglichen werden.

Ebenfalls kann, je nach Stellung des Getriebes und der daraus resultierenden Veränderung der Stauchung der Feder die entsprechende Haltekraft an den Pins variiert werden.

Eine gesammelte, radiale Bewegung aller Schieber ist bei bevorzugten Ausgestaltungen weiterhin über ein zentrales Getriebe möglich. Im Rahmen des Federweges kann jeder einzelne dem Pin zugeordneter Schieberteil zudem über ein und/oder mehrere weitere außenstehende Betätigungselemente, beispielsweise Pneumatikzylinder, geöffnet und geschlossen werden. Diese weiteren Betätigungselemente können entweder starr mit der Sammelaufnahme verbunden sein oder sich relativ zu dieser bewegen.

Bei Ausführungsformen der Erfindung können die (mehrteiligen) Schieber sowohl eine Klemmung an den Pins im Vorstecknest von radial innen nach radial außen vornehmen (nachfolgend radial innere Schieber genannt) als auch von außen nach innen (nachfolgend radial äußerer Schieber genannt). Ebenfalls ist eine Kombination möglich.

Im Unterschied zum Stand der Technik sind bei bevorzugten Ausgestaltungen der Erfindung die einzelnen die Leiter erfassenden Schieberteile über Kraftspeicher wie z.B. Federn mechanisch von ihrem zentralen Steuergetriebe entkoppelt. Dies ermöglicht neben dem gleichzeitigen Öffnen und Schließen aller Schieber das gezielte Öffnen und Schließen einzelner Schieber durch außen befindliche Betätigungselemente. Somit können Hairpins in einzelne Nuten eingebracht werden, während die übrigen Nuten geschlossen bleiben und die darin befindlichen Hairpins in einer gespannten Position verbleiben. Außerdem können die Hairpins aller Nuten gleichzeitig über die Kurvenscheibe in Kombination mit dem Federweg der Schieber geklemmt werden, auch wenn die einzelnen Nuten der Sammeleinrichtung mit unterschiedlichen Anzahlen an Hairpins bestückt sind.

Ebenso ist es möglich, U-förmige Hairpins mit unterschiedlich langen Schenkeln mithilfe der Nestmechanik sicher im Nest zu halten, indem der längere Schenkel in der Steckposition durch die Schieber bereits geklemmt ist, während der kürzere Schenkel auf einem geschlossenen Schieber in einer anderen Nut aufsteht. Alternativ können bei einem solchen Hairpin auch beide Schenkel geklemmt werden.

Außerdem ist es - insbesondere aufgrund gegenläufiger Schieber in dem Aufnahmeraum - möglich, die Hairpins in einer Position zwischen Steckposition und Lagerposition zu klemmen. Dies bietet den Vorteil, dass während des Steckprozesses eine Übergabe dieses Pins an eine zweite Einheit möglich ist, die den Hairpin in seine schlussendliche Lagerposition überführt, um eine schwerkraftgesteuerte Bewegung auszuschließen. Dies verhindert ungewollte Bewegungen dieses Hairpins.

Zudem kann es sinnvoll sein, komplette Pinkränze in dieser Zwischenposition in das Sammelnest einzubringen, um jenen Hairpinkranz dauerhaft in einer geklemmten Position zu halten. Dies bildet eine Erweiterung zu der bisherigen Steckposition, in der die Pins lediglich auf die Schieber aufgestellt werden. Diese geklemmte Position des kompletten Kranzes verhindert ein Verkippen der Hairpins in eine undefinierte Richtung.

Einige Ausführungsformen der Erfindung ermöglichen eine kinematische Entkopplung aller Einzelschieber von der Bewegungsmechanik, die dazu ausgelegt ist, alle Schieber gleichermaßen zu bewegen. Das bedeutet, dass die Primärbewegung alle Schieber gleichermaßen bewegt, man aber jeden Einzelschieber auch noch durch eine Sekundärbewegung steuern kann, so können einzelne Valenzen geöffnet/geschlossen werden, während alle anderen Valenzen geschlossen/geöffnet sind.

Einige Ausführungsformen der Erfindung bringen Kraftspeicher wie insbesondere Federn mit, die es möglich machen, unterschiedliche Anzahlen an Pins in jeder Höhe zwischen Lager und Steckposition zu halten/klemmen.

Einige Ausführungsformen der Erfindung ermöglichen ein gerades Positionieren auch von U-Pins, deren Schenkellängen sich unterscheiden, indem ein Schenkel geklemmt wird, während der andere Schenkel oberhalb/auf der Stirnseite der Schieber positioniert ist.

Einige Ausführungsformen der Erfindung ermöglichen ein Positionieren/Klemmen von I-Pins auf jeder Höhe zwischen Lager- und Steckposition.

Einige Ausführungsbeispiele werden im Folgenden anhand der beigefügten Zeichnungen näher erläutert. Darin zeigt:
- Fig. 1: eine zweidimensionale Schnittansicht als Gesamtansicht einer Kranzanordnungsvorrichtung - auch Vorstecknest genannt - mit einer darin gehaltenen Kranzanordnung aus mehreren Kränzen von Leitern - Hairpins - zum Bilden einer Spulenwicklung;
- Fig. 2: ein trimetrische Schnittansicht als weitere Gesamtansicht der Kranzanordnungsvorrichtung mit der Kranzanordnung;
- Fig. 3: eine trimetrische Ansicht als weitere Gesamtansicht der Kranzanordnungsvorrichtung mit der Kranzanordnung;
- Fig. 4: eine trimetrische Schnittansicht einer Sammelaufnahme der Kranzanordnungsvorrichtung, wobei ein als Nut ausgebildeter Aufnahmeraum in einem geöffneten Zustand gezeigt ist, in dem radial innere Schieber und radial äußere Schieber über beispielsweise mit je einer Kurvenscheibe ausgebildetes Schiebergruppen-Bewegungseinrichtungen geöffnet sind;
- Fig. 5: eine zweidimensionale Schnittansicht, die die Schieber mit geöffnetem Aufnahmeraum wie in Fig. 4 zeigt;
- Fig. 6: eine trimetrische Darstellung einer Ansicht der Kranzanordnungsvorrichtung von unten mit freigelegten Kurvenscheiben;
- Fig. 7: eine zweidimensionale Ansicht der Kranzanordnungsvorrichtung von unten mit freigelegten Kurvenscheiben;
- Fig. 8: eine zweidimensionale Ansicht der Kranzanordnungsvorrichtung von oben;
- Fig. 9: trimetrische Ansichten von Bauteilen des radial inneren Schiebers mit einem Ausführungsbeispiel für eine ersten Schiebergruppen-Bewegungseinrichtung und einem Ausführungsbeispiel für eine erste Individualbewegungseinrichtung;
- Fig. 10: eine Ansicht wie in Fig. 9, wobei zusätzlich mehrere der radial inneren Schieber und ein Teil einer Schieberführung gezeigt ist;
- Fig. 11: eine Ansicht wie in Fig. 10, wobei weitere Teile der Schieberführung und ein Vorstecknestring gezeigt sind;
- Fig. 12: eine zweidimensionale Schnittansicht mit den Bauteilen des radial inneren Schiebers, der Schieberführung und dem Vorstecknestring;
- Fig. 13: eine perspektivische Explosionsdarstellung der Bauteile des radial inneren Schiebers sowie Teilen der ersten Schiebergruppen-Bewegungseinrichtung;
- Fig. 14: die Explosionsdarstellung von Fig. 14 in zweidimensionaler Ansicht;
- Fig. 15: trimetrische Ansichten von Bauteilen des radial äußeren Schiebers mit einem Ausführungsbeispiel für eine zweite Schiebergruppen-Bewegungseinrichtung und einem Ausführungsbeispiel für eine zweite Individualbewegungseinrichtung;
- Fig. 16: eine Ansicht vergleichbar zu Fig. 15, wobei zusätzlich Bauteile der Schieberführung gezeigt sind;
- Fig. 17: eine Ansicht wie in Fig. 16, wobei zusätzlich der Vorstecknestring gezeigt ist;
- Fig. 18: eine zweidimensionale Schnittansicht mit den Bauteilen des radial äußeren Schiebers, der Schieberführung und dem Vorstecknestring;
- Fig. 19: eine perspektivische Explosionsdarstellung der Bauteile des radial äußeren Schiebers sowie Teilen der zweiten Schiebergruppen-Bewegungseinrichtung;
- Fig. 20: die Explosionsdarstellung von Fig. 14 in zweidimensionaler Ansicht;
- Fig. 21: eine trimetrische Gesamtansicht der Bauteile des radial inneren Schiebers, des radial äußeren Schiebers, der ersten Schiebergruppenbewegungseinrichtung mit einer ersten Kurvenscheibe, der zweiten Schiebergruppen-Bewegungseinrichtung mit einer zweiten Kurvenscheibe sowie einem zentral über die Kurvenscheiben geöffnetem Aufnahmeraum (sowohl radial innerer als auch radial äußerer Schieber geöffnet);
- Fig. 22: eine zweidimensional geschnittene Gesamtansicht der Bauteile des radial inneren Schiebers, des radial äußeren Schiebers, der ersten Schiebergruppenbewegungseinrichtung mit der ersten Kurvenscheibe, der zweiten Schiebergruppen-Bewegungseinrichtung mit der zweiten Kurvenscheibe sowie dem zentral über die Kurvenscheiben geöffnetem Aufnahmeraum (sowohl radial innerer als auch radial äußerer Schieber geöffnet);
- Fig. 23: eine Ansicht wie Fig. 21, wobei der Aufnahmeraum zentral über die Kurvenscheiben geschlossen ist (sowohl radial innerer als auch radial äußerer Schieber geschlossen);
- Fig. 24: die Situation von Fig. 23 in zweidimensionaler geschnittener Ansicht;
- Fig. 25: eine perspektivische Explosionsdarstellung einer Schieberbaugruppe, die einen radial inneren und einen radial äußeren Schieber aufweist, zusammen mit erster und zweiter Kurvenscheibe;
- Fig. 26: die Explosionsdarstellung von Fig. 25 in zweidimensionaler Ansicht;
- Fig. 27: eine Schnittansicht der Schieberbaugruppe von oben, um einen Umgriff des radial inneren Schiebers um den radial äußeren Schieber zu illustrieren;
- Fig. 28: eine trimetrische Schnittansicht der Schieberbaugruppe, um den Umgriff des radial inneren Schiebers um den radial äußeren Schieber zu illustrieren;
- Fig. 29: eine trimetrische Ansicht wie in Fig. 23, wobei ein einzelner radial äußerer Schieber mittels einer zweiten Individualbetätigungseinrichtung geöffnet ist und alle anderen Schieber geschlossen sind;
- Fig. 30: die Situation von Fig. 29 in zweidimensionaler Ansicht;
- Fig. 31: eine trimetrische Ansicht wie in Fig. 23, wobei ein einzelner radial innerer Schieber mittels einer ersten Individualbetätigungseinrichtung geöffnet ist und alle anderen Schieber geschlossen sind;
- Fig. 32: die Situation von Fig. 32 in zweidimensionaler Ansicht;
- Fig. 33: eine teils geschnittene trimetrische Ansicht der Kranzanordnungsvorrichtung, in der bereits ein zuvor angeordneter erster Kranz geklemmt ist, zur Darstellung eines ersten Schritts eine Prozessablaufs des Vorsteckens eines Hairpinkranzes mit regelmäßigen Hairpins über Betätigungen mittels der Schiebergruppen-Bewegungseinrichtungen und ohne Betätigung der Individualbetätigungseinrichtungen;
- Fig. 34: eine Ansicht wie in Fig. 33, beim Aufstellen eines zweiten regelmäßigen Kranzes radial weiter innen auf den Schiebern;
- Fig. 35: eine Ansicht wie in Fig. 33 und 34 während eines weiteren Prozessschritts des Vorsteckens, in dem die Schieber über die Schiebergruppen-Bewegungseinrichtungen - hier nicht über den gesamten Weg - geöffnet werden und die Kranzanordnung aus der Lagerposition mittels eines Nestoberteils - beispielsweise Vorstecknestring - ausgehoben wird;
- Fig. 36: eine Ansicht wie in Fig. 33 bis 35 während eines weiteren Prozesschritts, bei dem der erste und der zweite Kranz bei komplett mittels der Schiebergruppen-Bewegungseinrichtungen geöffneten Schiebern abgesenkt werden;
- Fig. 37: eine Ansicht wie in Fig. 33 bis 36 bei dem letzten Prozessschritt zum Anordnen des zweiten Kranzes, wobei wiederum eine Situation wie in Fig. 33 entsteht, wobei hier aber die Kranzanordnung aus erstem und zweitem Kranz über die Schieber und die Schiebergruppen-Bewegungseinrichtungen geklemmt werden;
- Fig. 38: eine zweidimensionale Schnittansicht der Kranzanordnungsvorrichtung, wobei ein erster Kranz in einer Lagerposition und ein zweiter Kranz auf Halbhöhe geklemmt wird;
- Fig. 39: eine trimetrische geschnittene Darstellung der Situation von Fig. 38;
- Fig. 40: eine Ansicht wie in Fig. 38, wobei ein einzelner Schieber über die zugeordnete Individualbetätigungseinrichtung geöffnet wird, um in der in Fig. 38 gezeigten Situation einen einzelnen Leiter in die Sammelaufnahme einzufügen, während die bereits gesteckten Leiter in einer geklemmten Position verbleiben;
- Fig. 41: eine Ansicht wie in Fig. 40, wobei ein I-Pin auf entsprechender Halbhöhe gesteckt wird;
- Fig. 42: die Ansicht von Fig. 41, wobei nun der eingesteckte I-Pin durch den zuvor betätigten einzelnen Schieber geklemmt wird;
- Fig. 43: die Situation von Fig. 40 in trimetrischer Ansicht;
- Fig. 44: die Situation von Fig. 41 in trimetrischer Ansicht;
- Fig. 45: die Situation von Fig. 42 in trimetrischer Ansicht;
- Fig. 46: eine zweidimensionale Schnittansicht der Kranzanordnungsvorrichtung, in der ein erster und ein zweiter Kranz in Lagerposition geklemmt sind, wobei ein einzelner Sonderleiter, beispielsweise I-Pin, auf Halbhöhe geklemmt wird,
- Fig. 47: eine zweidimensionale Schnittansicht der Kranzanordnungsvorrichtung, in der ein erster und ein zweiter Kranz in Lagerposition geklemmt sind, zur Darstellung eines ersten Prozessschritts zum Einbringen eines einzelnen Leiters - beispielsweise Sonderleiter wie I-Pin - radial innen in einen der Aufnahmeräume, während alle Leiter in anderen Aufnahmeräumen geklemmt bleiben;
- Fig. 48: eine trimetrische Schnittansicht der Kranzanordnungsvorrichtung ausgehend von der Situation von Fig. 47 bei einem weiteren Prozessschritt, wobei nun ein radial innerer Schieber in dem einen Aufnahmeraum mittels der zugeordneten Individialbetätigungseinrichtung geöffnet wird, um den einzelnen Leiter radial innen einzubringen;
- Fig. 49: eine Ansicht wie in Fig. 48, wobei der einzelne Leiter weiter eingeführt wird;
- Fig. 50: eine Ansicht wie in Fig. 49 kurz nach der Situation von Fig. 49, wobei der einzelne Leiter an seine Position eingeführt und durch Rückführen des mittels der Individualbetätigungseinrichtung betätigten radial inneren Schiebers geklemmt wird;
- Fig. 51: die Situation von Fig. 49 in zweidimensionaler Ansicht;
- Fig. 52: die Situation von Fig. 50 in zweidimensionaler Ansicht;
- Fig. 53: eine zweidimensionale Schnittansicht der Kranzanordnungsvorrichtung, in der ein erster und ein zweiter Kranz in Lagerposition geklemmt sind, zur Darstellung eines ersten Prozessschritts zum Einbringen eines einzelnen Leiters - beispielsweise Sonderleiter wie I-Pin - radial außen in einen der Aufnahmeräume, während alle Leiter in anderen Aufnahmeräumen geklemmt bleiben, wobei ein radial äußerer Schieber in dem einen Aufnahmeraum mittels der zugeordneten Individialbetätigungseinrichtung geöffnet wird;
- Fig. 54: eine zweidimensionale Schnittansicht der Kranzanordnungsvorrichtung ausgehend von der Situation von Fig. 53 bei einem weiteren Prozessschritt, wobei der einzelne Leiter weiter eingeführt ist;
- Fig. 55: eine Ansicht wie in Fig. 54 kurz nach der Situation von Fig. 54, wobei der einzelne Leiter an seine Position eingeführt und durch Rückführen des mittels der Individualbetätigungseinrichtung betätigten radial äußeren Schiebers geklemmt wird;
- Fig. 56: die Situation von Fig. 54 in trimetrischer Ansicht;
- Fig. 57: eine trimetrische Ansicht wie in Fig. 56 kurz nach der Situation von Fig. 56, wobei nun der einzelne Leiter an seine bestimmungsgemäße Position eingeführt ist und der radial äußere Schieber mittels der zugeordneten Individualbetätigungseinrichtung noch geöffnet ist;
- Fig. 58: die Situation von Fig. 55 in trimetrischer Ansicht, der einzelne Leiter ist an seiner Position eingeführt und wird durch Rückführen des mittels der Individualbetätigungseinrichtung betätigten radial äußeren Schiebers geklemmt;
- Fig. 59: eine zweidimensionale Schnittansicht der Kranzanordnungsvorrichtung, in der bereits ein erster Kranz an seiner Lagerposition geklemmt wird, und wobei ein Schenkel eines Hairpins mit unterschiedlich langen Schenkeln über den mehrteiligen Schieber mit Kraftspeicher geklemmt wird;
- Fig. 60: eine zweidimensionale Schnittansicht der Sammelaufnahme mit Schiebern und dem einzelnen geklemmten Hairpin mit unterschiedlich langen Schenkeln;
- Fig. 61: eine trimetrische, teils weggebrochene Darstellung von Bauteilen der Kranzvorrichtung mit dem einzeln geklemmten Hairpin mit unterschiedlich langen Schenkeln in Kombination mit dem bereits in Lagerposition befindlichen ersten Kranz;
- Fig. 62: die Situation von Fig. 61, wobei die Bauteile der Sammelaufnahme und der Schieber und der einzeln geklemmte Hairpin mit unterschiedlich langen Schenkeln zur besseren Übersichtlichkeit einzeln dargestellt sind;
- Fig. 63: eine perspektivische Ansicht der Kranzanordnungsvorrichtung mit den Hairpins in Lagerposition, wobei Aktoren der Schiebergruppen-Bewegungseinrichtungen dargestellt sind, aber die Individualbetätigungseinrichtungen weggelassen worden sind;
- Fig. 64: eine perspektivische Ansicht der Kranzanordnungsvorrichtung von Fig. 63, wobei auch eine Individualbetätigungsanordnung mit den Individualbetätigungseinrichtungen dargestellt sind;
- Fig. 65: eine perspektivische Ansicht der beispielhaften Anordnung von Individualbetätigungseinrichtungen;
- Fig. 66: eine Ansicht wie in Fig. 64, wobei Hairpins eines Kranzes in der Steckposition gezeigt sind;
- Fig. 67: eine Draufsicht auf die gesamte Kranzanordnungsvorrichtung mit Individualbetätigungseinrichtungen und Hairpins in der Kranzanordnungsvorrichtung;
- Fig. 68: eine Draufsicht wie in Fig. 67 ohne Hairpins;
- Fig. 69: eine vergrößerte Ansicht von Fig. 68;
- Fig. 70: eine perspektivische Ansicht der Kranzanordnungsvorrichtung von unten mit freigelegten Kurvenscheiben der Schiebergruppen-Bewegungseinrichtungen;
- Fig. 71: eine schematische axiale Draufsicht auf die gegenläufigen Schieber eines Aufnahmeraums für eine weitere Ausführungsform der Kranzanordnungsvorrichtung mit Leiterabschnitten in einer vollständig geschlossenen Stellung;
- Fig. 72: eine Ansicht der Schieber der weiteren Ausführungsform wie in Fig. 72 in einer vollständig geöffneten Stellung, wobei die Leiter zwischen Klemmflächen der Schieber eingefügt sind;
- Fig. 73: eine Ansicht der Schieber der weiteren Ausführungsform wie in Fig. 72 in einer Kelmmstellung, wobei die Leiter zwischen den Klemmflächen der Schieber eingeklemmt sind; und
- Fig. 74: eine Ansicht der Schieber der weiteren Ausführungsform wie in Fig. 72 in einer vollständig Zwischenstellung.

Die beigefügten Figuren zeigen unterschiedliche Ansichten einer Ausführungsform einer Kranzanordnungsvorrichtung 10 zum Bilden einer Kranzanordnung 12 aus einem Kranz 14 oder aus mehreren konzentrisch angeordneten Kränzen 14.1, 14.2 von elektrischen Leitern 16, um eine Spulenwicklung eines Bauteils einer elektrischen Maschine zu bilden.

Die Leiter 16 sind insbesondere U-förmige oder etwa haarnadelförmig gebogene Leiter 16 mit zwei Schenkeln 16.1, 16.2 und einen Dachbereich 16.3, die im Folgenden als Hairpins 18 bezeichnet werden, oder Sonderleiter zum Anschließen der Spulen, in Form von I-Pins 20.

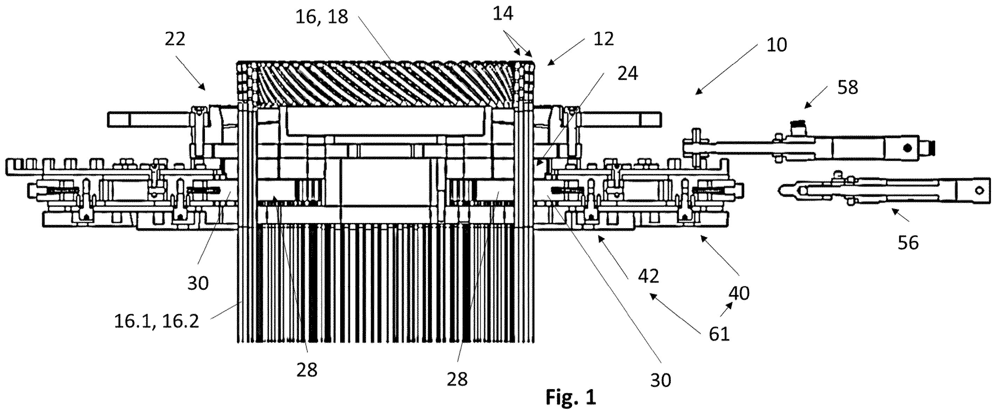

Wie man insbesondere den Fig. 1 bis 8 und 63 bis 70 entnehmen kann, ist eine Sammelaufnahme 22 mit mehreren Aufnahmeräumen 24 zur Aufnahme von Leiterabschnitten - insbesondere Schenkeln 16.1, 16.2 der Hairpins 18 oder I-Pins 20 - vorgesehen. Die Aufnahmeräume 20 sind um eine Achse ringförmig angeordnet, in axialer Richtung offen und durch sich in radialer Richtung erstreckende Begrenzungen begrenzt. Beim Bilden des Kranzes 14, 14.1, 14.2 werden die Leiterabschnitte 16.1, 16.2 axial in die Aufnahmeräume 24 eingefügt. Aufgrund ihrer Form werden die Aufnahmeräume 24 hiernach auch als Nuten bezeichnet.

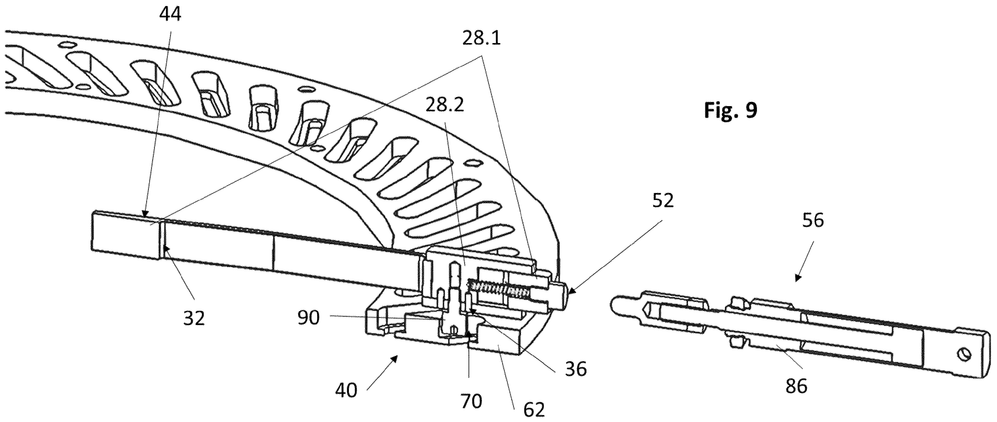

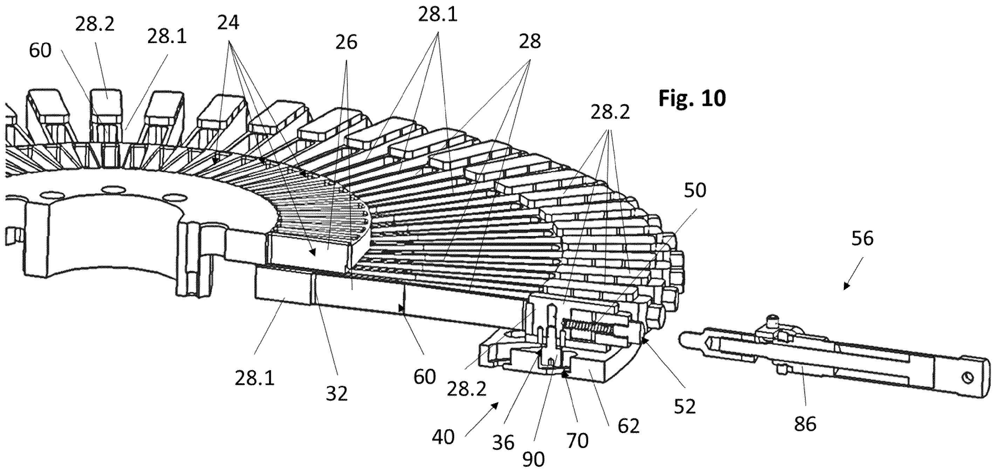

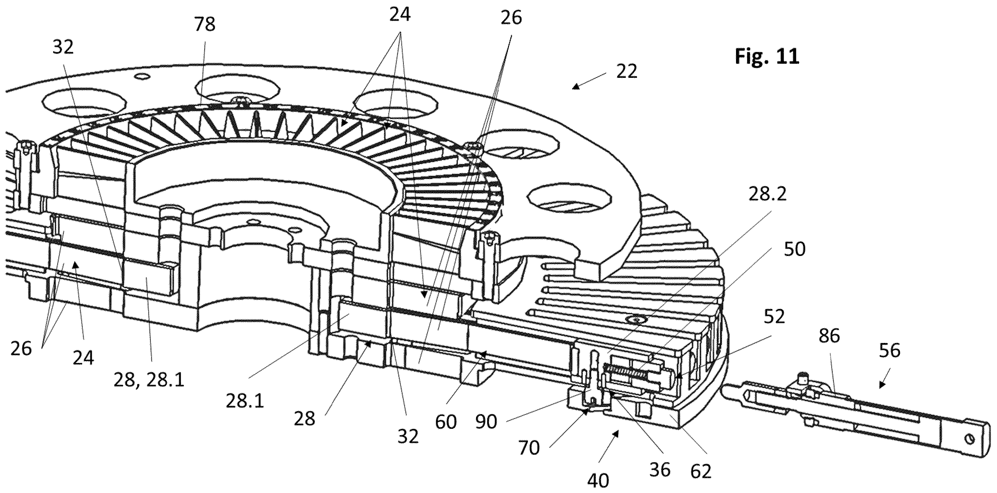

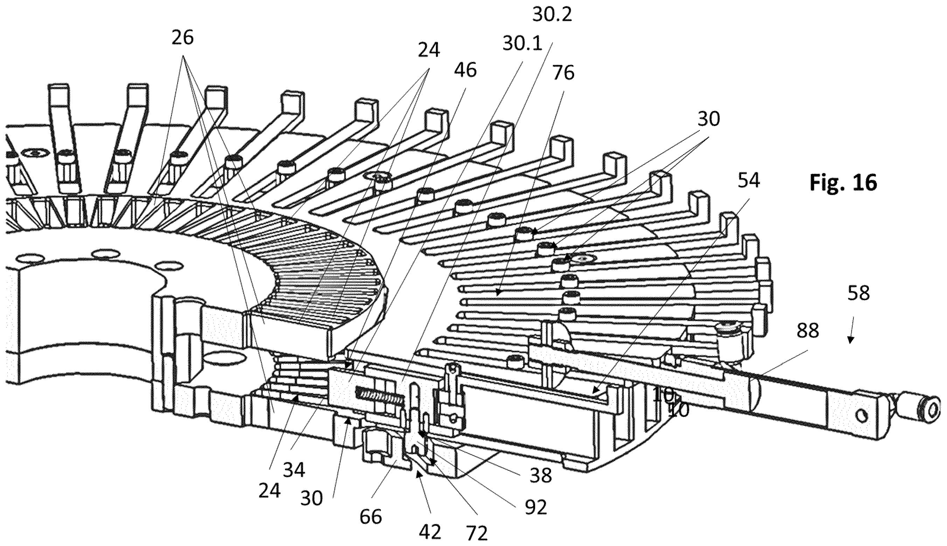

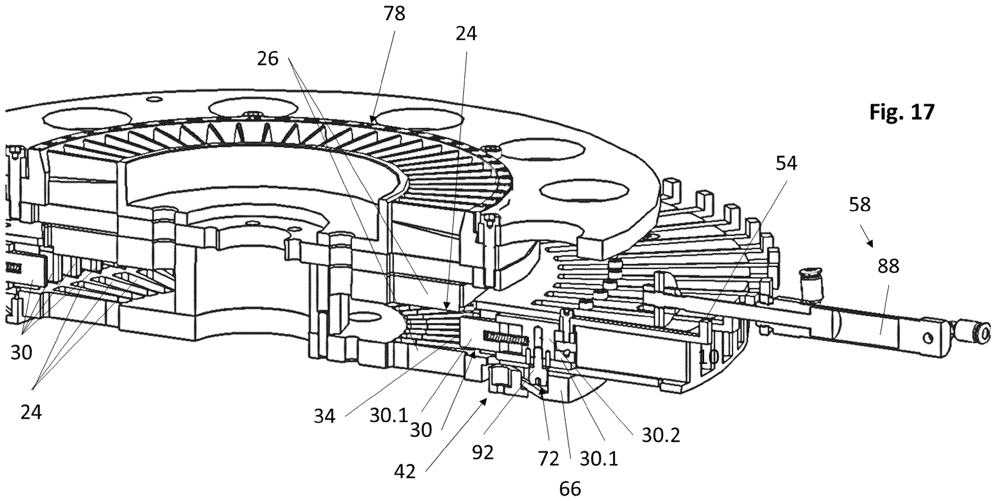

Pro Aufnahmeraum 26 ist wenigstens ein Schieber 28, 30 vorgesehen, der in einer Schieberbewegungsrichtung zwischen wenigstens zwei Stellungen bewegbar ist, um den wenigstens einen in den Aufnahmeraum 24 eingefügten Leiterabschnitt 16.1, 16.2 mit einer Klemmfläche 32, 34 festzuklemmen oder freizugeben. Details von bevorzugten Ausführungen für die Schieber 28, 30 sind in den Fig. 9 bis 32 dargestellt.

Gemäß den Fig. 1 bis 14 und 20 bis 32 ist jeweils wenigstens ein radial innerer Schieber 28 pro Aufnahmeraum 24 vorgesehen, wobei der radial innere Schieber 28 eine radial nach außen gerichtete Stirnfläche als innere Klemmfläche 32 in dem Aufnahmeraum 24 aufweist und radial bewegbar ist.

Gemäß den Fig. 1 bis 8 und 15 bis 32 ist jeweils wenigstens ein radial äußerer Schieber 30 pro Aufnahmeraum 24 vorgesehen, der jeweils eine radial nach innen gerichtete Stirnfläche als äußere Klemmfläche 34 in dem Aufnahmeraum aufweist, und radial bewegbar ist.

Gemäß den Fig. 9 bis 32 sind wenigstens einer, mehrere oder alle der Schieber 28, 30 mehrteilig ausgebildet, so dass an einem ersten Schieberteil 28.1, 30.1 die Klemmfläche 32, 34 ausgebildet ist und an einem zweiten Schieberteil 28.2, 30.2 ein Anschluss 36, 38 zum Verbinden mit einer Schiebergruppen-Bewegungseinrichtung 40, 42 zum gemeinsamen Bewegen einer Schiebergruppe ausgebildet ist. Das erste Schieberteil 28.1, 30.1 und das zweite Schieberteil 28.2, 30.2 sind in Schieberbewegungsrichtung relativ zueinander bewegbar.

Insbesondere sind wenigstens einer, mehrere oder besonders bevorzugt alle radial innere radial bewegliche Schieber 28 mehrteilige Schieber, an deren ersten Schieberteil 28.1 eine radial nach außen gerichtete Stirnfläche als innere Klemmfläche 32 ausgebildet ist, die bei einigen nicht dargestellten Ausführungsformen gegen eine radial äußere Begrenzung des Aufnahmeraums oder gemäß den dargestellten Ausführungen gegen den dem gleichen Aufnahmeraum 24 zugeordneten radial äußeren Schieber 30 wirkt.

Weiter insbesondere sind wenigstens einer, mehrere oder besonders bevorzugt alle radial äußere radial bewegliche Schieber 30 mehrteilige Schieber, an deren ersten Schieberteil 30.2 eine radial nach innen gerichtete Stirnfläche als äußere Klemmfläche 34 ausgebildet ist, die bei nicht dargestellten Ausführungen gegen eine radial innere Begrenzung des Aufnahmeraums 24 oder gemäß den dargestellten Ausführungen gegen den dem gleichen Aufnahmeraum 24 zugeordneten radial inneren Schieber 28 wirkt.

Die radial inneren Schieber 28 und/oder die radial äußeren Schieber 30 weisen jeweils an ihrer Oberseite einen ebenen Stützflächenbereich 44, 46 auf, auf dem jeweils wenigstens ein Leiter 16 zur Positionierung beim Bilden eines Kranzes 14, 14.1, 14.2 abstützbar ist. Bei den dargestellten mehrteiligen Schiebern 28, 30 ist der ebene Stützflächenbereich 44, 46 jeweils auf dem ersten Schieberteil 30.1, 30.2 vorgesehen.

Der erste Schieberteil 28.1, 30.1 und der zweite Schieberteil 28.2, 30.2 sind durch einen Kraftspeicher oder ein elastisches Element - z.B. in Form einer Feder 50, wie z.B. Schraubendruckfeder - miteinander verbunden. Der erste Schieberteil 28.1, 30.1 ist gegen den Widerstand des Kraftspeichers oder des elastischen Elements 50 relativ zu dem zweiten Schieberteil 28.2, 30.2 in Schieberbewegungsrichtung beweglich.

An dem ersten Schieberteil 28.1, 30.1 ist ein Anschluss 52, 54 zum Verbinden mit einer Individualbewegungseinrichtung 56, 58 ausgebildet ist, mittels welcher der erste Schieberteil 28.1, 30.1 relativ zu dem zweiten Schieberteil 28.2, 30.2 in Schieberbewegungsrichtung beweglich ist.

Gemäß den Fig. 9 bis 32 sind die radial inneren und äußeren Schieber 28, 30 derart ausgebildet, dass von den jeweils einem Aufnahmeraum 24 zugordneten Schiebern 28, 30 einer den anderen übergreift. Insbesondere ist vorgesehen, dass die radial inneren Schieber 28 jeweils einen radial äußeren Schieber 30 umgreifen.

Weiter sind die sich in radialer Richtung erstreckenden Begrenzungen 26 eines Aufnahmeraums 24 jeweils zumindest teilweise an einem der dem Aufnahmeraum 24 zugeordneten Schieber 28 ausgebildet.

Bei den dargestellten Ausführungen ist das erste Schieberteil 28.1 des radial inneren Schiebers 28 mit einer sich in radialer Richtung erstreckenden Längsöffnung 60 oder Nut versehen, deren Begrenzungswände die Begrenzungen 26 des Aufnahmeraums 24 bilden und in der der radial äußere Schieber 30 radial verschiebbar aufgenommen ist.

Gemäß den Fig. 1 bis 26, 29 bis 32 und 63 bis 70 sind Schiebergruppen-Bewegungseinrichtungen 40, 42 vorgesehen, die dazu eingerichtet sind, eine Schiebergruppe mit mehreren Schiebern 28, 30 gemeinsam zu bewegen. Insbesondere sind eine erste Schiebergruppen-Bewegungseinrichtung 40 zum gemeinsamen radialen Bewegen der radial inneren Schieber 28 und eine unabhängig von der ersten Schiebergruppen-Bewegungseinrichtung 40 betätigbaren zweiten Schiebergruppen-Bewegungseinrichtung 42 zum gemeinsamen radialen Bewegen der radial äußeren Schieber 30 vorgesehen.

Die Schiebergruppen-Bewegungseinrichtungen 40, 42 können ganz unterschiedlich ausgebildet sein. Insbesondere haben sie ein zentrales Getriebe 61 zur gesammelten Schieberbewegung aller Schieber 28, 30 der angeschlossenen Schiebergruppe, also beispielsweise aller radial inneren Schieber 28 oder aller radial äußeren Schieber 30.

Bei einigen nicht dargestellten Varianten sind die radialen inneren Schieber 28 und die radial äußeren Schieber 30 gemeinsam mittels eines gemeinsamen zentralen Getriebe betätigbar. Beispielsweise ist eine einzelne Kurvenscheibe vorgesehen, die mit allen Schiebern 28, 30 gekoppelt ist und die derart ausgebildet ist, dass die radial inneren Schieber 28 und die radial äußeren Schieber 30 gegenläufig zueinander bewegt werden.

Bei den dargestellten Varianten hat die erste Schiebergruppen-Bewegungseinrichtung eine erste Kurvenscheibe 62, die mittels eines ersten Aktors 64 drehbar ist. Die Drehbewegung der ersten Kurvenscheibe 62 wird mittels einer Kurven-Mitnehmer-Kopplung 70 in eine Radialbewegung der radial inneren Schieber 28 umgewandelt.

Bei der dargestellten Ausführung ist der erste Anschluss 36 an dem zweiten Schieberteil 28.2 des radial inneren Schiebers 28 an die Kurven-Mitnehmer-Kopplung 70 angeschlossen oder dient als Mitnehmer dieser Kurven-Mitnehmer-Kopplung 70.

Bei den dargestellten Varianten hat die zweite Schiebergruppen-Bewegungseinrichtung 42 eine zweite Kurvenscheibe 66, die mittels eines zweiten Aktors 68 drehbar ist. Die Drehbewegung der zweiten Kurvenscheibe 66 wird mittels einer Kurven-Mitnehmer-Kopplung 72 in eine Radialbewegung der radial äußeren Schieber umgewandelt.

Bei der dargestellten Ausführung ist der zweite Anschluss 36 an dem zweiten Schieberteil 30.2 des radial äußeren Schiebers 30 an die zweite Kurven-Mitnehmer-Kopplung 72 angeschlossen oder dient als Mitnehmer dieser Kurven-Mitnehmer-Kopplung 72.

Die Kurvenscheiben 62, 66 der Schiebergruppen-Bewegungseinrichtungen 40, 42 sind zueinander konzentrisch.

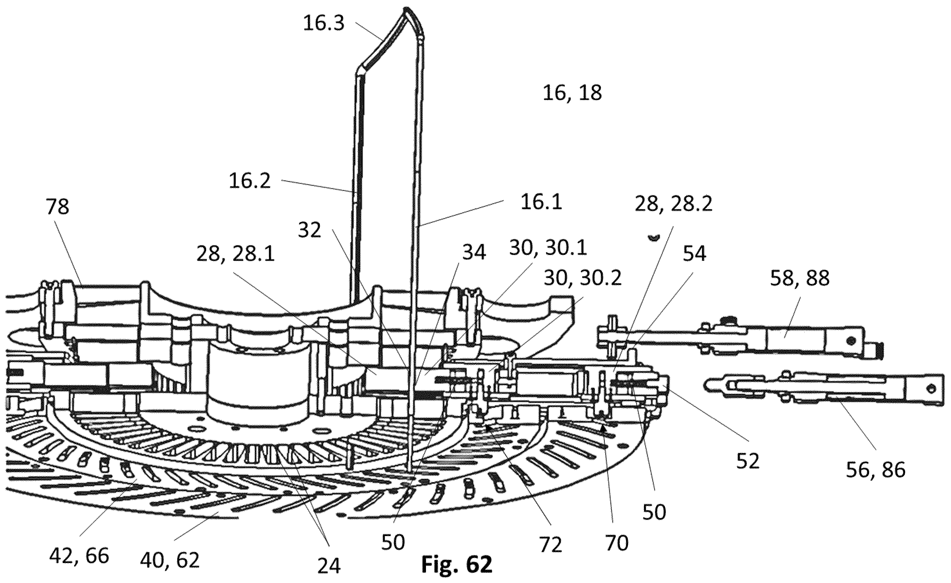

Gemäß Fig. 62 bis 66 werden die erste und die zweite Schiebergruppen-Bewegungseinrichtung 40, 42 mittels radial außen angeordneter Aktoren angetrieben.

Die hier als Sammelaufnahme 22 oder auch als Vorstecknest 74 bezeichnete Hauptbaugruppe der Kranzanordnungsvorrichtung 10, die die Schieber 28, 30, Schieberführungen 76 und einen Vorstecknestring 78 aufweist, ist mittels eines dritten Aktors 80 drehbar, um so den jeweiligen Aufnahmeraum 24 zu einem Steckplatz hin zu drehen, wo das Stecken der mittels eines Greifers oder dergleichen (nicht dargestellt) angelieferten Leiter 16 erfolgt.

Gemäß den Fig. 1 bis 12, 15 bis 18, 21 bis 24, 29 bis 32 und 64 bis 70 ist wenigstens eine Individualbewegungseinrichtung 56, 58 vorgesehen, die an den ersten Schieberteil 28.1, 30.1 eines der Schieber 28, 30 anschließbar ist. Die Individualbewegungseinrichtung 56, 58 ist dazu eingerichtet, den ersten Schieberteil 28.1, 30.1 individuell und unabhängig von der zugeordneten Schiebergruppen-Bewegungseinrichtung 40, 42 zubewegen.

Die Anzahl, Ausbildung und Anordnung der Individualbewegungseinrichtung 56, 58 kann je nach Ausführung des herzustellenden Bauteils und Anforderung sehr unterschiedlich sein.

Bei einigen nicht dargestellten Ausführungen ist jedem mehrteiligen Schieber eine eigene Individualbewegungseinrichtung 56, 58 zugeordnet.

Insbesondere ist wenigstens eine erste Individualbetätigungseinrichtung 56 an einen ersten Schieberteil 28.1 eines der radial inneren Schieber 28 anschließbar, um diesen ersten Schieberteil 28.1 unabhängig von der ersten Schiebergruppen-Bewegungseinrichtung 40, die an den zweiten Schieberteil 28.2 angekoppelt ist, zu bewegen.

Insbesondere ist wenigstens eine zweite Individualbetätigungseinrichtung 58 an einen zweiten Schieberteil 30.1 eines der radial äußeren Schieber 30 anschließbar, um diesen ersten Schieberteil 30.1 unabhängig von der zweiten Schiebergruppen-Bewegungseinrichtung 42, die an den zweiten Schieberteil 30.2 angekoppelt ist, zu bewegen.

Bei der dargestellten Ausführung sind mehrerer erste Individualbetätigungseinrichtungen 56 in Umfangsrichtung beabstandet vorgesehen, um mehrere radial innere Schieber individuell zu betätigen. Weiter ist eine zweite Individualbetätigungseinrichtung 58 vorgesehen, mit der ein radial äußerer Schieber 30 individuell betätigbar ist.

Die Individualbetätigungseinrichtungen 56, 58 sind bei der dargestellten Ausführung radial außerhalb des Vorstecknests 74 angeordnet. Beispielsweise sind sie an einer stationären Halterung 82 angeordnet, wobei der jeweils zu betätigende Schieber 28, 30 durch Drehen des Vorstecknests 74 zu der Individualbetätigungseinrichtung hin gedreht werden kann.

Die Individualbetätigungseinrichtungen 56, 58 weisen radial äußere oder außenstehende Betätigungselemente 86, 88, wie z.B. magnetisch, elektrisch, hydraulisch oder pneumatisch betätigbare Zylinder auf.

Gemäß den Fig. 1 bis 4, 21 bis 24 und 29 bis 37 hat die Sammelaufnahme 22 einen axial versetzt zu den Schiebern 28, 30 angeordneten Vorstecknestring 78, in dem zumindest ein Teilbereich der Aufnahmeräume 24 durch feststehende radiale Begrenzungswandbereiche 84 begrenzt sind. Optional kann der Vorstecknestring 78 auch radial und in Umfangsrichtung begrenzte Begrenzungswandbereiche 84 aufweisen. Der Vorstecknestring 78 ist axial relativ zu den Schiebern 28, 30 bewegbar. Weiter weist die Sammelaufnahme 22 die beispielsweise mit geschlitzten Scheiben Schieberführung 76 zum Führen der Schieberbewegung auf.

Bei der in den Figuren dargestellten Ausführungsform der Kranzanordnungsvorrichtung 10 werden die einzelnen Schieber 28, 30 mithilfe eines federgelagerten Schiebersystems von der Bewegung des Getriebes 61 entkoppelt.

So wird die Haltekraft der an den Hairpins anliegenden Schiebern 28, 30 über das Stauchen der Feder 50 mithilfe des Getriebes 61 aufgebracht. Durch den Federweg kann eine ungleiche Befüllung der Nuten oder Aufnahmeräume 24 der Sammelaufnahme 22 ausgeglichen werden.

Ebenfalls kann, je nach Stellung des Getriebes 61 und der daraus resultierenden Veränderung der Stauchung der Feder 50 die entsprechende Haltekraft an den Leitern 16 (im Folgenden auch Pins genannt) variiert werden.

Eine gesammelte, radiale Bewegung aller Schieber 28, 30 ist über das zentrale Getriebe 61 möglich. Im Rahmen des Federweges kann jeder einzelne mehrteilige Schieber 28, 30 zudem über ein und/oder mehrere weitere außenstehende Betätigungselemente 86, beispielsweise Pneumatikzylinder - Beispiel für Individualbetätigungseinrichtung 56, 58 - geöffnet und geschlossen werden.

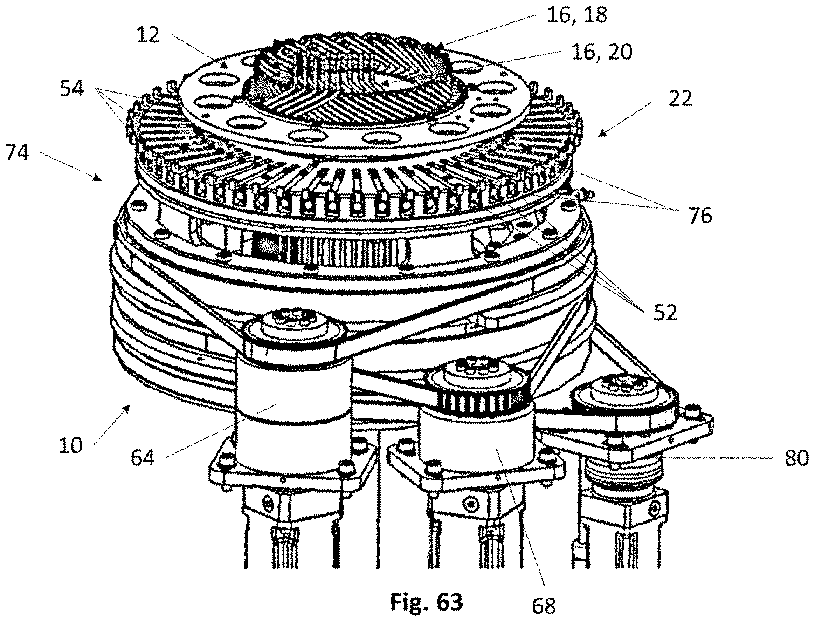

Diese weiteren Betätigungselemente 86, 88 können entweder starr mit der Sammelaufnahme 22 verbunden sein oder (wie in Fig. 63 bis 66 dargestellt) sich relativ zu dieser bewegen.

Die Schieber 28, 30 können bei einigen Ausführungen eine Klemmung an den Pins im Vorstecknest 74 von radial innen nach radial außen vornehmen (nachfolgend radial innerer Schieber 28 genannt) und bei einigen Ausführungen eine Klemmung von außen nach innen vornehmen (nachfolgend radial äußerer Schieber 30 genannt). Ebenfalls ist eine Kombination (Klemmung von innen und von außen) möglich, dieser Fall ist in den beigefügten Figuren dargestellt.

In Fig. 1 bis Fig. 3 ist der Gesamtaufbau des Schiebersystems inklusive der außenstehenden Betätigungselemente 86, 88 dargestellt. Dabei sind die dargestellten Hairpinkränze über die Schieber 28, 30 von innen und von außen geklemmt.

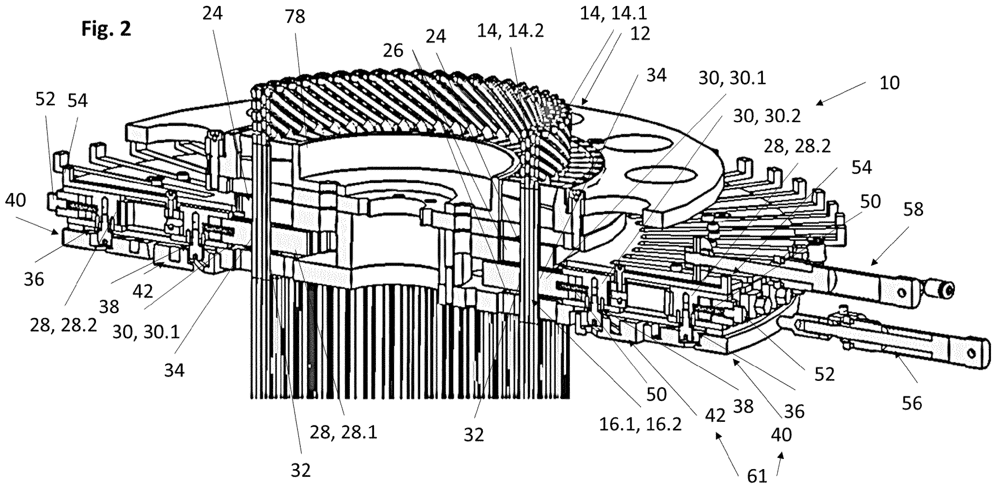

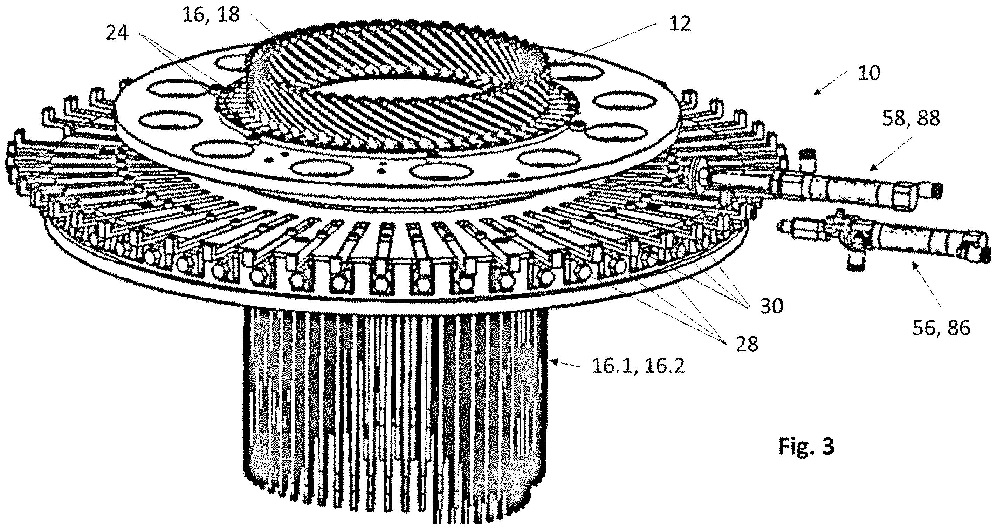

Zu sehen sind außerdem die außenstehenden Betätigungselemente 86, 88, die die Schieber 28, 30 im Rahmen des Federweges individuell öffnen und wieder schließen können. Der in den Figuren jeweils oben dargestellte Pneumatikzylinder - Beispiel für Betätigungselement 86 der zweiten Individualbetätigungseinrichtung 58 - kann den (radial äußeren) Schieber 30 durch Ziehen betätigen, der untere Zylinder - Beispiel für Betätigungselement 88 der ersten Individualbetätigungseinrichtung 56 - kann den (radial inneren) Schieber 28 durch Drücken betätigen. Im Einzelnen zeigt Fig. 1 eine Gesamtansicht des Vorstecknests 74, als Schnittansicht in 2D-Darstellung; Fig. 2 zeigt eine Gesamtansicht des Vorstecknests 74, als Schnittansicht in trimetrischer Darstellung; und Fig. 3 zeigt eine Gesamtansicht des Vorstecknests 74, in trimetrischer Darstellung.

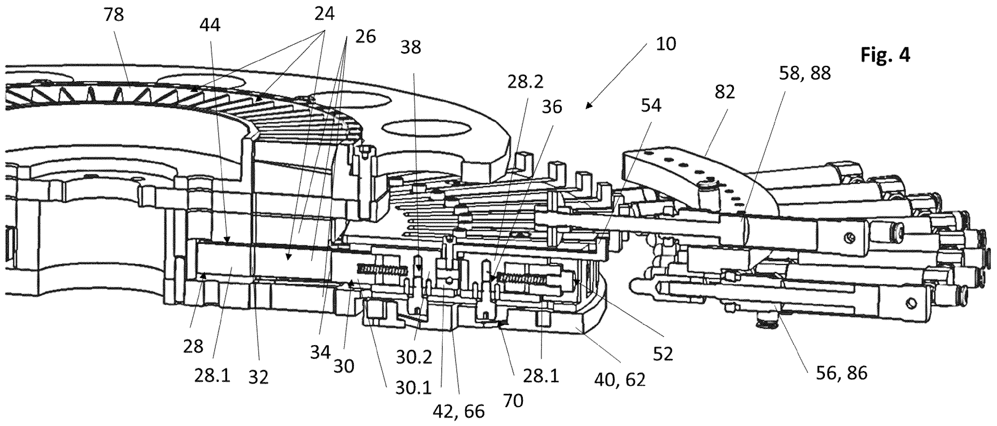

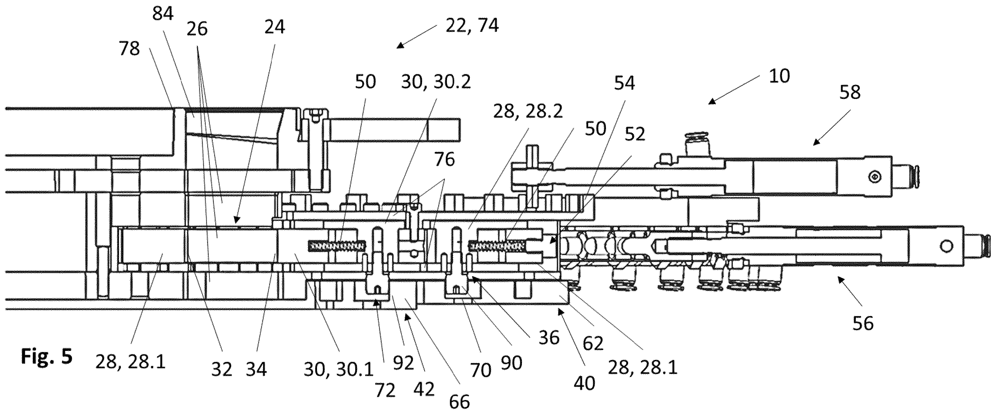

In Fig. 4 sind die Mechanik des Vorstecknests 74 sowie die außenstehenden Betätigungselemente 86, 88 genauer zu sehen. Fig. 4 zeigt in trimetrischer Darstellung die Schieber 24 mit geöffnetem Aufnahmeraum - der radial innere Schieber 28 und der radial äußere Schieber 30 sind über die Kurvenscheiben 62, 66 geöffnet. In Fig. 5 ist diese Situation als Schnitt in 2D-Darstellung zu sehen.

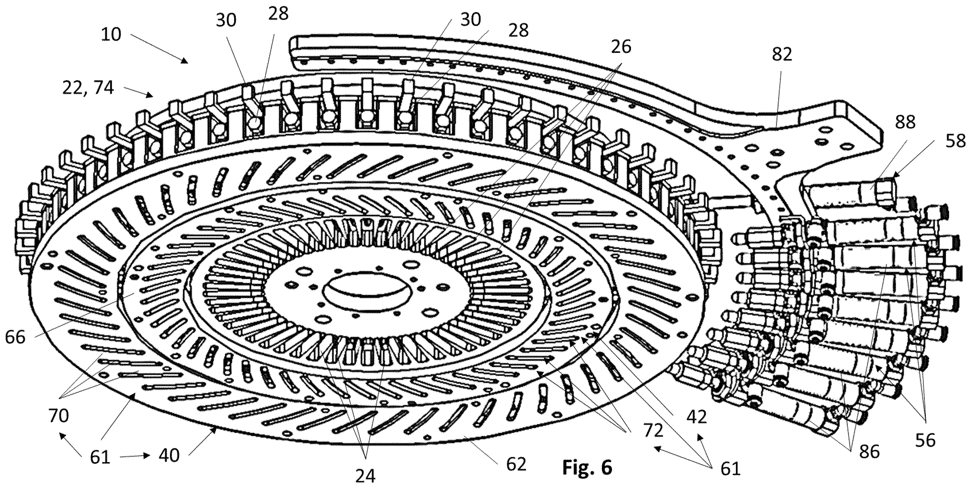

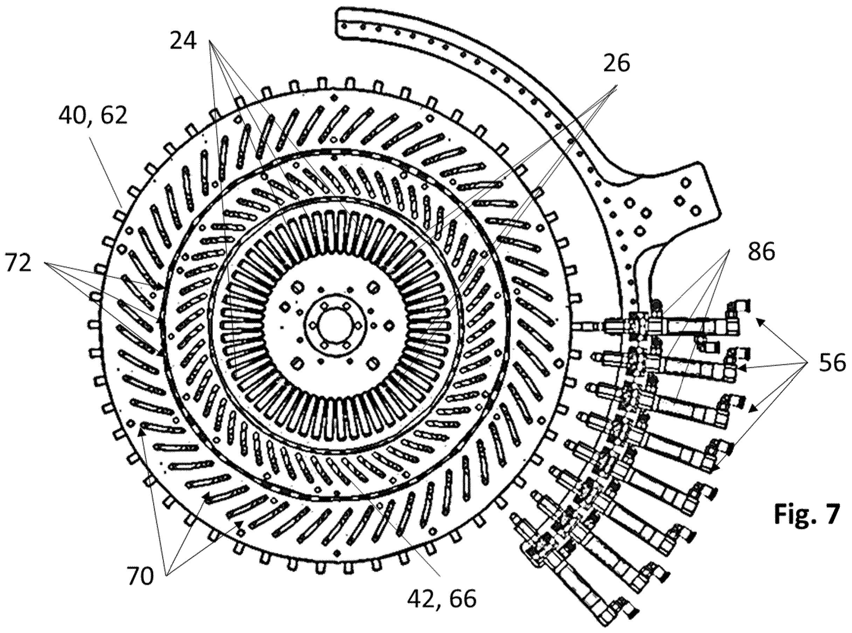

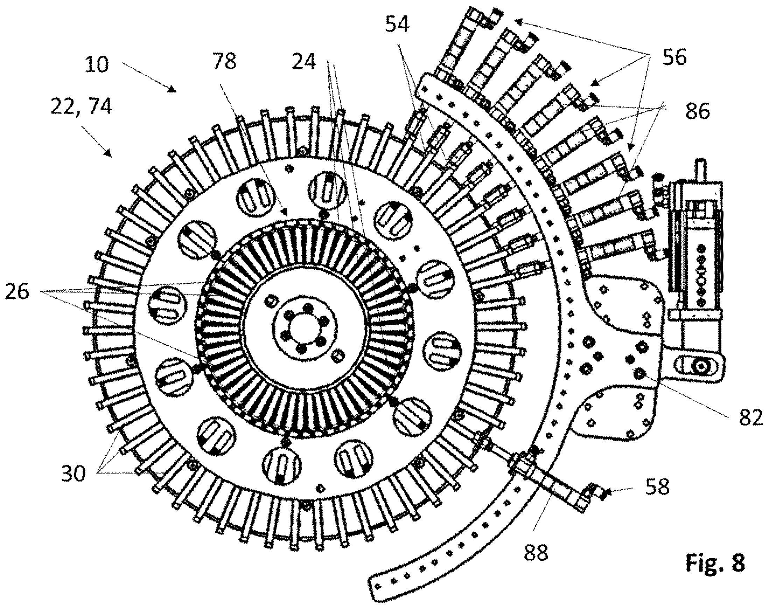

Fig. 6 zeigt die Kurvenscheiben 62, 66 der Schiebergruppen-Bewegungseinrichtungen 40, 42. Insbesondere ist Fig. 6 eine Ansicht der Kranzanordnungsvorrichtung 10 von unten mit freigelegten Kurvenscheiben 62, 66 in trimetrischer Darstellung. Durch die innere Kurvenscheibe 66 können alle radial äußereren Schieber 30 gesammelt betätigt werden. Die radial inneren Schieber 28 werden mit der äußeren Kurvenscheibe 62 gesteuert. Fig. 7 zeigt die Kranzanordnungsvorrichtung 10 mit den freigelegten Kurvenscheiben 62, 66 von unten. Fig. 8 zeigt die Kranzanordnungsvorrichtung 10 von oben in 2D-Darstellung, wobei die Zuordnung der Betätigungselemente 86, 88 genauer zu sehen ist.

Bei der dargestellten Ausführungsform sind die einzelnen Schieber 28, 30 über die Federn 50 mechanisch von ihrem zentralen Steuergetriebe 61 entkoppelt. Dies ermöglicht neben dem gleichzeitigen Öffnen und Schließen aller Schieber 28, 30 das gezielte Öffnen und Schließen einzelner Schieber 28, 30 durch außen befindliche Betätigungselemente 86, 88. Somit können Hairpins in einzelne Nuten/Aufnahmeräume 24 eingebracht werden, während die übrigen Nuten/Aufnahmeräume 24 geschlossen bleiben und die darin befindlichen Hairpins in einer gespannten Position verbleiben. Außerdem können die Hairpins aller Nuten/Aufnahmeräume 24 gleichzeitig über die Kurvenscheibe 62, 66 in Kombination mit dem Federweg der Schieber 28, 30 geklemmt werden, auch wenn die einzelnen Nuten/Aufnahmeräume 24 der Sammelaufnahme 22 mit unterschiedlichen Anzahlen an Hairpins bestückt sind.

Ebenso ist es möglich, U-förmige Hairpins mit unterschiedlich langen Schenkeln 16.1, 16.2 mithilfe der Mechanik des Vorstecknests 74 sicher im Vorstecknest 74 zu halten, indem der längere Schenkel 16.1 in der Steckposition durch die Schieber 28, 30 bereits geklemmt ist, während der kürzere Schenkel 16.2 auf einem geschlossenen Schieber 28, 30 in einer anderen Nut/in einem anderen Aufnahmeraum 24 aufsteht. Alternativ können bei einem solchen Hairpin auch beide Schenkel 16.1, 16.2 geklemmt werden.

Außerdem ist es möglich, die Hairpins in einer Position zwischen Steckposition und Lagerposition zu klemmen. Dies bietet den Vorteil, dass während des Steckprozesses eine Übergabe dieses Pins an eine zweite Einheit möglich ist, die den Hairpin in seine schlussendliche Lagerposition überführt, um eine schwerkraftgesteuerte Bewegung auszuschließen. Dies verhindert ungewollte Bewegungen dieses Hairpins.

Zudem kann es sinnvoll sein, komplette Pinkränze in dieser Zwischenposition in das Sammelnest einzubringen, um jenen Hairpinkranz dauerhaft in einer geklemmten Position zu halten. Dies bildet eine Erweiterung zu der bisherigen Steckposition gemäß [6], in der die Pins lediglich auf die Schieber aufgestellt werden. Diese geklemmte Position des kompletten Kranzes verhindert ein Verkippen der Hairpins in eine undefinierte Richtung.

Einige Ausführungsformen ermöglichen demnach eine kinematische Entkopplung aller Einzelschieber von der Bewegungsmechanik, die dazu ausgelegt ist, alle Schieber 28, 30 gleichermaßen zu bewegen. Das bedeutet, dass die Primärbewegung alle Schieber 28, 30 gleichermaßen bewegt, man aber jeden Einzelschieber auch noch durch eine Sekundärbewegung steuern kann, so können einzelne Valenzen geöffnet/geschlossen werden, während alle anderen Valenzen geschlossen/geöffnet sind.

Einige Ausführungsformen bringen Federn mit, die vorteilhaft dafür sind, unterschiedliche Anzahlen an Pins in jeder Höhe zwischen Lagerposition und Steckposition zu halten/klemmen.

Einige Ausführungsformen ermöglich ein gerades Positionieren auch von U-Pins, deren Schenkellängen sich unterscheiden, indem ein Schenkel geklemmt wird, während der andere Schenkel oberhalb/auf der Stirnseite der Schieber positioniert ist.

Einige Ausführungsformen ermöglichen ein Positionieren/Klemmen von I-Pins auf jeder Höhe zwischen Lager- und Steckposition.

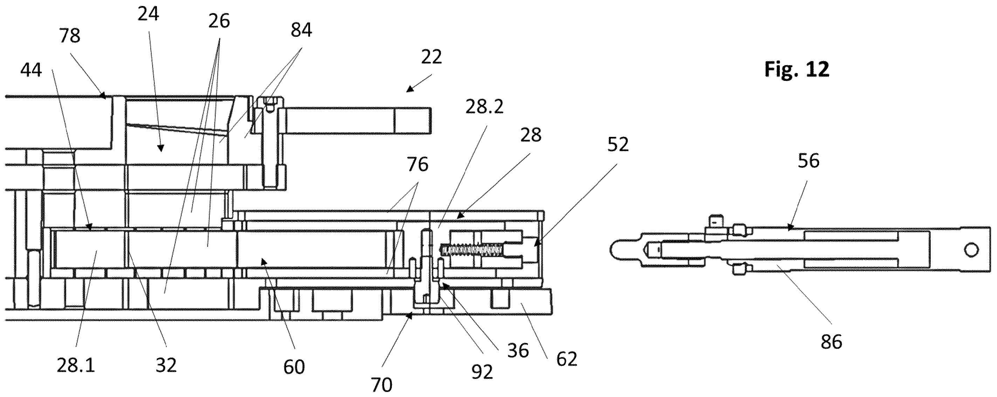

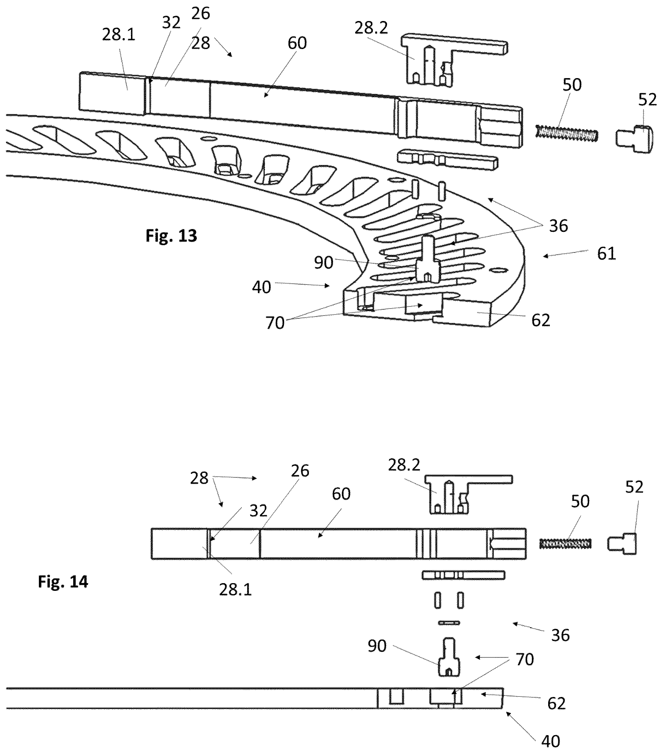

Im Folgenden werden anhand der Figuren 9 bis 14 ein möglicher Aufbau und eine mögliche Funktion der radial inneren Schieber 28 näher erläutert. Fig. 9 bis 11 zeigen trimetrische Ansichten der Bauteile des radial inneren Schiebers 28, der ersten Schiebergruppen-Bewegungseinrichtung 40 und der ersten Individualbetätigungseinrichtung 56. Fig 12 zeigt diese Bauteile in 2D-Schnittansicht. Fig. 13 und 14 sind Explosionsansichten, in denen der Aufbau des radial inneren Schiebers mit Umgriff zu erkennen ist.

Der radial innere Schieber 28 besitzt die Klemmrechnung von innen nach außen - innere Klemmfläche 32 - und wird über das drückende, außenstehende Betätigungselement 86 einzeln betätigt. Alle radial inneren Schieber 28 gesammelt werden über die äußere erste Kurvenscheibe 62 verschoben.

Hierbei ist der radial innere Schieber 28 zweiteilig aufgebaut. Der innere Schieberteil - zweiter Schieberteil 28.2 - ist über eine Kurvenrolle 90 - Beispiel für ersten Anschluss 36 und für Mitnehmer der Kurven-Mitnehmer-Kopplung 70 - mit der ersten Kurvenscheibe 62 verbunden und kann von dieser direkt bewegt werden.

Dieser innere zweite Schieberteil 28.2 ist wiederum mit einer leicht vorgespannten Feder 50 mit dem äußeren, umgreifenden Schieberteil - erster Schieberteil 28.1 - verbunden. Wird die erste Kurvenscheibe 62 nun verstellt, wird der innere zweite Schieberteil 28.2 direkt mitbewegt, der äußere erste Schieberteil 28.1 folgt der Bewegung des inneren zweiten Schieberteils 28.2 über die bereits leicht vorgespannte Feder 50 nach.

Drückt die klemmende Stirnfläche - innere Klemmfläche 32 - des umgreifenden ersten Schieberteils 28.1 von innen gegen einen bereits in die Sammelaufnahme 22 eingebrachten Hairpinkranz 14.1, wird die Feder 50 weiter gestaucht. Auf diese Weise wird eine Haltekraft auf den Hairpinkranz 14.1 aufgebracht.

Um nun eine einzelne Nut/den einzelnen Aufnahmeraum 24 zu öffnen, d.h. einen Abstand zwischen der stirnseitigen inneren Klemmfläche 32 des umgreifenden ersten Schieberteils 28.1 und dem bereits vorhandenen Hairpinkranz 14.1 herzustellen, wird wie folgt vorgegangen: das außenstehende erste Betätigungselement 86 (Pneumatikzylinder o.ä.) drückt nun von radial außen auf den umgreifenden ersten Schieberteil 28.1 des radial inneren Schiebers 28, welcher erste Schieberteil 28.1 die innere Klemmfläche 32 beinhaltet. Dieses Betätigungselement 86 (Aktor) besitzt eine höhere Kraft als die Feder 50 zwischen beiden Schieberteilen 28.1, 28.2 aufbringen kann. Dadurch wird die Feder 50 komplett gestaucht, wodurch sich der umgreifende erste Schieberteil 28.1 des radial inneren Schiebers 28 nach radial innen bewegt. Der direkt mit der ersten Kurvenscheibe verbundene zweite Schieberteil 28.2 des radial inneren Schiebers 28 verändert seine radiale Position hingegen nicht.

Nach dem Einbringen eines entsprechenden Pins/Leiters 16 in den einzeln geöffneten Aufnahmeraum wird nun das drückende erste Betätigungselement 86 wieder eingefahren. Dadurch wird der umgreifende erste Schieberteil 28.1 des radial äußeren Schiebers 28 über die Federkraft mit seiner stirnseitigen Klemmfläche 32 gegen den neu eingebrachten Leiter 16 gedrückt und klemmt diesen. Die Feder 50 ist nun im Vergleich zu vorher um eine Drahtbreite weiter gestaucht.

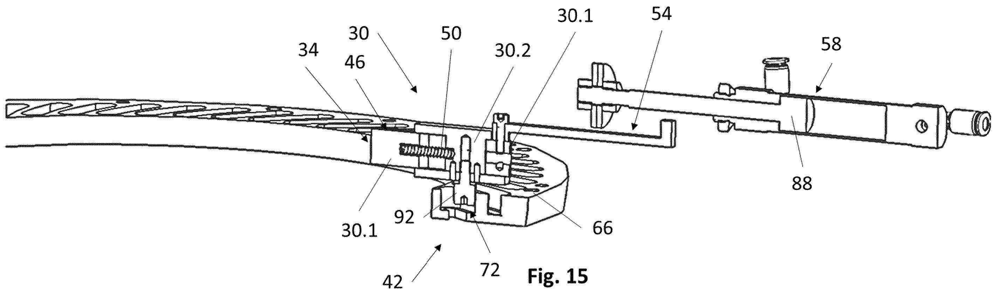

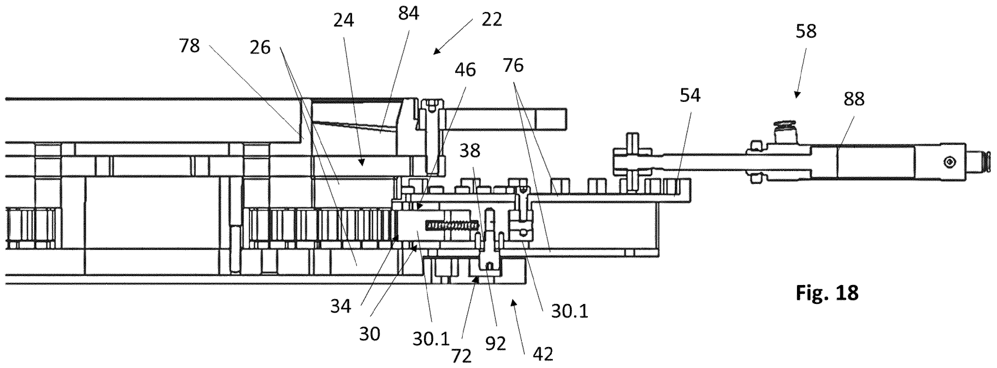

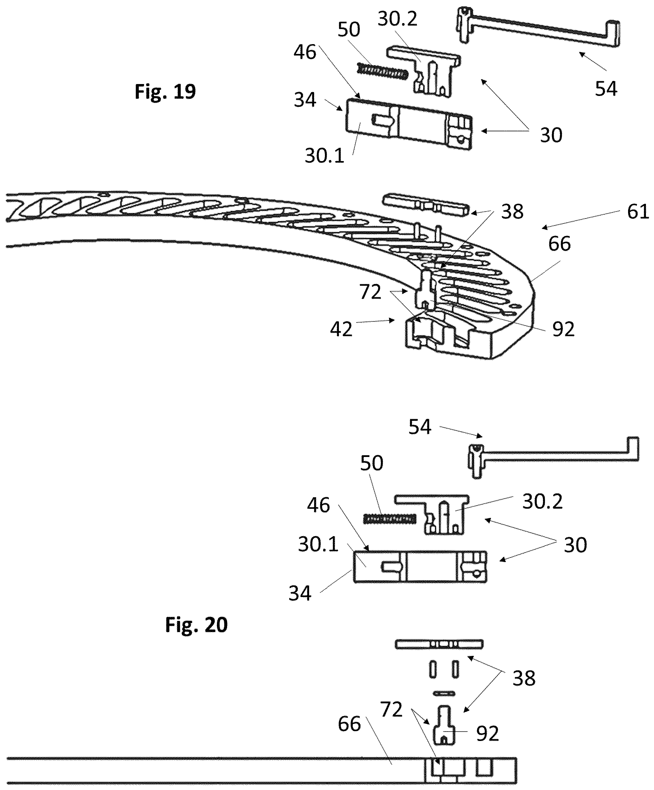

Im Folgenden werden anhand der Darstellung der Fig. 15 bis 20 ein möglicher Aufbau und eine mögliche Funktion der radial äußeren Schieber 30 näher erläutert. Fig. 15 bis 17 zeigen trimetrische Darstellungen von Bauteilen des radial äußeren Schiebers 30, der zweiten Schiebergruppen-Bewegungseinrichtung 42 und der zweiten Individualbetätigungseinrichtung 58. Fig. 18 zeigt die Bauteile in einer geschnittenen 2D-Ansicht, und Fig. 19 und 20 zeigen Explosionsdarstellungen mit den Bauteilen des radial äußeren Schiebers 30.

Der radial äußere Schieber 30 besitzt die Klemmrechnung von außen nach innen - äußere Klemmfläche 34 - und wird über das ziehende, außenstehende zweite Betätigungselement 88 einzeln betätigt. Alle radial äußeren Schieber 30 gesammelt werden über die innere zweite Kurvenscheibe 66 verschoben.

Bei der dargestellten Ausführung ist auch der radial äußere Schieber 30 zweiteilig aufgebaut. Der innere zweite Schieberteil 30.2 des radial äußeren Schiebers 30 ist ebenfalls über eine Kurvenrolle 92 - Beispiel für zweiten Anschluss 38 und für den Mitnehmer der Kurven-Mitnehmer-Kopplung 72 - mit der zweiten Kurvenscheibe 66 verbunden und kann von dieser direkt bewegt werden. Dieser innere zweite Schieberteil 30.2 ist wiederum mit einer leicht vorgespannten Feder 50 mit dem äußeren, umgreifenden ersten Schieberteil 30.1 verbunden. Wird die zweite Kurvenscheibe 66 nun verstellt, wird der innere zweite Schieberteil 30.2 direkt mitbewegt, der äußere erste Schieberteil 30.1 folgt der Bewegung des inneren zweiten Schieberteils 30.2 über die bereits leicht vorgespannte Feder 50 nach.

Drückt die klemmende Stirnfläche - äußere Klemmfläche 34 - des umgreifenden ersten Schieberteils 30.1 von außen gegen einen bereits in die Sammelaufnahme 22 eingebrachten Hairpinkranz 14.1, wird die Feder 50 weiter gestaucht. Auf diese Weise wird eine Haltekraft auf den Hairpinkranz 14.1 aufgebracht.

Um nun eine einzelne Nut/einen einzelnen Aufnahmeraum 24 zu öffnen, d.h. einen Abstand zwischen der stirnseitigen Klemmfläche 34 des umgreifenden ersten Schieberteils 30.1 und dem bereits vorhandenen Hairpinkranz 14.1 herzustellen, wird wie folgt vorgegangen: Der außenstehende zweite Aktor - zweites Betätigungselement 88 - (Pneumatikzylinder o.ä.) zieht nun den umgreifenden ersten Schieberteil 30.1 des radial inneren Schiebers 30, der die Klemmfläche 34 beinhaltet, nach außen auf. Dieser Aktor besitzt eine höhere Kraft als die Feder 50 zwischen beiden Schieberteilen 30.1, 30.2 aufbringen kann. Dadurch wird die Feder 50 komplett gestaucht, wodurch sich der umgreifende erste Schieberteil 30.2 des radial äußeren Schiebers 30 nach radial außen bewegt. Der direkt mit der zweiten Kurvenscheibe 66 verbundene zweite Schieberteil 30.2 des radial äußeren Schiebers 30 verändert seine radiale Position hingegen nicht.

Nach dem Einbringen eines entsprechenden Pins/Leiters 16 in die einzeln geöffnete Nut wird nun der drückende Aktor - zweites Betätigungselement 88 - wieder ausgefahren. Dadurch wird der umgreifende erste Schieberteil 30.1 des radial äußeren Schiebers 30 über die Federkraft mit seiner stirnseitigen Klemmfläche 34 gegen den neu eingebrachten Pin gedrückt und klemmt diesen. Die Feder 50 ist nun im Vergleich zu vorher um eine Drahtbreite weiter gestaucht.

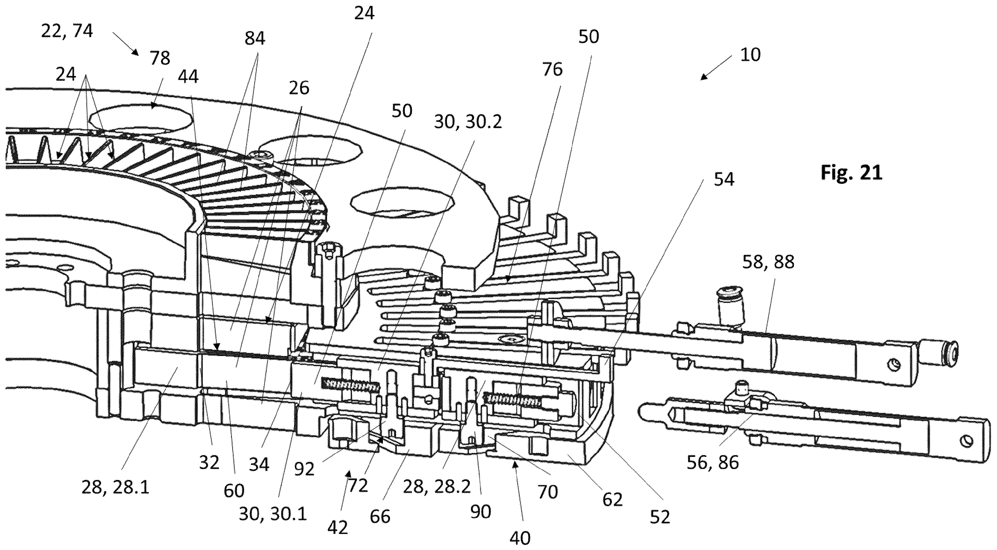

Im Folgenden wird anhand der Fig. 21 bis 28 das Zusammenwirken der radial inneren Schieber 28 und der radial äußeren Schieber erläutert. Bei der dargestellten Ausführung ist pro Aufnahmeraum ein radial innerer Schieber 28 und ein radial äußerer Schieber 30 vorgesehen.

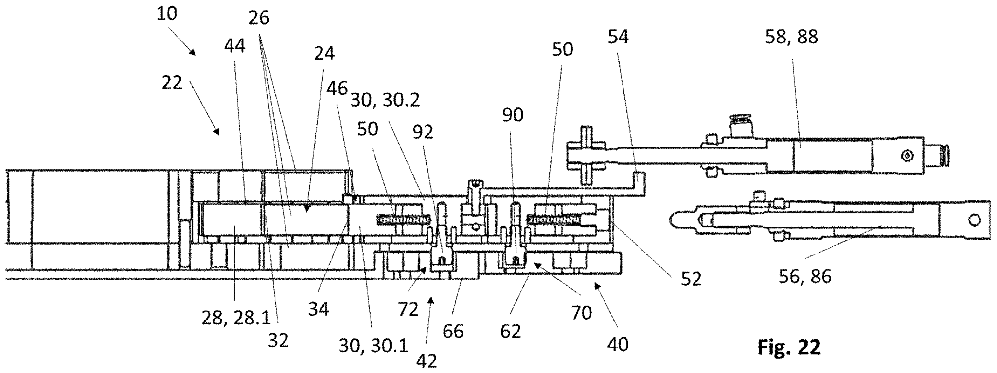

Fig. 21 zeigt eine trimetrische Gesamtansicht beider Schieber 28, 30, wobei die Nut/der Aufnahmeraum 24 zentral über die Kurvenscheiben 62, 66 geöffnet ist. Fig. 22 zeigt die gleiche Situation in geschnittener 2D-Darstellung. Dabei ist sowohl der radial innere Schieber 28 geöffnet, indem er radial nach innen gefahren ist, als auch ist der radial äußere Schieber 30 geöffnet, indem er radial nach außen gefahren ist. So ist zwischen der inneren Klemmfläche 32 und der äußeren Klemmfläche 34 sowie zwischen den durch den Umgriff des radial inneren Schiebers gebildeten radialen Begrenzungen 26 ein Freiraum, der mit Nuten in dem Vorstecknestring und mit Nuten in den Platten der Schieberführung 76 fluchtet.

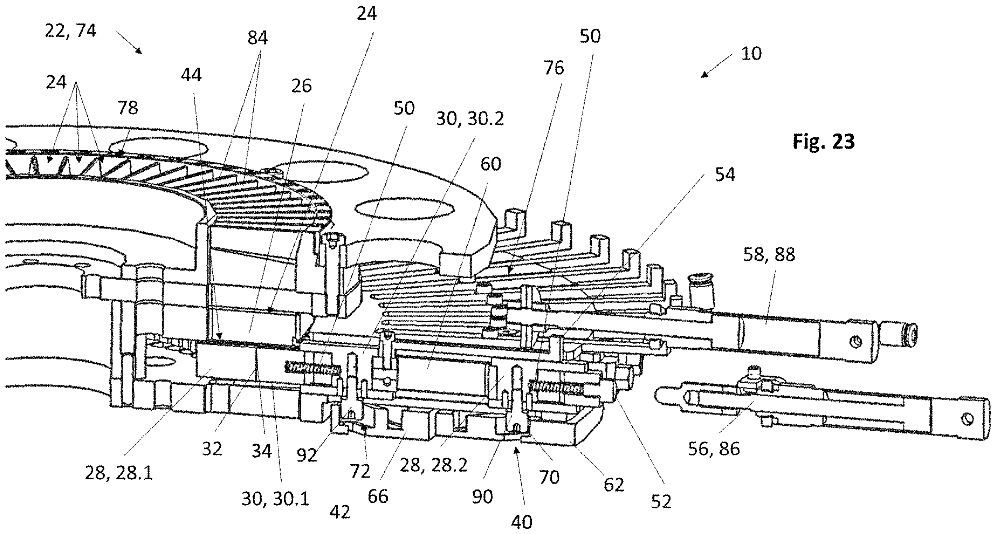

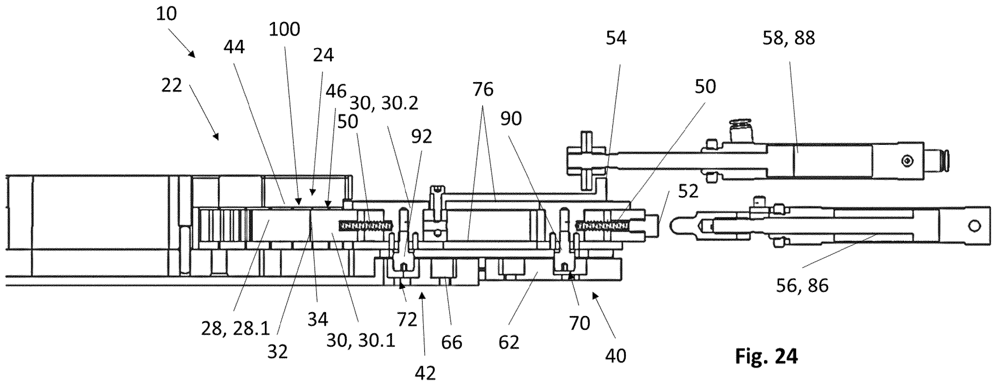

Fig. 23 zeigt eine trimetrische Gesamtansicht beider Schieber 28, 30, wobei die Nut/der Aufnahmeraum 24 über die Kurvenscheiben 62, 66 geschlossen sind. Fig. 24 zeigt die gleiche Situation in geschnittener 2D-Ansicht. Dabei ist sowohl der radial innere Schieber 28 geschlossen, indem er radial weiter nach außen gefahren ist, als auch ist der radial äußere Schieber 30 geschlossen, indem er weiter radial nach innen gefahren ist, so dass die Klemmflächen 32, 34 gegeneinander gefahren sind. Die jeweilige radiale Position, wo sich die innere Klemmfläche 32 und die äußere Klemmfläche 34 befinden oder auch im Schließzustand berühren, kann durch das Vorsehen zweier gegenläufiger Schieber 28, 30 eingestellt werden. So kann auch eine radiale Position zum Klemmen eines Leiterabschnittes in dem Aufnahmeraum eingestellt werden.

Auf der Oberseite der Schieber 28, 30 befinden sich die Stützflächenbereiche 44, 46. Wenn Leiterabschnitte 16.1, 16.2 der Leiter 16 beim Stecken eines Kranzes 14.1 in die Nuten des Vorstecknestrings 78 und der Schieberführung eingesteckt werden, können diese auf den Stützflächenbereichen 44, 46 aufstützen, so dass die Leiter 16 beim Stecken in einer Steckposition verbleiben.

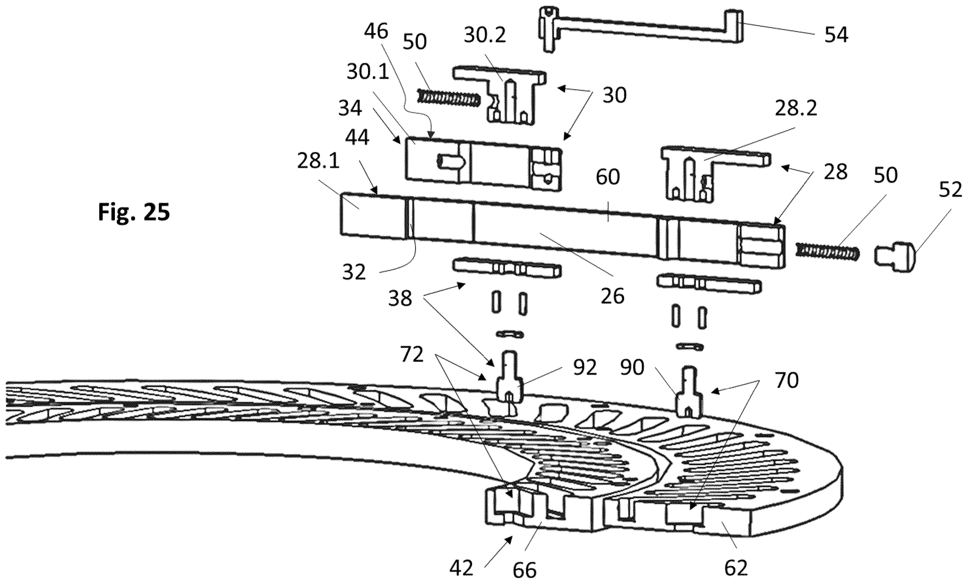

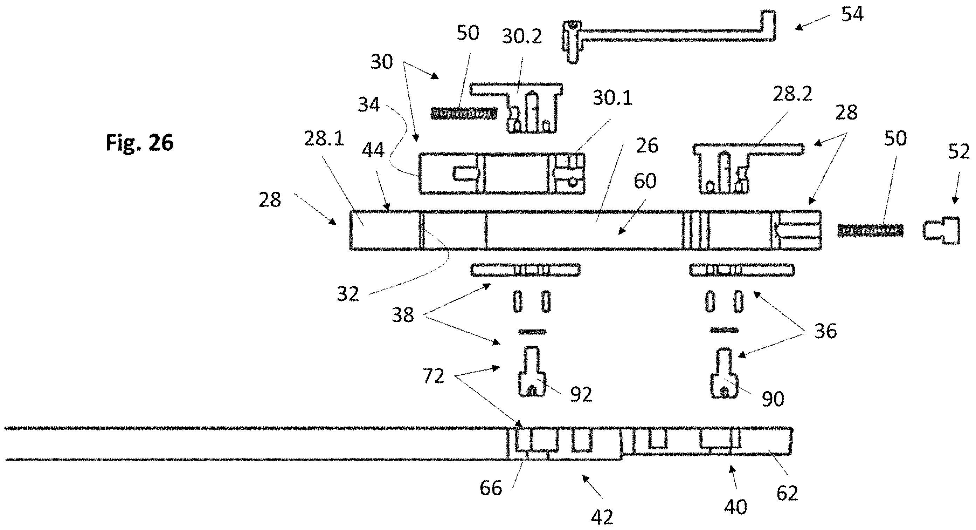

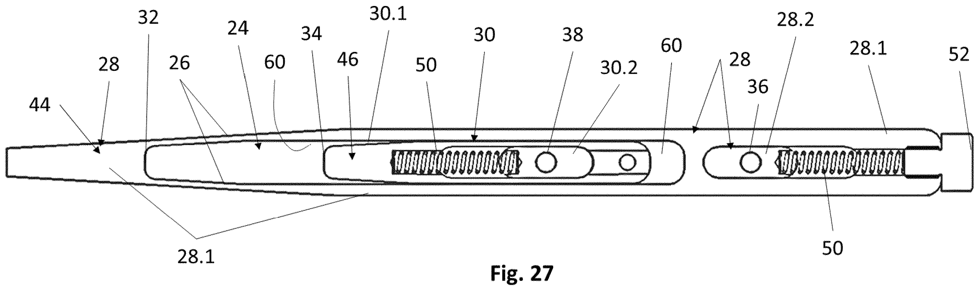

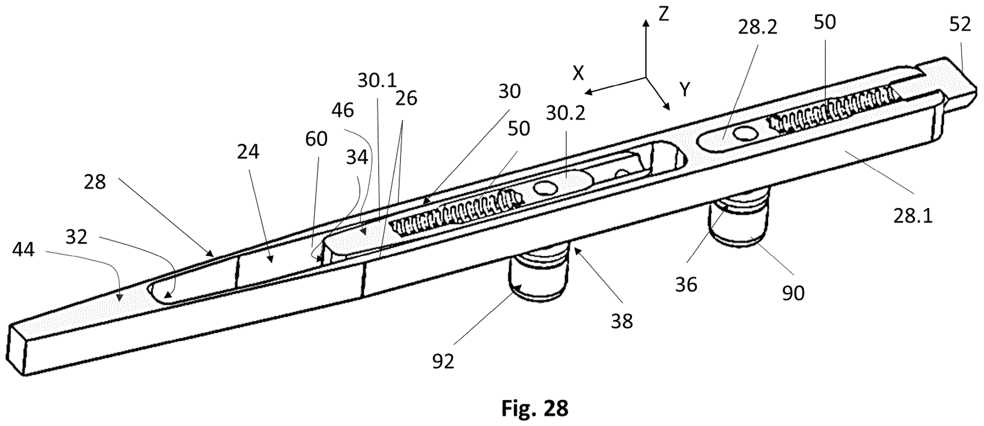

In Fig. 25 und 26 sind Explosionsdarstellungen der Baugruppe aus radial innerem und radial äußeren Schieber 28, 30 trimetrisch und in 2D dargestellt. Fig. 27 und 28 zeigen Schnittansichten dieser Baugruppe zur Darstellung des Umgriffs des radial inneren Schiebers 28 um den radial äußeren Schieber 30.

Aus Fig. 25 bis 28, und insbesondere Fig. 27 und 28 wird deutlich, dass der radial äußere Schieber 30 sich im radial inneren Schieber 28 bewegen kann und durch diesen geführt wird.

Außer der Führung des radial äußeren Schiebers 30 im radial inneren Schieber 28 in Y-Richtung (siehe Koordinatensystem - Umfangsrichtung) sowie nach oben und unten (Z-Richtung - axiale Richtung) gibt es keine mechanische Kopplung zwischen radial innerem Schieber 28 und radial äußerem Schieber 30. Beide Schieber 28, 30 sind über die zugeordnete Kurvenscheibe 62, 66 bzw. das zugeordnete außenstehende Betätigungselement 86, 88 voneinander unabhängig in radiale Richtung (hier: X-Richtung) bewegbar.

Der radial innere Schieber 28 stellt in dieser Anordnung diejenige klemmende Stirnfläche zur Verfügung, die Hairpins von radial innen nach außen klemmen kann - innere Klemmfläche 32. Der radial äußere Schieber 30 stellt die klemmende Stirnfläche zur Verfügung, die Hairpins von radial außen nach radial innen klemmen kann - äußere Klemmfläche 34.

Durch den Umgriff ist es möglich, einen radial innen klemmenden Schieber 28 über eine Kurvenscheibe 62 bzw. ein Betätigungselement 86 steuern zu können, das radial weiter außen angebracht werden kann. So kann die Kurvenscheibe 62 der radial inneren Schieber 28 weiter radial außen angebracht werden als diejenige Kurvenscheibe 66, die für die Bewegung der radial äußeren Schieber 30 zuständig ist. Somit wird die Ansteuerung der Kurvenscheibe 62 wesentlich vereinfacht, da diese von außen angetrieben werden kann und keine aufwendigen Durchführungen von unten notwendig werden.

Außerdem können Betätigungselemente 86, 88, die eine Fluidversorgung benötigen, außerhalb der Sammelaufnahme 22 angeordnet werden. Dies vereinfacht die Versorgung signifikant. Da sich das gesamte Vorstecknest 74 während des Vorsteckprozesses dreht, würden so Drehdurchführungen bzw. Energieketten notwendig.

Darüber hinaus kann durch den Umgriff im radial inneren Bereich der Sammelaufnahme 22 Platz gespart werden, da die Getriebe 61 und Betätigungselemente 86, 88 (Kurvenscheibe 62, 66, Pneumatikzylinder etc.) nach außen verlagert werden können. Abhängig vom Innendurchmesser des Stators kann es sein, dass eine Anbringung von Schiebern 28, 30 durch den beschriebenen Umgriff so erst möglich wird.

Zudem ist die Verwendung von Schieberbauteilen möglich, die weniger filigran ausfallen und somit günstiger sind.

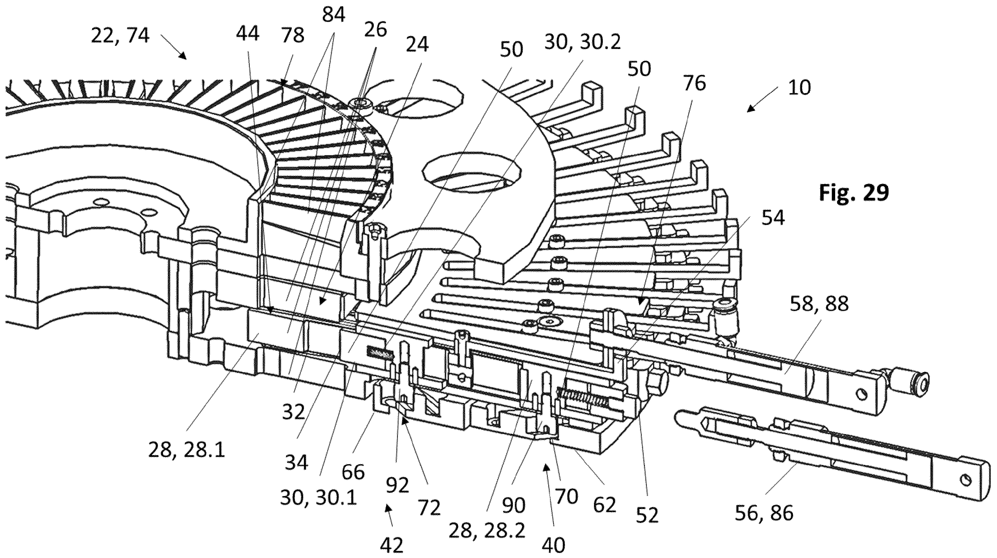

Im Folgenden werden anhand der Fig. 29 bis 32 Vorteile und Funktionen der bei der gezeigten Ausführungsform der Kranzanordnungsvorrichtung 10 vorgesehenen mehrteiligen Schieber 28, 30 und deren Individualbetätigungseinrichtungen 56, 58 näher erläutert. Insbesondere wird die Funktionsweise der außenstehenden Betätigungselemente 86, 88 - Beispiele für Individualbetätigungseinrichtungen 56, 58 - näher erläutert.

Bei den in den Fig. 29 bis 32 dargestellten Situationen ist die Stellung der Schiebergruppen-Bewegungseinrichtungen 40, 42 die gleiche wie bei den Fig. 23 und 24, d.h. sie sind in einer Stellung zum gemeinsamen Schließen der radial inneren Schieber 28 und der radial äußeren Schieber 30. Insbesondere ist die Stellung der Kurvenscheiben 62, 66 im Vergleich zu den Fig. 23 und 24 unverändert.

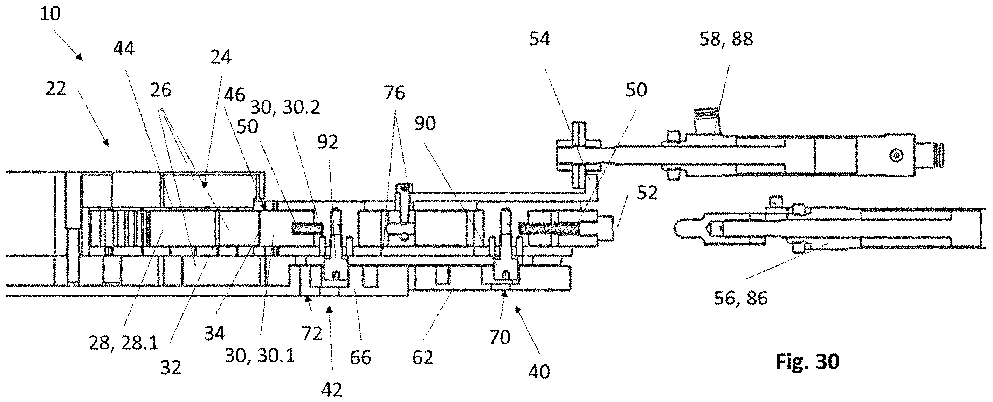

Fig. 29 zeigt eine trimetrische Ansicht der Kranzanordnungsvorrichtung 10 mit einem einzeln über den Federweg mithilfe eines zugeordneten außenstehenden Betätigungselements 88 geöffneten radial äußeren Schieber 30. Fig. 30 zeigt die gleiche Situation in geschnittener 2dimensionaler Darstellung.

Der mit der äußeren Klemmfläche 34 versehene erste Schieberteil 30.1 - d.h. der pinberührende Abschnitt - des radial äußeren Schiebers 30 wird mittels separatem, ziehendem Betätigungselement 88 (oberer Pneumatikzylinder) geöffnet. Somit wird hier nur dieser eine betätigte radial äußere Schieber 30 geöffnet. Alle anderen radial äußeren Schieber 30 bleiben weiterhin geschlossen.

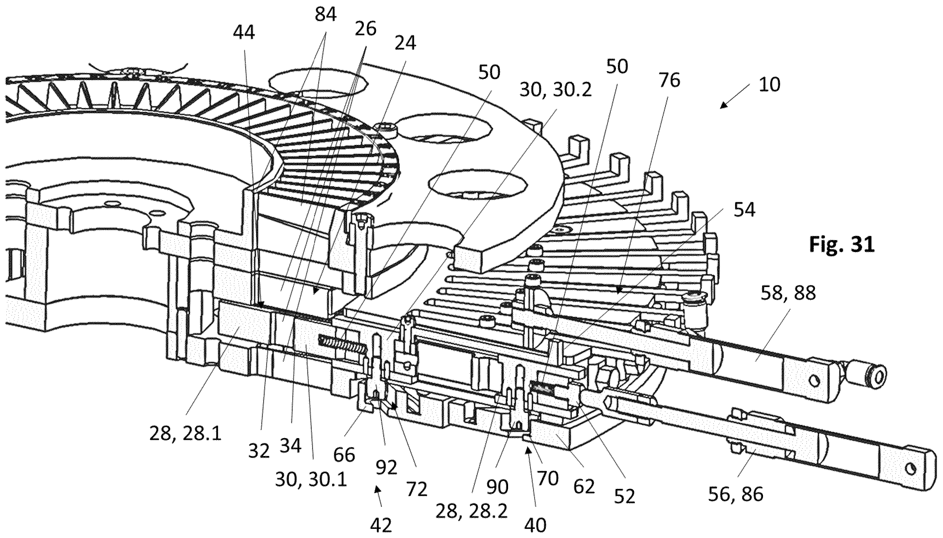

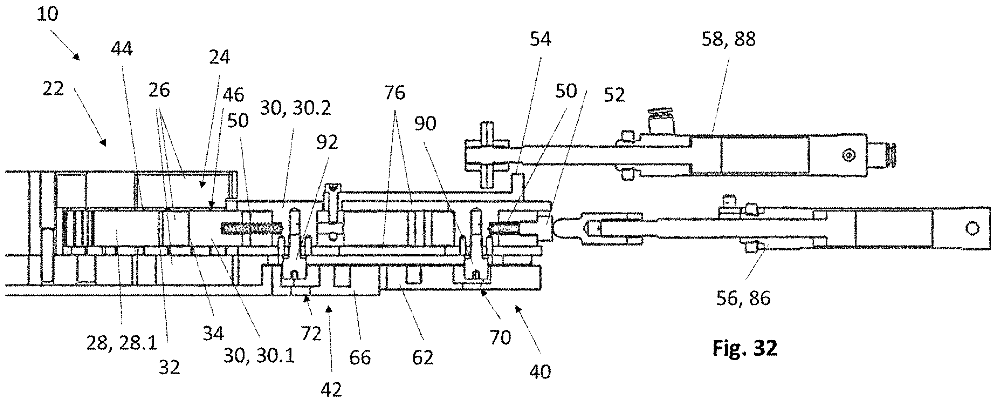

Fig. 31 zeigt eine trimetrische Ansicht der Kranzanordnungsvorrichtung 10 mit einem einzeln über den Federweg mithilfe eines zugeordneten außenstehenden Betätigungselements 86 geöffneten radial inneren Schieber 28. Fig. 32 zeigt die gleiche Situation in geschnittener 2dimensionaler Darstellung.

Der mit der inneren Klemmfläche 32 versehene erste Schieberteil 28.1 - d.h. der pinberührende Abschnitt - des radial inneren Schiebers 28 wird mittels separatem, drückendem Betätigungselement 86 (unterer Pneumatikzylinder) geöffnet. Somit wird hier nur dieser eine betätigte radial innere Schieber 28 geöffnet. Alle anderen radial inneren Schieber 28 bleiben weiterhin geschlossen.

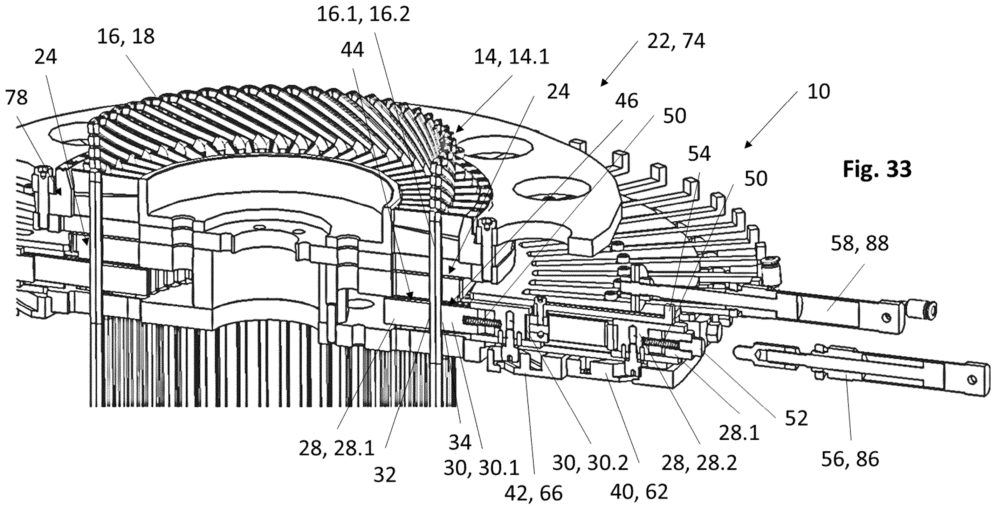

Im Folgenden werden anhand der Fig. 33 bis 62 Prozessschritte verschiedener Ausführungsformen eines Kranzanordnungsverfahrens näher erläutert.

Es handelt sich um ein Kranzanordnungsverfahren zum Bilden einer Kranzanordnung 12 aus einem Kranz 14 oder mehreren konzentrisch angeordneten Kränzen 14.1, 14.2 von elektrischen Leitern 16, um eine Spulenwicklung eines Bauteils einer elektrischen Maschine zu bilden, umfassend:
- Bereitstellen einer Kranzanordnungsvorrichtung 10 gemäß einer der zuvor erläuterten Ausführungsformen.

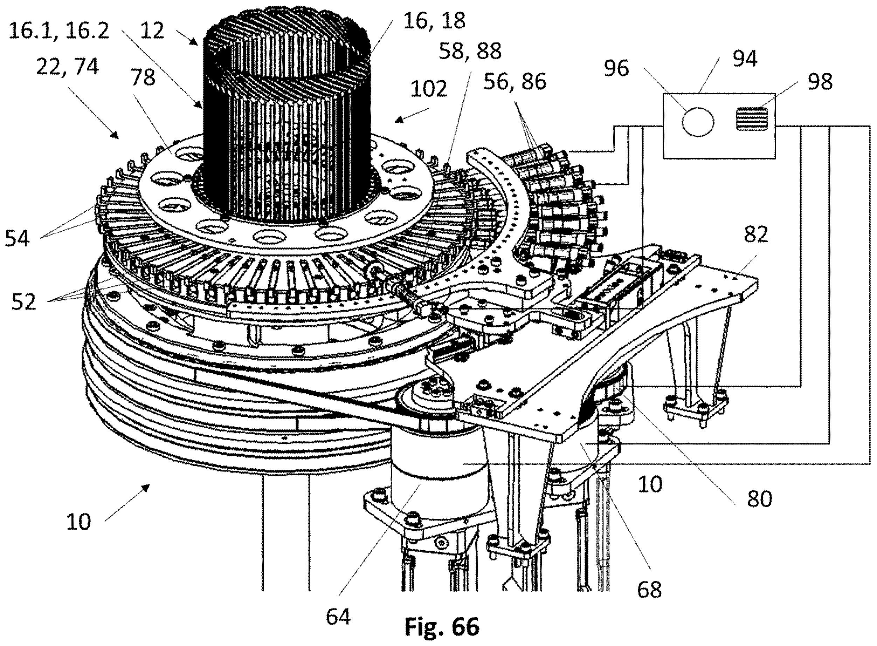

Das Kranzanordnungsverfahren lässt sich insbesondere automatisch mit der Kranzanordnungsvorrichtung 10 durchführen. Wie in Fig. 66 schematisch dargestellt, hat die Kranzanordnungsvorrichtung 10 hierzu eine Steuerung 94, die kommunikativ mit den Aktoren 64, 68, 80, 86, 88 verbunden ist und dazu eingerichtet ist, die Kranzanordnungsvorrichtung 10 zum Durchführen der im folgenden erläuterten Schritte von Ausführungsformen des Kranzanordnungsverfahrens zu veranlassen. Insbesondere weist die Steuerung 94 einen Prozessor 96 und einen Speicher 98 auf, in der ein Computerprogramm gespeichert ist, das das Durchführen veranlasst.

Bei einer Variante, die auch mit einteiligen Schiebern funktioniert, umfasst das Kranzanordnungsverfahren die Schritte:
- Bereitstellen der radial inneren und/oder radial äußeren Schieber 28, 30 in einer Vorsteckstellung 100, in der sie zumindest teilweise in die Aufnahmeräume 24 eingefahren sind;
- Einstecken von Leiterabschnitten 16.1, 16.2 elektrischer Leiter 16 in die Aufnahmeräume 24 so, dass die Leiterabschnitte 16.1, 16.2 auf den in der Vorsteckstellung 100 zumindest teilweise in die Aufnahmeräume 24 eingefahrenen Schiebern 28, 34 aufstützen und ein Kranz 14.1 aus den elektrischen Leitern 16 gebildet wird,
- Verlagern des Kranzes 14.1 aus einer Vorsteckposition 102, in der die den Kranz 14.1 bildenden Leiter 16 aus der Sammelaufnahme 22 vorstehen, in eine Lagerposition 104, in der die einen zuvorigen Kranz 14.1 bildenden Leiter 16 zum Stecken eines weiteren Kranzes 14.2 gelagert werden oder in eine zwischen der Vorsteckposition 102 und der Lagerposition 104 angeordnete Zwischenposition 106;
- relatives aufeinander zu Fahren der radial inneren und äußeren Schieber 28, 30, um die Leiter 16 in der Vorsteckposition 102 oder der Zwischenposition 106 zwischen den an den Schiebern 28, 30 ausgebildeten Klemmflächen 32, 34zu klemmen.

In einer Variante, die auch mit einer Ausführung mit nur einem Schieber pro Nut, wobei wenigstens einer der Schieber mehrteilig ausgebildet ist, funktioniert, umfasst das Kranzanordnungsverfahren die Schritte:
- Bereitstellen der Schieber 28, 30 in einer Vorsteckstellung 100, in der sie zumindest teilweise in die Aufnahmeräume 24 eingefahren sind;
- Einstecken von Leiterabschnitten 16.1, 16.2 elektrischer Leiter 16 in die Aufnahmeräume 24 so, dass die Leiterabschnitte 16.1, 16.2 auf den in der Vorsteckstellung 100 zumindest teilweise in die Aufnahmeräume 24 eingefahrenen Schiebern 28, 30 aufstützen und ein Kranz 14, 14.1 aus den elektrischen Leitern 16 gebildet wird,
- Verlagern des Kranzes 14, 14.1 aus einer Vorsteckposition 102, in der die den Kranz 14, 14.1 bildenden Leiter 16 aus der Sammelaufnahme 22 vorstehen, in eine Lagerposition 104, in der die einen zuvorigen Kranz 14.1 bildenden Leiter 16 zum Stecken eines weiteren Kranzes 14.2 gelagert werden oder in eine zwischen der Vorsteckposition 102 und der Lagerposition 104 angeordnete Zwischenposition 106;
- Klemmen der Leiter 16 in der Vorsteckposition 102 oder der Zwischenposition 106 durch Verfahren der Schieber 28, 30 in eine Klemmstellung; und
- Bewegen des ersten Schieberteils 28.1, 30.1 eines mehrteiligen Schiebers 28, 30, um Leiter 16 in dem zugeordneten Aufnahmeraum 24 zu bewegen, während Leiter 16 in anderen Aufnahmeräumen 24 weiter geklemmt werden.

Alternativ zum zuvorigen des Kranzanordnungsverfahrens ist es auch möglich, lediglich einen einzigen Kranz 14 zu bilden, der anschließend entnommen wird, indem zunächst die Schieber alle geschlossen sind, und dann durch Einzelbetätigung erster Schieberteile 28.1, 30.1 die Pins dann jeweils eingebracht werden und dann in geklemmtem Zustand sind, wenn die Individualbetätigungseinrichtungen 56, 58 nicht mehr betätigt werden.

Im Folgenden wird anhand der Darstellung der Fig. 33 bis 37 ein möglicher Prozessablauf des Vorstecken eines Hairpin-Kranzes 14.2 erläutert, wobei als Leiter 16 regelmäßige Hairpins in U-Form mit gleichen Schenkellängen gesteckt werden. Die Individualbetätigungseinrichtungen 56, 58, z.B. die außenstehenden Betätigungselemente 86, 88, sind hierbei zunächst nicht im Einsatz.

Fig. 33 zeigt eine trimetrische Schnitt-Darstellung der Kranzanordnungsvorrichtung 10, in der bereits ein zuvor gesteckter Kranz 14.1 in der Lagerposition 104 angeordnet wird und dort über die Schieber 28, 30 geklemmt wird. Insbesondere zeigt Fig. 33 einen über die Kurvenscheiben 62, 66 geklemmten ersten Hairpin-Kranz 14.1; die wenigstens eine Feder 50 zum Aufbringen der Klemmkraft ist leicht gestaucht; die außenstehenden Betätigungselemente 86, 88 sind nicht im Eingriff.

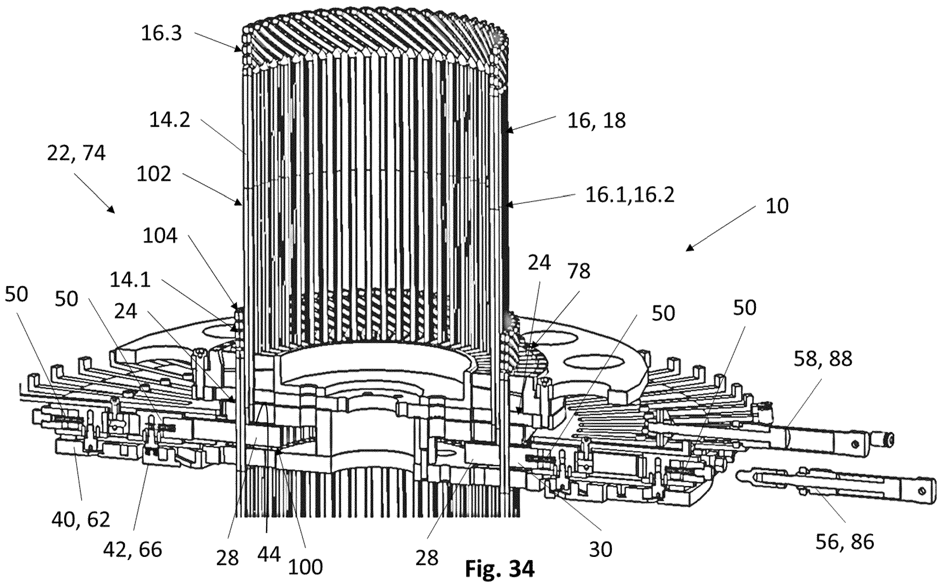

Fig. 34 zeigt eine trimetrische Ansicht der Kranzanordnungsvorrichtung 10, bei der ausgehend von Fig. 33 ein weiterer regelmäßiger Hairpin-Kranz 14.2 radial weiter innen auf den Schiebern 28 aufgestellt wird. Die Leiter 16 (regelmäßige Hairpins) des zu steckenden zweiten Kranzes 14.2 stehen mit ihren in die Aufnahmeräume 24 eingesteckten Leiterabschnitten 16.1, 16.2 auf den inneren Stützflächenbereichen 44 auf, die an der Oberseite der ersten Schieberteile 28.1 der radial inneren Schieber 28 ausgebildet sind, und werden so in der Vorsteckposition 102 gehalten.

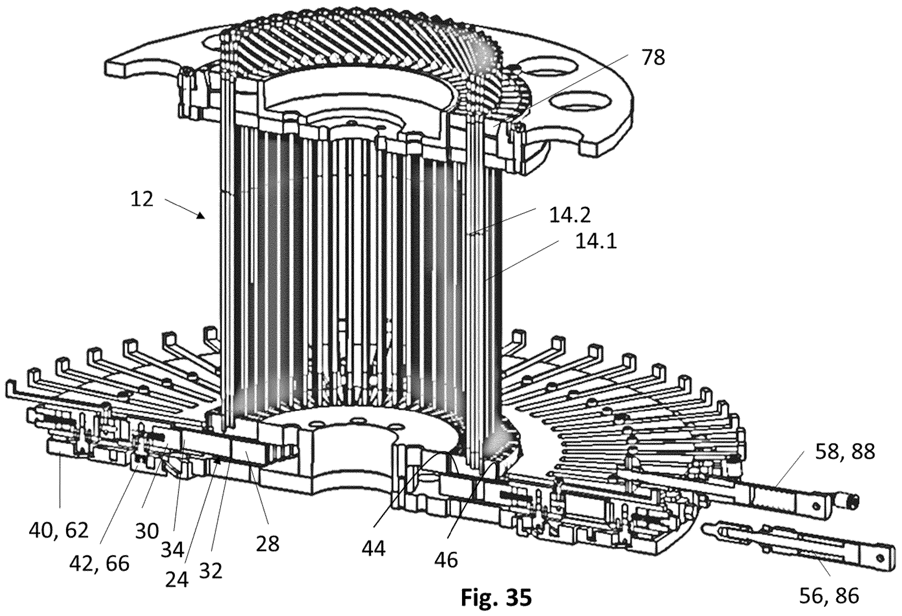

Fig. 35 zeigt, wie im nächsten Prozessschritt die Schieber 28, 30 über die Schiebergruppen-Bewegungseinrichtungen 56, 58, wie z.B. die Kurvenscheiben 62, 66 geöffnet werden. Bei der hier dargestellten Verfahrensweise werden die Schieber 28, 30 hier nicht über den gesamten Verfahrweg geöffnet; es reicht ein Öffnen bis zum Aufheben der Klemmwirkung aus. Mittels des Oberteils der Sammelaufnahme 22 - z.B. relativ zu den Schiebern 28, 30 axial verfahrbarer Vorstecknestring 78 - wird der bereits zuvor gesteckte erste Kranz 14.1 aus der Lagerposition 104 ausgehoben. Weiter wird der gerade soeben gesteckte zweite Kranz 14.2 durch die Relativbewegung des Oberteils aus der Vorsteckposition 102 heraus von den Schiebern 28, 30 abgehoben.

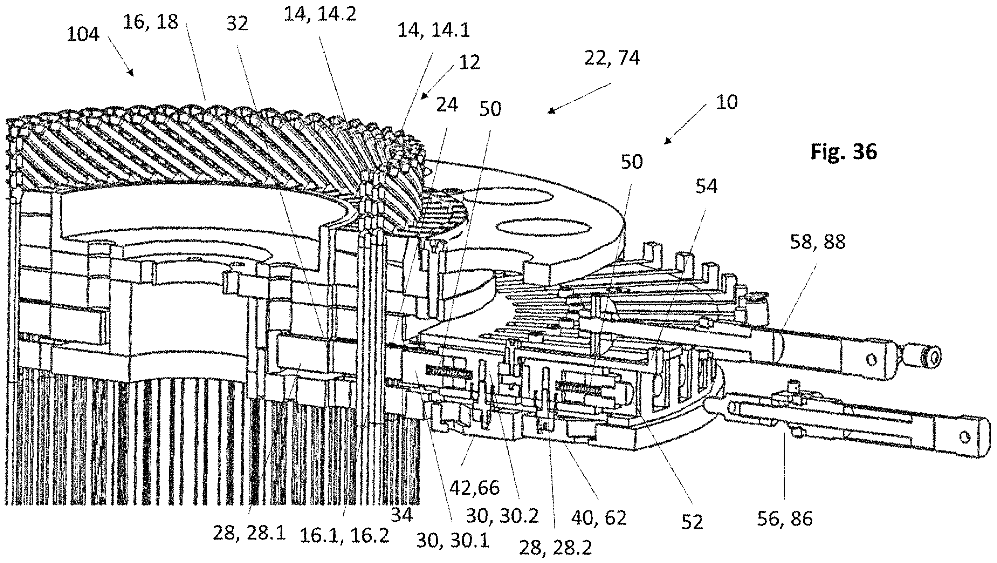

Fig. 36 zeigt den nächsten Prozessschritt, wo die Schieber 28, 30 über die Schiebergruppen-Bewegungseinrichtungen 40, 42 - z.B. Kurvenscheiben 62, 66 - weiter geöffnet werden, beispielsweise vollständig geöffnet werden. Insbesondere zeigt Fig. 36 das Absenken beider Kränze 14.1, 14.2 bei über die Kurvenscheiben 62, 66 vollständig geöffneten Schiebern 28, 30. Die Individualbetätigungseinrichtungen 56, 58, insbesondere die außenstehenden Betätigungselemente 86, 88 sind nicht im Eingriff.

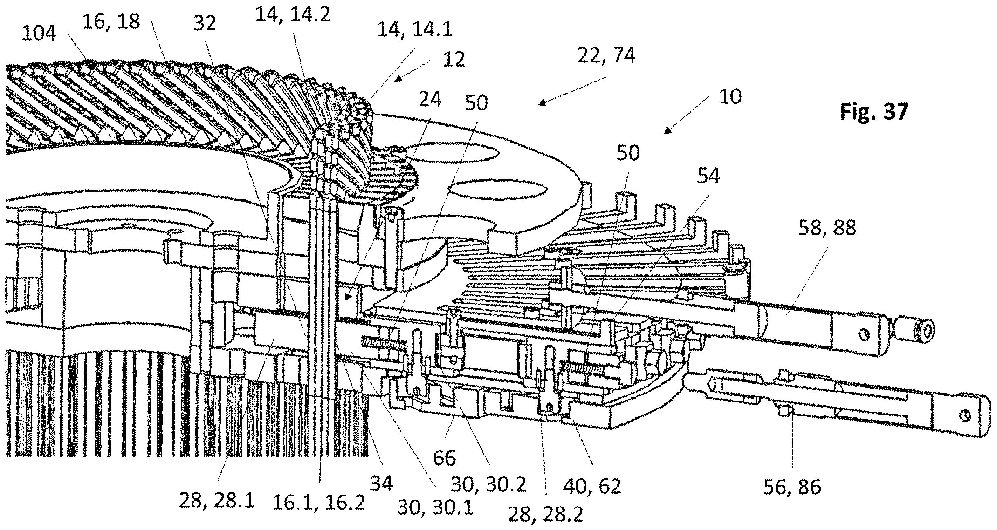

Fig. 37 zeigt den nächsten Prozessschritt, der das Stecken des zweiten Kranzes 14.1 beendet. Die Schieber 28, 30 werden über die Schiebergruppen-Bewegungseinrichtungen 40, 42 zugestellt, so dass sie die aus erstem und zweitem Kranz 14.1, 14.2 gebildete Kranzanordnung 12 von radial innen und von radial außen klemmen.

In der konkreten Ausführung zeigt Fig. 37 in trimetrischer Darstellung die Kranzanordnungsvorrichtung 10 mit in der Lagerposition 104 geklemmten Kränzen 14.1, 14.2. Die Kränze 14.1, 14.2 aus Hairpins 18 als Leiter 16 werden über die Kurvenscheiben 62, 66 geklemmt. Die Feder 50 zum Aufbringen der Klemmkraft ist bei beiden Schiebern 28, 30 leicht gestaucht. Die außenstehenden Betätigungselemente 86, 88 sind nicht im Eingriff.

Wie in Fig. 37 zu sehen, können die Kränze 14.1, 14.2 mit radialem Abstand zu eventuellen Umfangsbegrenzungen der Nuten/Aufnahmeräume 24 der Sammelaufnahme 22 gehalten werden. Ein Stecken eines dritten Kranzes ist so radial weiter innen, auf die gleiche Weise, wie zuvor für den zweiten Kranz beschrieben, möglich, oder auch radial weiter außen, wobei sich die Hairpins 18 des dritten Kranzes dann in der Vorsteckposition 102 auf den an den radial äußeren Schiebern 30 ausgebildeten äußeren Stützflächenbereichen 46 abstützen.

Das Vorsehen gegenläufiger Schieber 28, 30 ermöglicht somit unterschiedliche Varianten des Steckens von Kränzen 14, 14.1, 14.2 mit unterschiedlichen Radien.

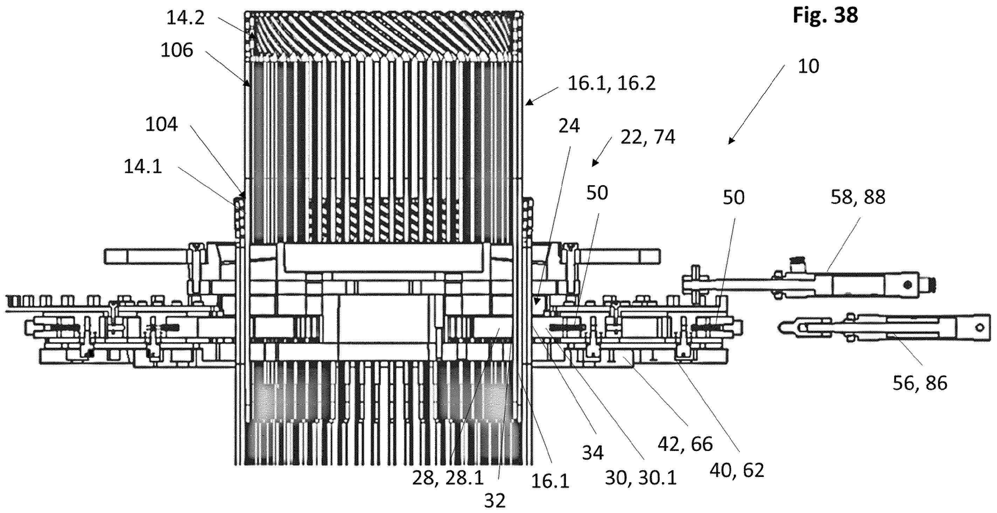

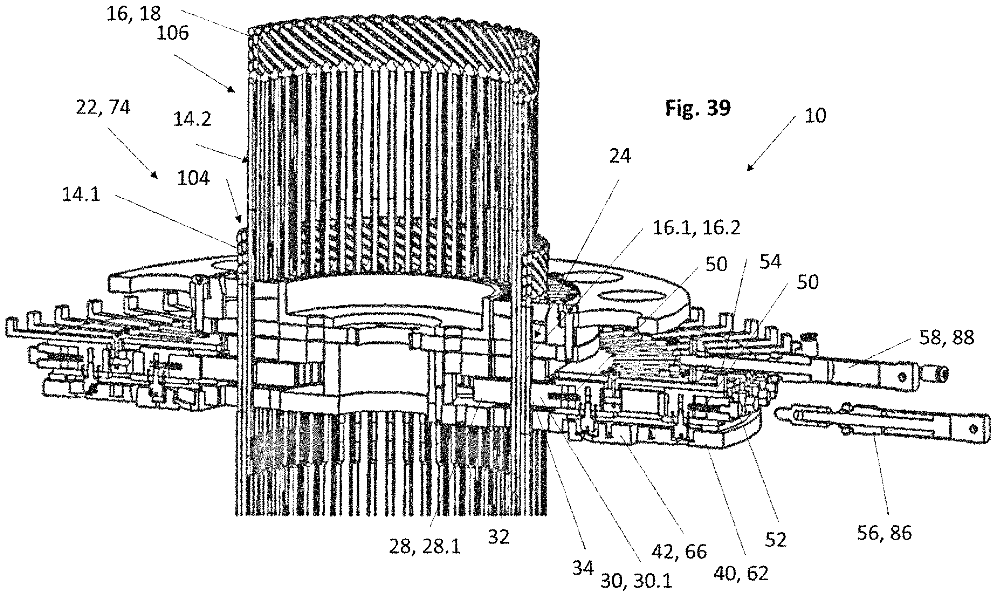

Wie die Fig. 38 und 39 zeigen ist auch ein Klemmen von Kränzen 14, 14.1, 14.2 in jeder Höhe - Zwischenposition 106 - zwischen Steckposition 102 und Lagerposition 104 möglich. Fig. 38 zeigt eine geschnittene 2D-Darstellung der Kranzanordnungsvorrichtung, bei der ein erster Kranz 14.1 in der Lagerposition 104 und ein zweiter Kranz 14.2 in einer Zwischenposition 106 geklemmt wird. Ein Klemmen des Kranzes 14.2 ist somit auch auf Halbhöhe möglich. Dabei ist die Feder 50 zum Aufbringen der Klemmkraft in den einzelnen Schiebern 28, 30 leicht gestaucht. Die außenstehenden Betätigungselemente 86, 88 sind nicht im Eingriff. Fig. 39 zeigt die gleiche Situation als trimetrische Darstellung.

Im Folgenden werden einige Vorteile einer Entkopplung der Schieber 28, 30 von der jeweiligen Schiebergruppen-Bewegungseinrichtung 40, 42 - insbesondere mittels der Ausbildung als mehrteiliger Schieber mit Kraftspeicher oder elastischem Element, z.B. Feder 50 - näher beschrieben.

Wie oben erläutert, ist es durch die Entkopplung möglich, dass die Aufnahmeräume 24 auch unterschiedlich gefüllt sein können.

Ein Vorteil ist weiter, dass einzelne Leiter 16 in einen Aufnahmeraum 24 eingebracht werden können, während die Leiter in den anderen Aufnahmeräumen weiter geklemmt sind, wie dies im Folgenden anhand eines Ausführungsbeispiels genauer erläutert wird.

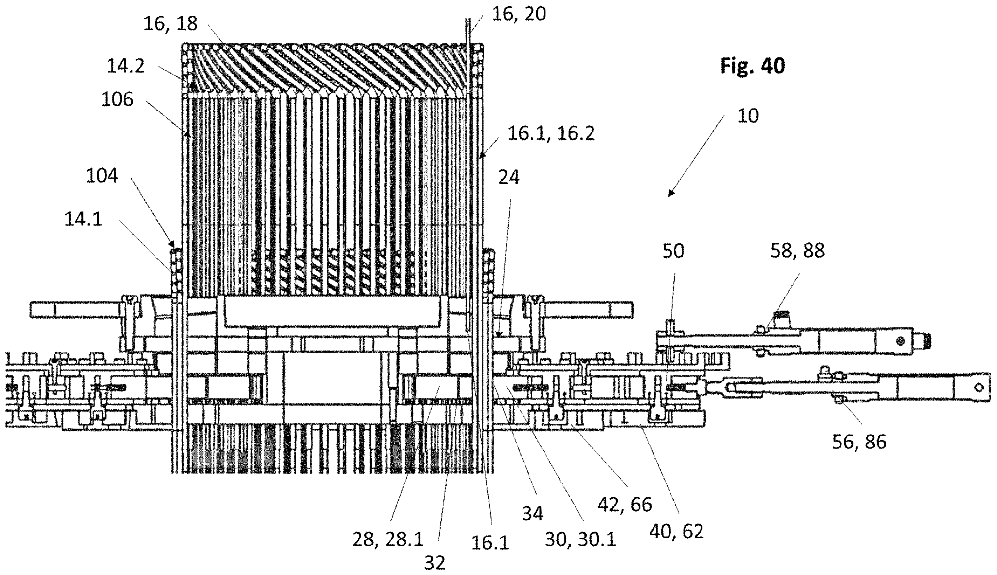

Wie im Folgenden anhand der Fig. 40 bis 46 erläutert, ist es auch dann, wenn sich ein Kranz 14.2 in einer Zwischenstellung befindet, möglich, einzelne Pins 20 in die Sammelaufnahme 22 einzufügen, während die bereits gesteckten Pins 18 in einer geklemmten Position bleiben. Im Folgenden soll dies anhand des Beispiels erläutert werden, dass an einer Stelle der später aus der Kranzanordnung gebildeten Spulenwicklung ein I-Pin 20 eingefügt werden soll.

Es wird dabei von der in den Fig. 38 und 39 gezeigten Situation ausgegangen, in der ein erster Kranz 14.1 in der Lagerposition 104 und ein zweiter Kranz 14.2 in der Zwischenposition 106 geklemmt wird.

Hierfür wird zunächst mithilfe des außenstehenden Betätigungselements 86 der einzelne Schieber 28 betätigt. Da bei der hier dargestellten Ausführungsform sowohl der radial innere Schieber 28 als auch der radial äußere Schieber 30 mehrteilig ausgebildet ist, funktioniert das Einfügen des weiteren Pins 20 sowohl radial innen als auch radial außen. Im Folgenden wird das Einfügen radial innen beschrieben, wozu der radial innere Schieber 28 individuell betätigt wird. Der Aufnahmeraum 24, die den I-Pin aufnehmen soll, wird somit über die Individualbetätigungseinrichtung 86 radial nach innen geöffnet.

Fig. 40 zeigt eine 2D-Ansicht mit einem einzeln über den Federweg mithilfe eines außenstehenden Betätigungselements 86 - z.B. unterer, drückender Zylinder - geöffneten radial inneren Schieber 28. Der I-Pin 20 kommt von oben.

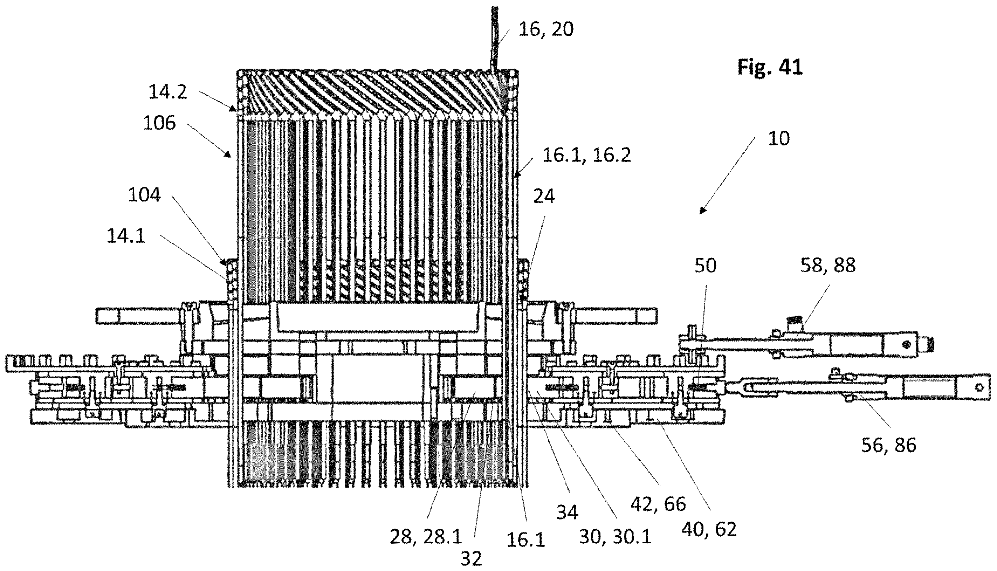

Fig. 41 zeigt eine 2D-Ansicht des darauf folgenden Prozessschritts, mit dem einzeln über den Federweg mithilfe des außenstehenden Betätigungselements 86 (unterer, drückender Zylinder) geöffneten radial inneren Schieber 28; der I-Pin 20 wird auf entsprechende Halbhöhe - Zwischenposition 106 - gesteckt.

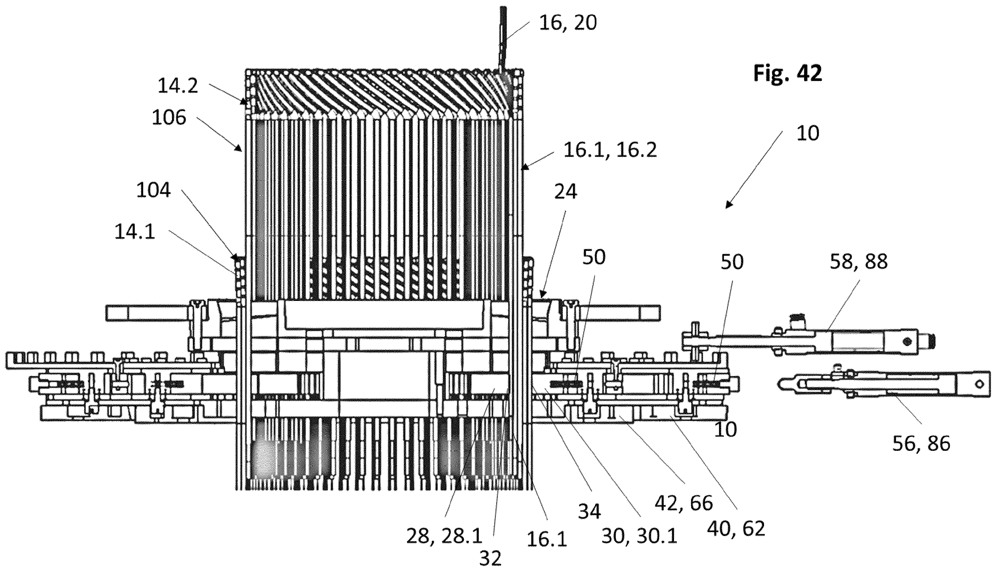

Der neu eingebrachte Pin 20 wird auf die vorgesehene Tiefe gebracht und kann in dieser neuen Position nun einzeln geklemmt werden. Hierfür wird das außenstehende Betätigungselement 86 eingefahren. Somit klemmt der gefederte Schieber 28 wieder innen am Pin 20, wie dies in Fig. 42 gezeigt ist. In der 2D-Darstellung von Fig. 42 ist das Betätigungselement 86 nicht mehr im Eingriff. Der radial innere Schieber 28 drückt über Federkraft am neu eingebrachten I-Pin 20.

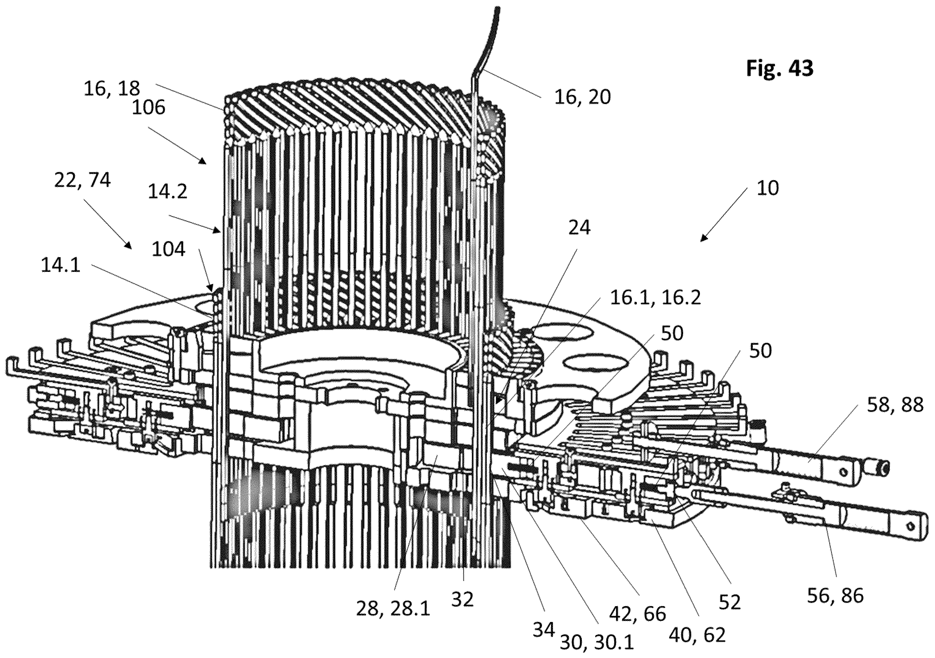

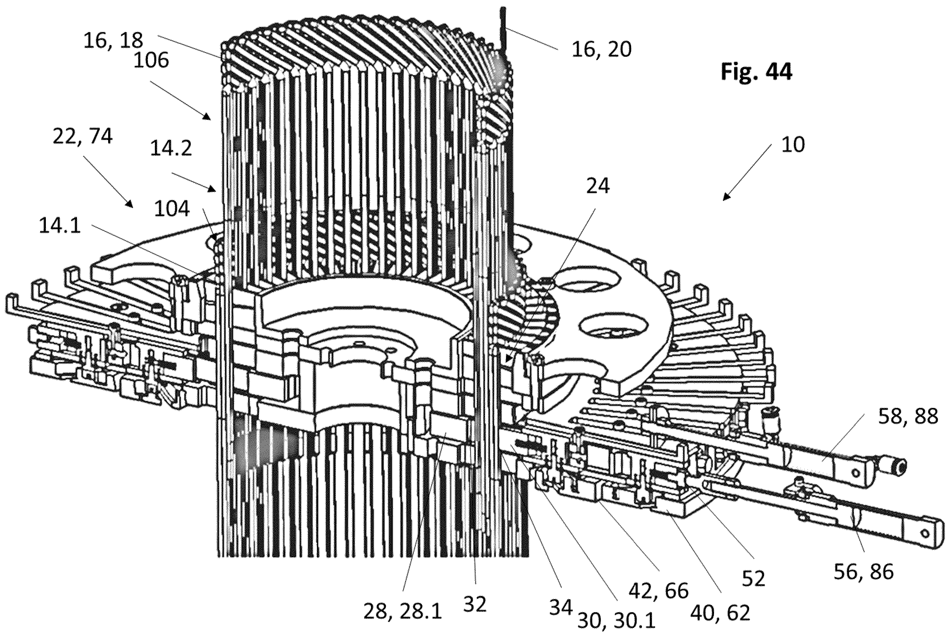

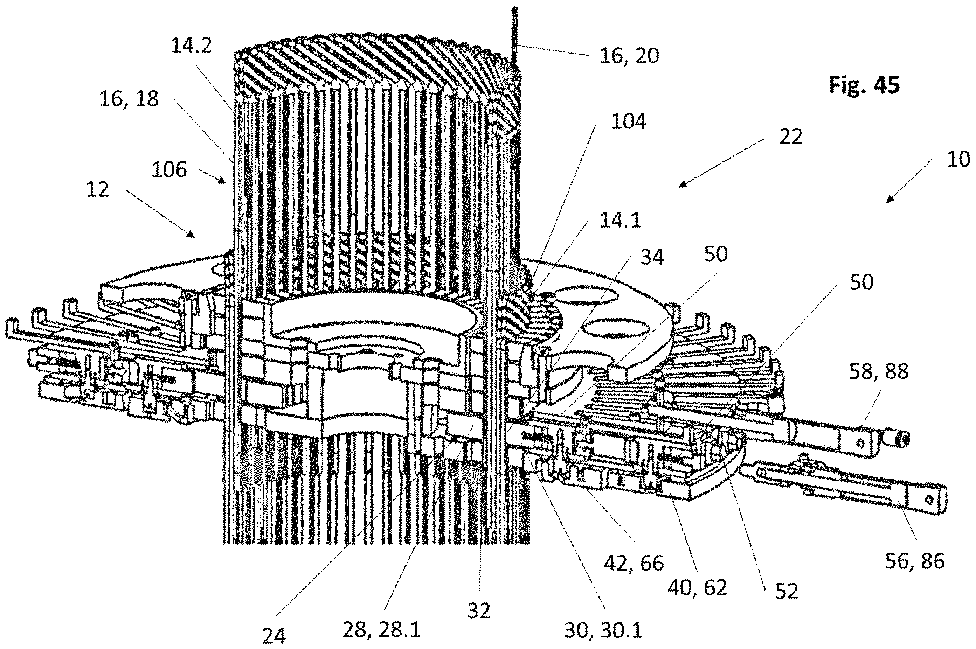

Der soeben anhand von 2D-Darstellungen erläuterte Prozess des Einsteckens eines einzelnen I-Pins 20 auf eine Zwischenposition wird noch einmal in trimetrischer Ansicht in den Fig. 43 bis 45 gezeigt. Fig. 43 zeigt den einzeln über den Federweg mithilfe des außenstehenden Betätigungselements 86 (unterer, drückender Zylinder) geöffneten radial inneren Schieber 28, der I-Pin 20 kommt von oben. Fig. 44 zeigt den einzeln über den Federweg mithilfe des außenstehenden Betätigungselements 86 (unterer, drückender Zylinder) geöffneten radial inneren Schieber 28, der I-Pin 20 wird auf entsprechende Halbhöhe - Zwischenhöhe 106 - gesteckt. In Fig. 45 ist das Betätigungselement 88 nicht mehr im Eingriff, der radial innere Schieber 28 drückt über Federkraft am neu eingebrachten I-Pin 20.

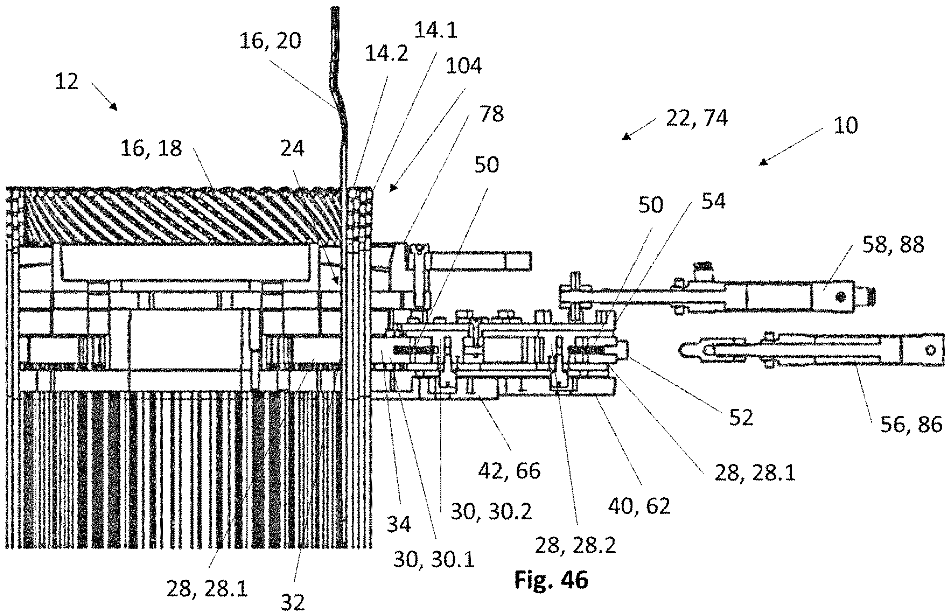

Wie in Fig. 46 gezeigt, ist es auch möglich, einzelne Pins 20 auf Halbhöhe - Zwischenposition 106 - zu klemmen, wenn sich der restliche Kranz 14.1, 14.2 in einer anderen Position, beispielsweise der Lagerposition 104, befindet. Fig. 46 zeigt eine 2D-Ansicht mit dem auf Halbhöhe über den radial inneren Schieber 28 geklemmten I-Pin 20.

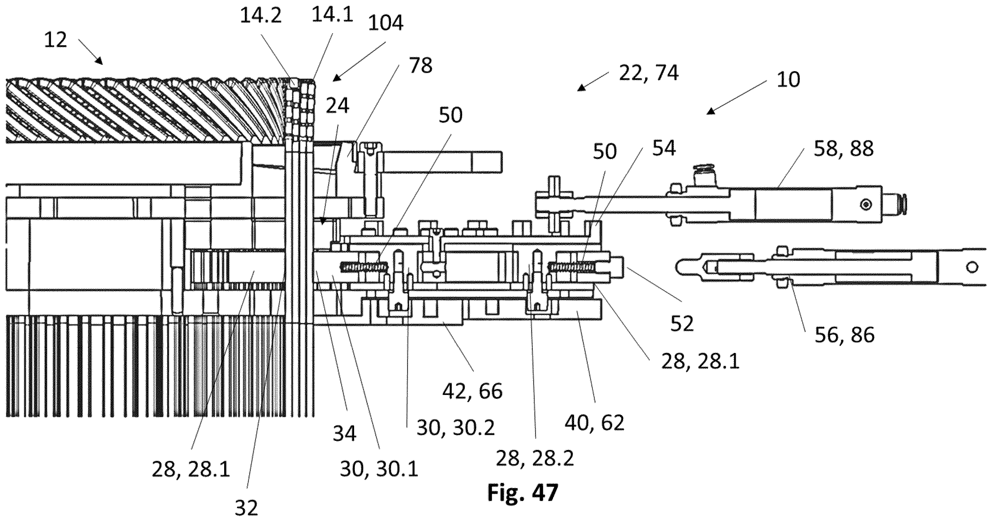

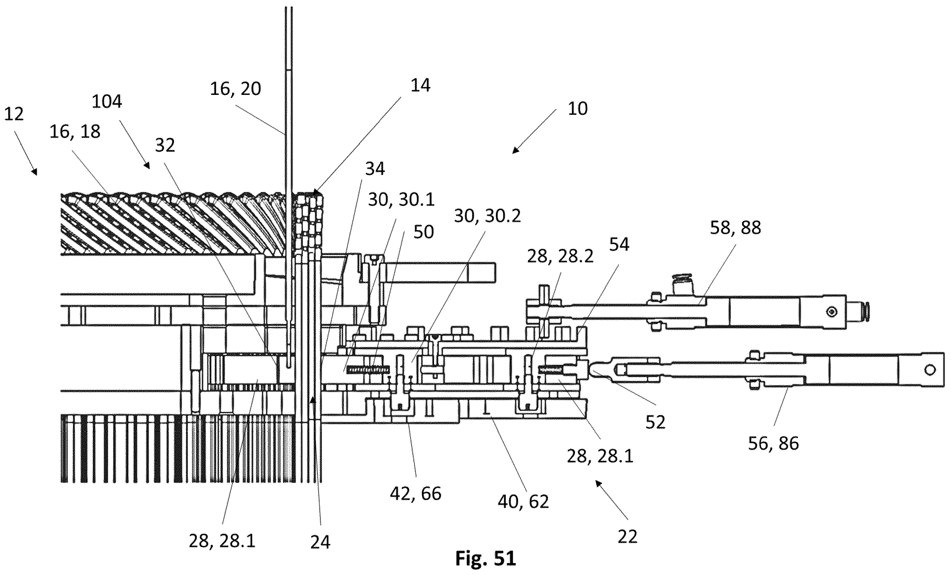

Es ist somit ein Einbringen von einzelnen Pins 20 möglich, während die Pins 18 aller anderer Nuten/Aufnahmeräume weiterhin geklemmt bleiben. Ein mögliches Vorgehen hierzu wird im Folgenden anhand der Fig. 47 bis 50 am Beispiel eines Einbringens eines I-Pins 20 radial innen und anhand der Fig. 51 bis 58 am Beispiel eines Einbringens eines I-Pins radial außen erläutert. Die Kranzanordnung aus Hairpin-Kränzen 14.1, 14.2 ist dabei in Lagerposition 104 dargestellt.

Fig. 47 zeigt eine 2D-Darstellung der Ausgangssituation, wo zwei Kränze 14.1, 14.2 in Lagerposition 104 sind. Die radial inneren Schieber 28 und die radial äußeren Schieber spannen die zwei Kränze 14.1, 14.2. Die Federn 50 zum Aufbringen der Klemmkraft sind leicht gestaucht; die außenstehenden Betätigungselemente 86, 88 sind nicht im Eingriff.

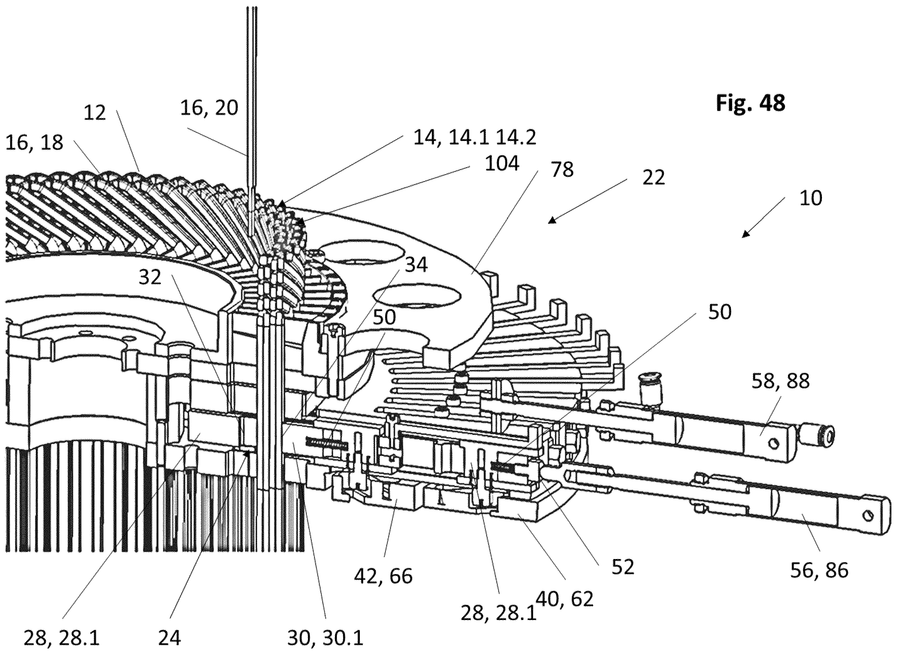

Fig. 48 zeigt in trimetrischer Ansicht den einzeln über den Federweg mithilfe eines außenstehenden Betätigungselements 86 (unterer, drückender Zylinder) geöffneten radial inneren Schieber 28; der I-Pin 20 kommt von oben.

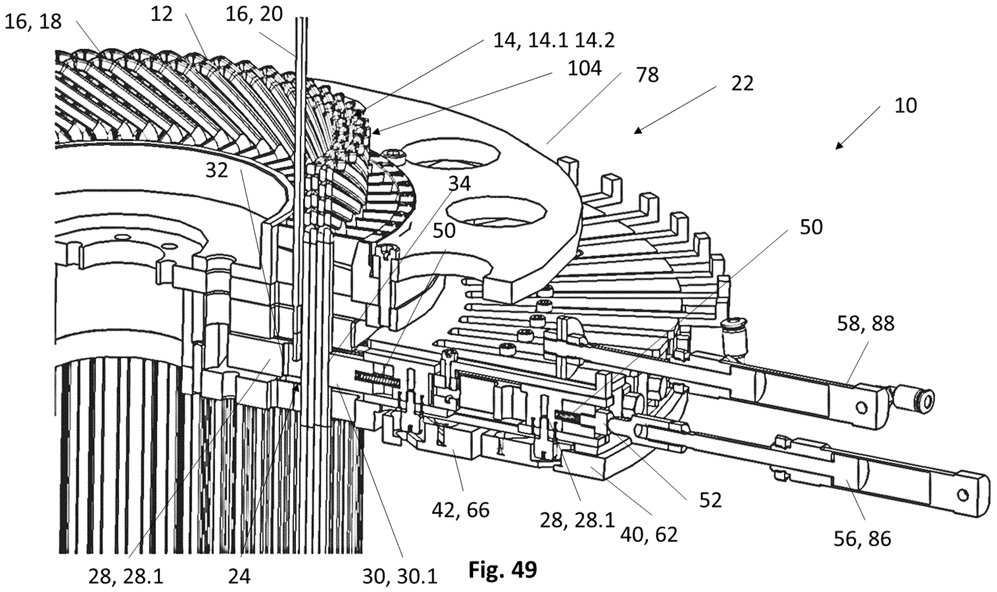

Fig. 49 zeigt in trimetrischer Ansicht den einzeln über den Federweg mithilfe eines außenstehenden Betätigungselements 86 (unterer, drückender Zylinder) geöffneten radial inneren Schieber 28; der I-Pin 20 wird von oben eingeführt. Die gleiche Situation ist in zweidimensionaler Darstellung nochmals in Fig. 51 dargestellt.

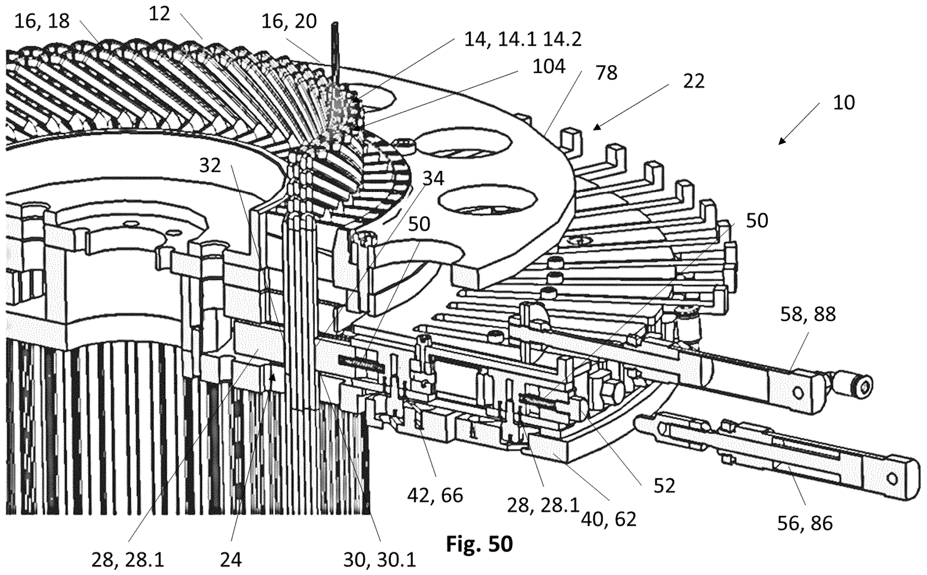

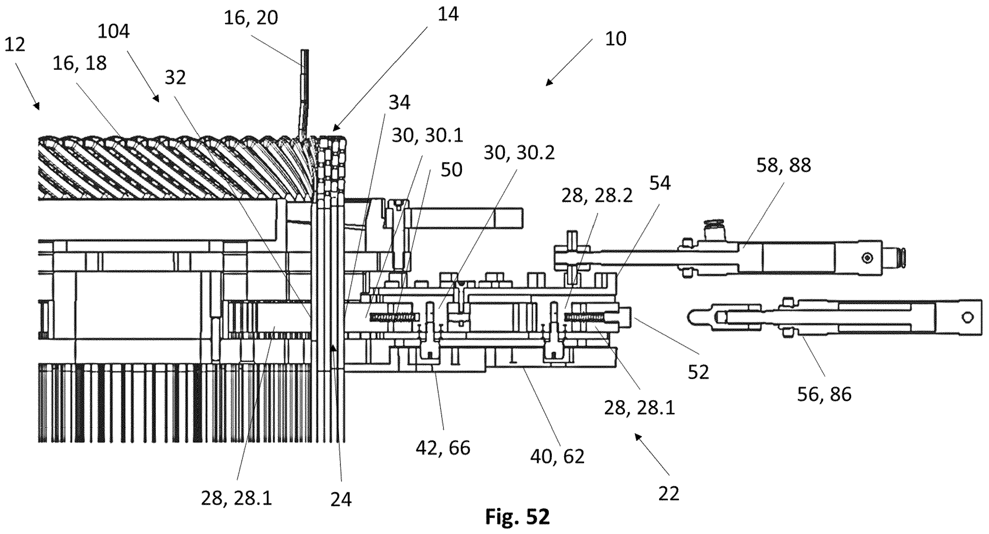

Fig. 50 zeigt in trimetrischer Ansicht den I-Pin 20 auf Endposition, das drückende Betätigungselement 86 ist zurückgefahren; der I-Pin 20 wird über Federkraft des radial inneren Schiebers 28 geklemmt. Die gleiche Situation ist in 2D-Darstellung noch einmal in Fig. 52 gezeigt.

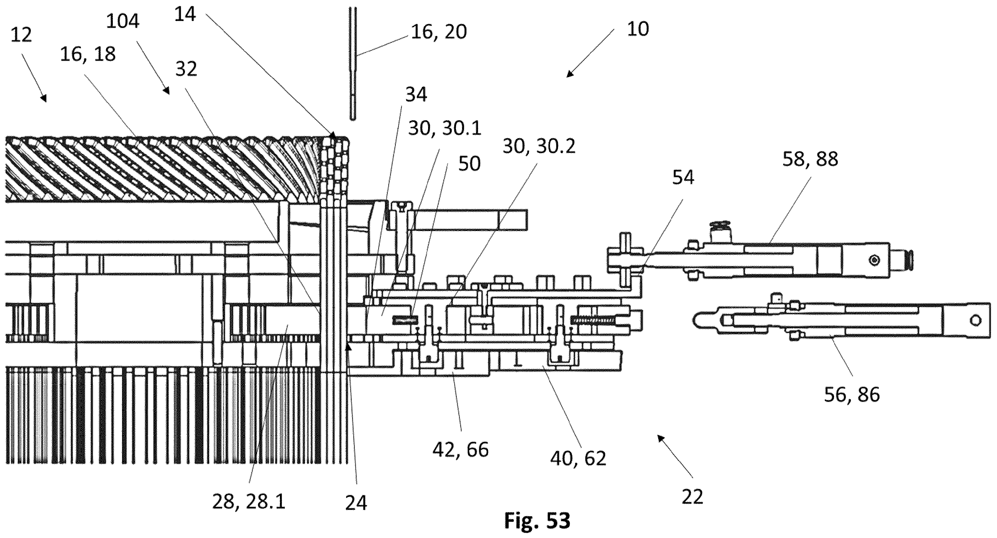

Da in diesem Beispiel sowohl die radial äußeren Schieber 30 als auch die inneren Schieber 28 die mechanische Entkopplung von der Kurvenscheibe 62, 66 aufweisen, ist die dargestellte Vorgehensweise auch für I-Pins 20 radial außen möglich, wie in Fig. 53 bis 58 gezeigt.

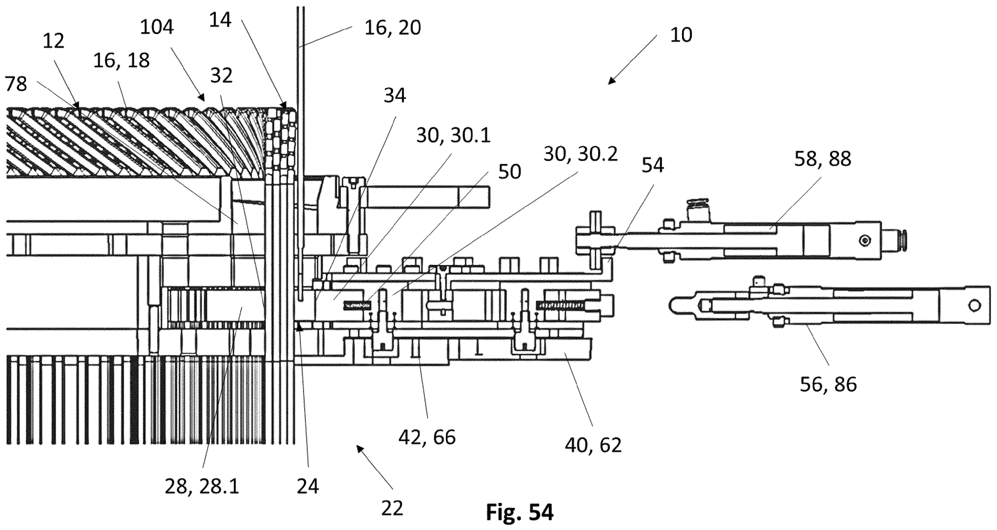

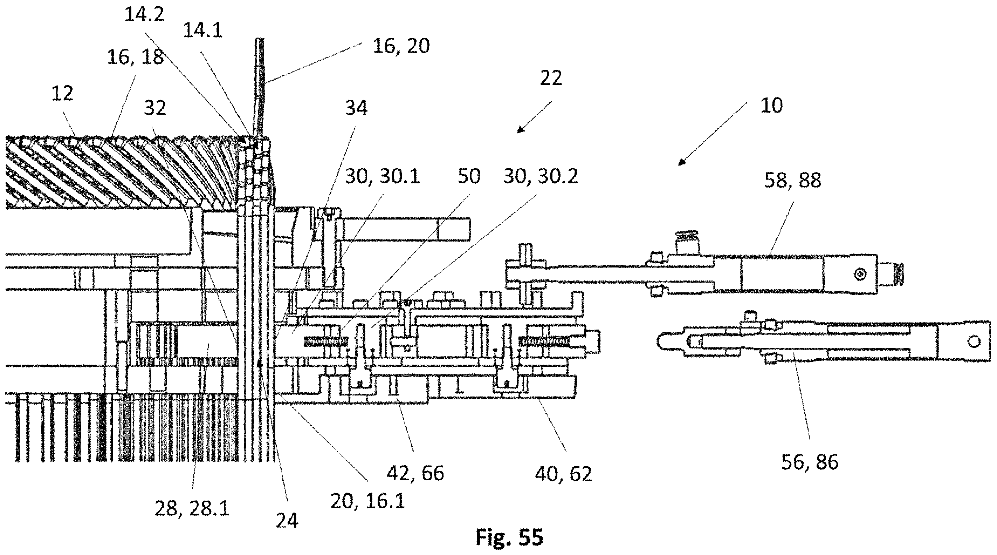

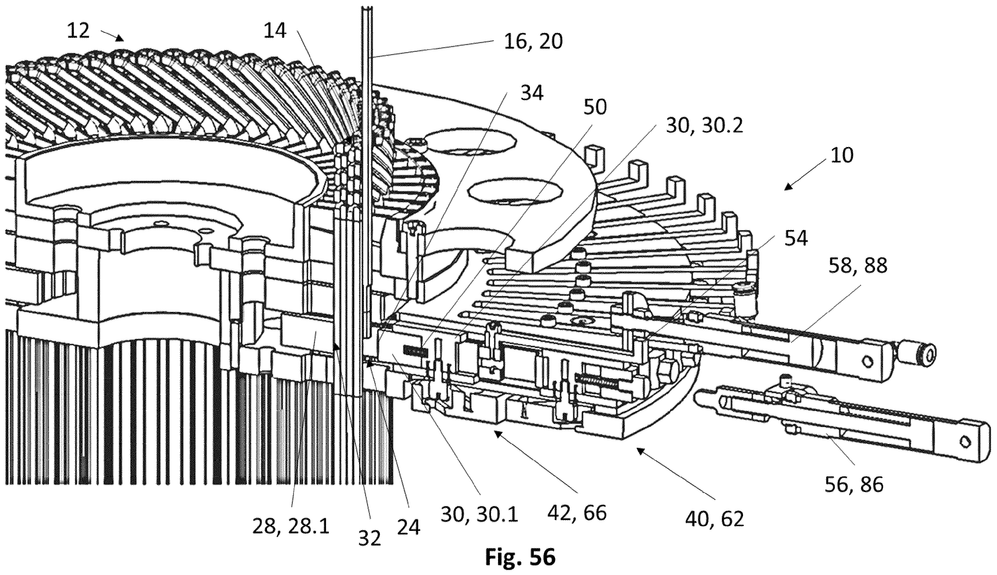

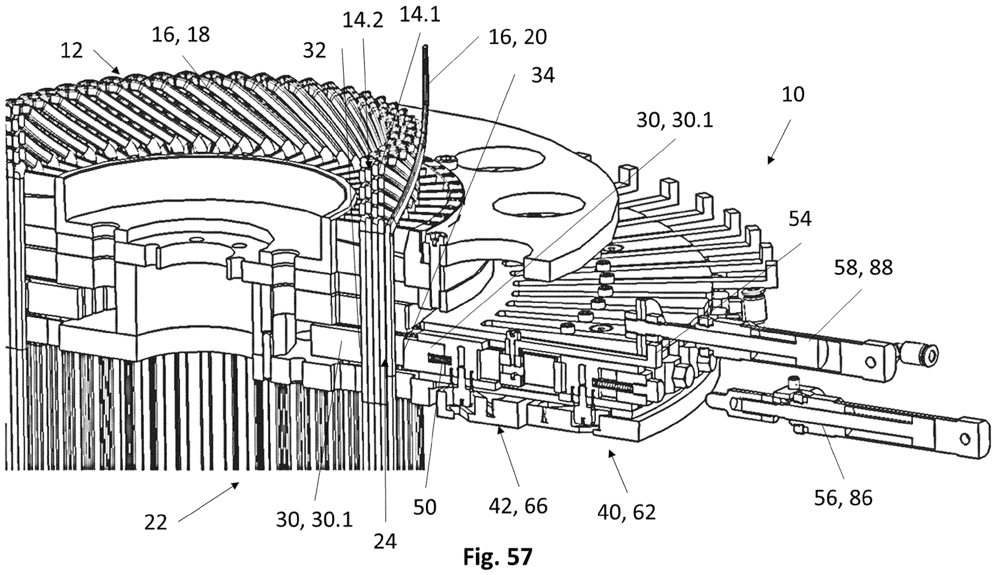

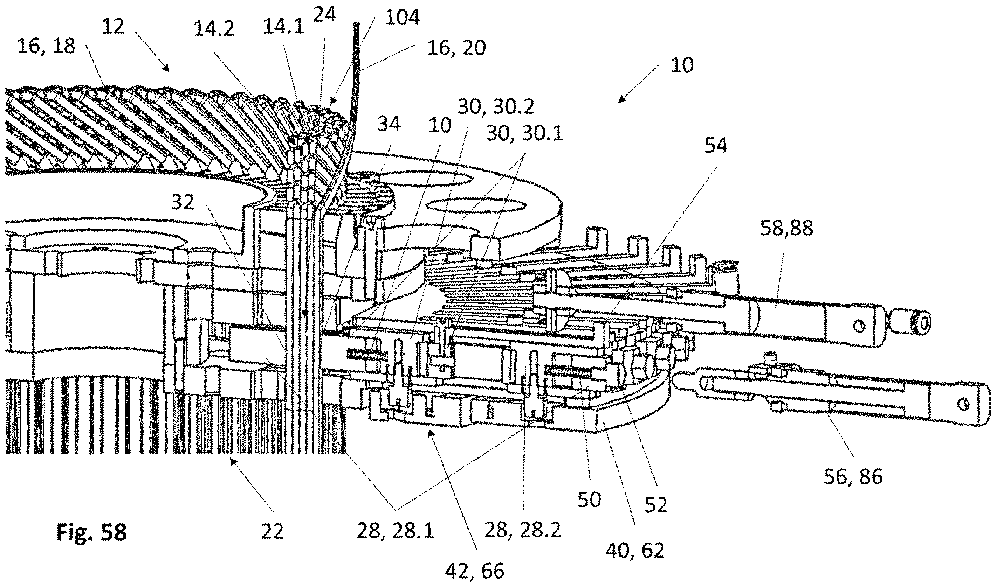

Fig. 53 zeigt in 2D-Ansicht den einzeln über den Federweg mithilfe eines außenstehenden Betätigungselements 88 (oberer, ziehender Zylinder) geöffneten radial äußeren Schieber 30. Der I-Pin 20 kommt von oben. Fig. 54 zeigt in 2D-Ansicht den einzeln über den Federweg mithilfe eines außenstehenden Betätigungselements 88 (oberer, ziehender Zylinder) geöffneten radial äußeren Schieber 30, wobei der I-Pin 20 nach unten geführt wird. Die gleiche Situtation ist in Fig. 56 in trimetrischer Ansicht gezeigt. Wie in Fig. 57 in trimetrischer Ansicht gezeigt, wird der I-Pin auf Endposition gebracht, während der radial äußere Schieber 30 einzeln über den Federweg mithilfe des außenstehenden Betätigungselements 88 geöffnet ist; die Nut/der Aufnahmeraum 24 ist somit radial außen weiterhin über den außenstehenden, ziehenden Zylinder geöffnet, so dass der I-Pin auf die Enposition gesteckt werden kann. Wie in Fig. 55 in 2D-Darstellung und in Fig. 58 in trimetrischer Ansicht zu sehen, befindet sich danach der I-Pin 20 in Endposition, das außere Betätigungselement 88 ist nicht mehr im Eingriff; somit wird der I-Pin 20 vom radial äußeren Schieber 30 geklemmt.

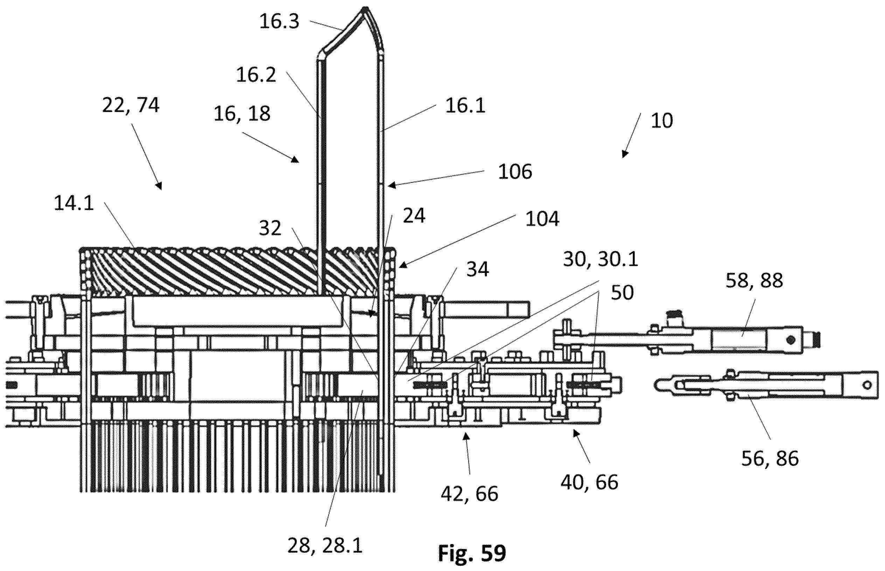

Wie im Folgenden anhand der Darstellung der Fig. 59 bis 62 erläutert, ist auch ein Klemmen von Hairpins 18 mit unterschiedlich langen Schenkeln 16.1, 16.2 möglich.

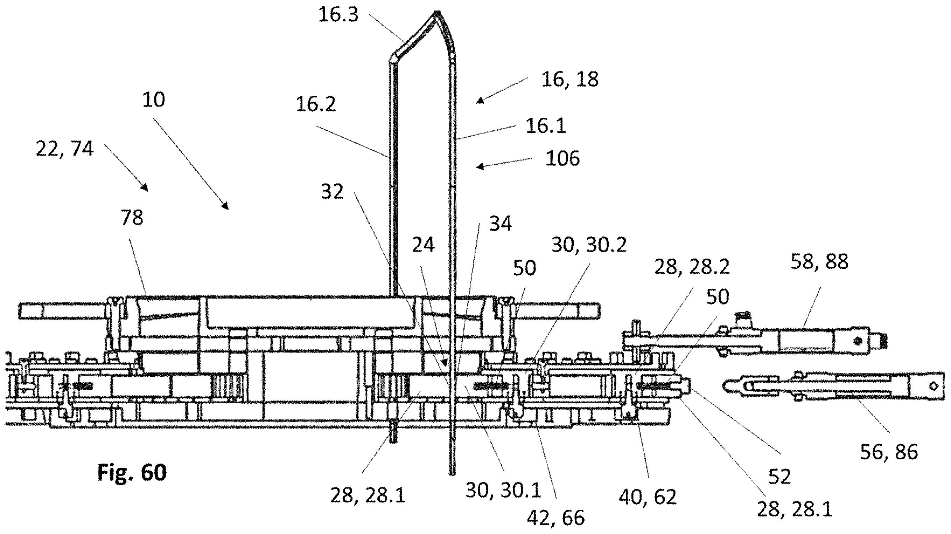

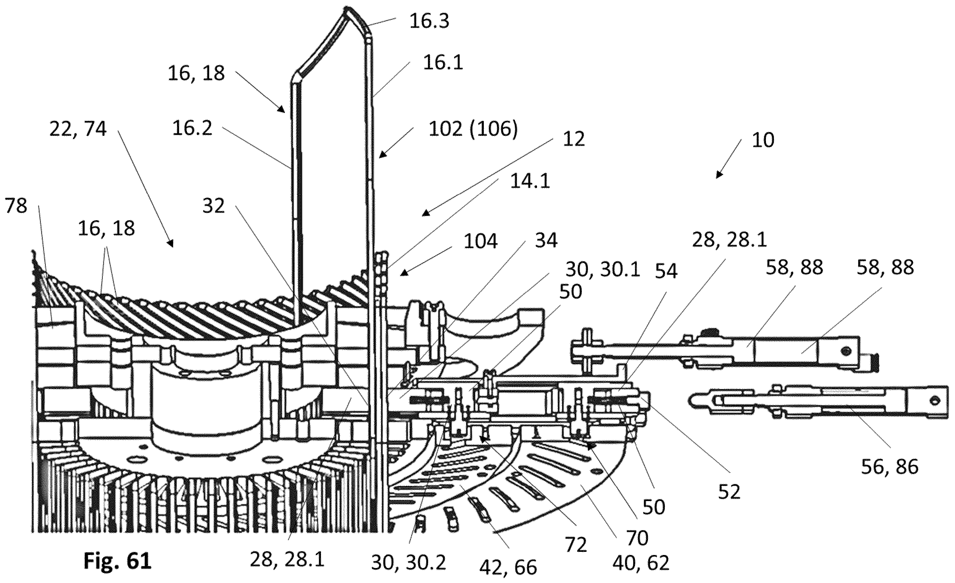

Fig. 59 zeigt eine 2D-Darstellung der Kranzanordnungsvorrichtung 10 mit einem geklemmter Hairpin 18 mit unterschiedlich langen Schenkeln 16.1, 16.2. Der längere Schenkel 16.1 des Hairpins 18 wird über den Federweg des radial inneren Schiebers 28 geklemmt. Dies ist in Kombination mit einem bereits in Lagerposition befindlichem ersten Hairpin-Kranz 14.1 dargestellt. Die gleiche Situation ist in Fig. 61 in trimetrischer Ansicht gezeigt. Einzeln ist der geklemmte Hairpin 18 in der Kranzanordnungsvorrichtung 10 in Fig. 60 in 2D-Darstellung und in Fig. 62 in trimetrischer Darstellung gezeigt.

In der Aufnahmenut 24, die den längeren Schenkel 16.1 aufnimmt, befinden sich somit mehr Leiterabschnitte als in der Aufnahmenut 24, die axial mit dem kürzeren Schenkel 16.2 fluchtet, der aber nicht bis zur Klemmung herunterreicht. Der unterschiedliche Füllungsgrad der Aufnahmenuten 24 kann über die Entkopplung mittels der mehrteiligen Schiebern 28, 30 gehandhabt werden.

Die Fig. 63 bis 70 zeigen weitere Ansichten des Vorstecknests 74 und der Individualbetätigungseinrichtungen 56, 58.

Fig. 63 zeigt eine perspektivische Abbildung des Gesamtvorstecknests 74 mit Hairpins 18 in Lagerposition 104 ohne außenstehende Betätigungselemente 86, 88, wobei auch mögliche Ausführungen des ersten bis dritten Aktors 64, 68, 80 gezeigt sind.

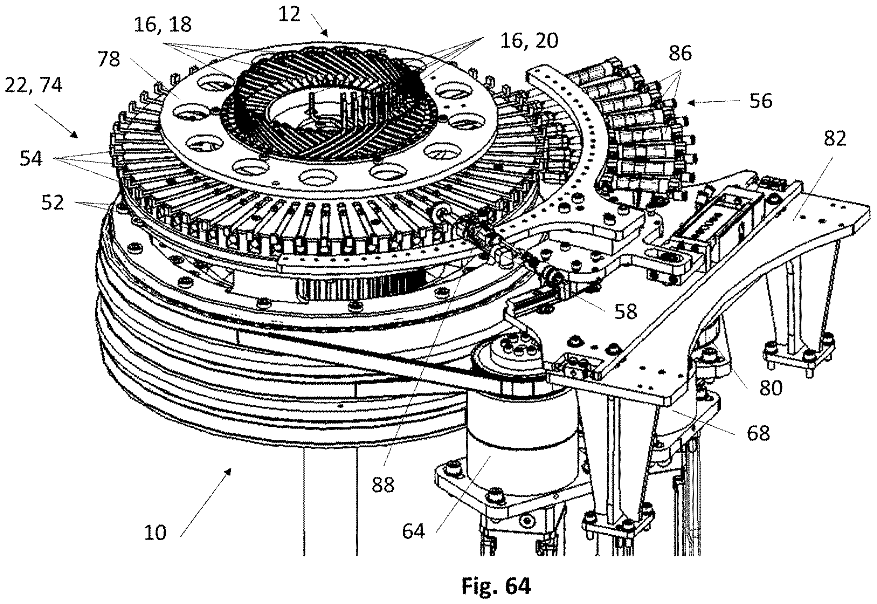

Fig. 64 zeigt eine perspektivische Abbildung der gesamten Kranzanordnungsvorrichtung 10 mit Vorstecknest 74 und außenstehenden Betätigungselementen 86, 88 und Hairpins 18 in Lagerposition 104.

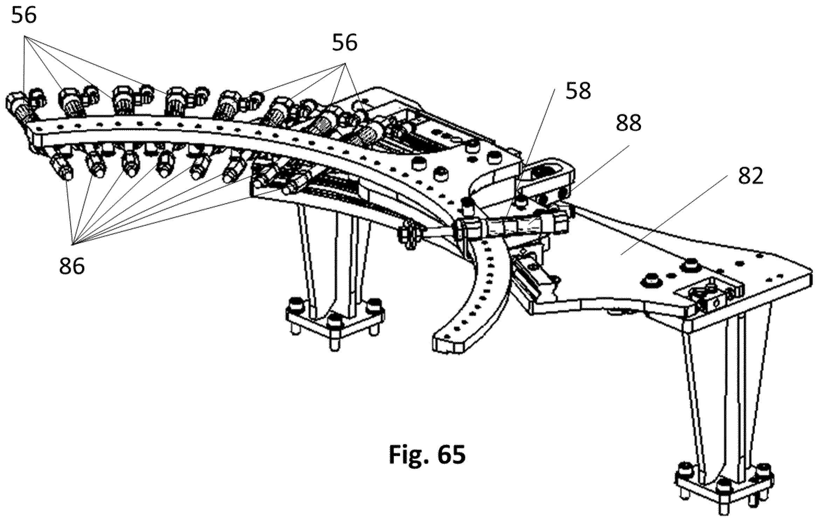

Fig. 65 zeigt eine perspektivische, beispielhafte Abbildung der außenstehenden Betätigungselemente 86, 88 (acht Betätigungselemente 86 links mit Wirkrichtung nach radial innen, ein ziehendes Betätigungselement 88 rechts mit Wirkrichtung nach radial außen).

Fig. 66 zeigt eine perspektivische Abbildung der gesamten Kranzanordnungsvorrichtung 10 mit außenstehenden Betätigungselementen 86, 88 und Hairpins 18 in Steckposition 102. Hier ist auch schematisch die Steuerung 94 gezeigt. Die Steuerung 94 kann eine Einzelsteuerung zur Steuerung nur der Kranzanordnungsvorrichtung 10 sein oder auch als Teil einer Anlagensteuerung einer Anlage zum Herstellen des Bauteils (z.B. Hairpin-Stator-Herstellanlage) ausgebildet sein.

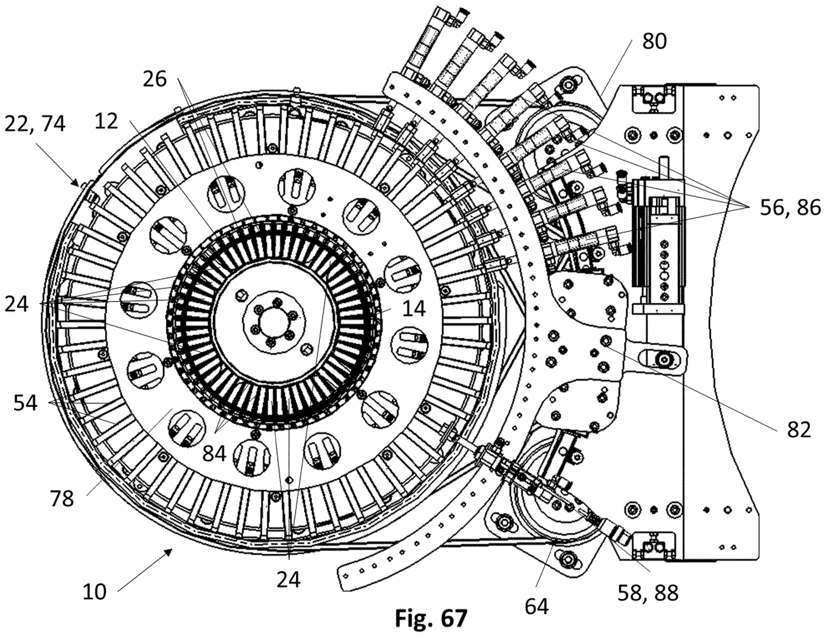

Fig. 67 zeigt eine Draufsicht der gesamten Kranzanordnungsvorrichtung 10 mit außenstehenden Betätigungselementen 86, 88 und Hairpins 18.

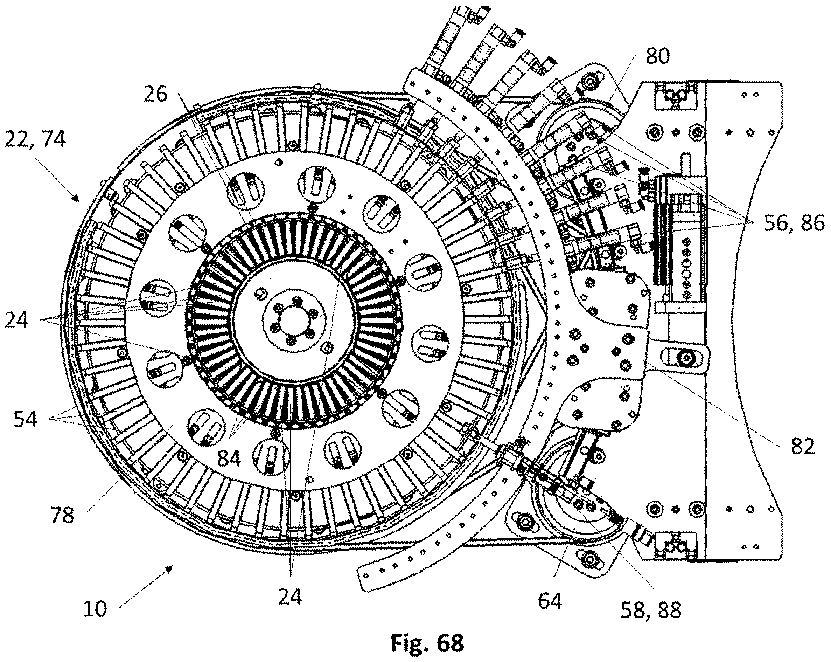

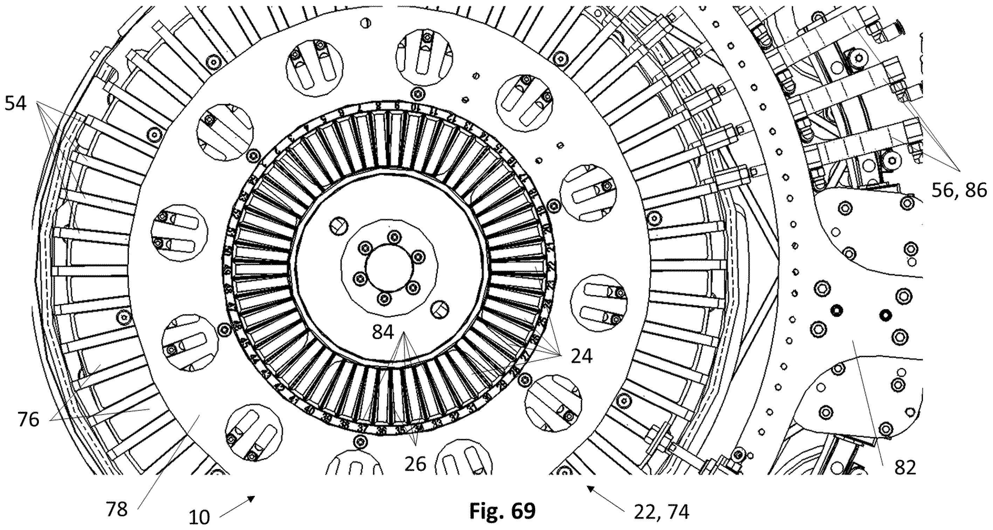

Fig. 68 zeigt eine Draufsicht der gesamten Kranzanordnungsvorrichtung 10 mit außenstehenden Betätigungselementen 86, 88 ohne Hairpins. Eine vergrößerte Darstellung davon (etwas hineingezoomt) ist in Fig. 69 zu sehen.

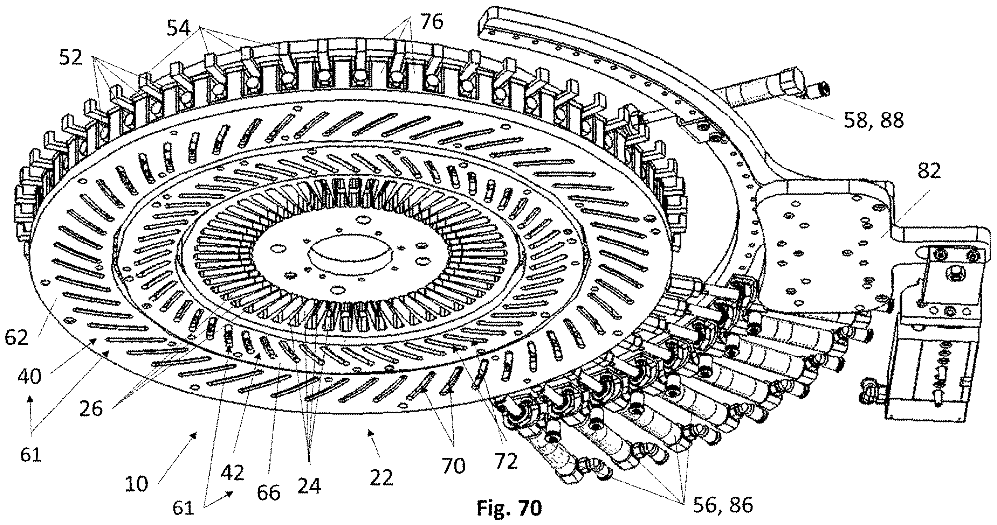

Fig. 70 zeigt eine Ansicht der Kranzanordnungsvorrichtung 10 von unten mit freigelegten Kurvenscheiben 62, 66 und außenstehenden Betätigungselementen.

Bei den Ausführungsformen der Fig. 1 bis 70 werden die jeweils pro Aufnahmeraum 24 vorgesehenen gegenläufigen Schieber 28, 30 alle von radial außen betätigt. Die gegenläufigen Schieber 28, 30 erstrecken sich demgemäß mit Anschlüssen oder Verbindungen nach radial außen. Um die Schieber 28, 30 zu unterscheiden, werden die mit der inneren Klemmfläche 32 versehenen Schieber unabhängig davon, wie sie sich als Bauteil oder mit Anschlüssen oder Verbindungen erstrecken, als radial innere Schieber 28 bezeichnet, während die mit der äußeren Klemmfläche 34 versehenen Schieber als radial äußere Schieber 30 bezeichnet werden.

Während bei den bisher erläuterten und in den Fig. 1 bis 70 gezeigten Ausführungsformen die jeweiligen mit der inneren Klemmfläche 32 versehenen radial inneren Schieber 28 von radial außen betätigbar sind und auch die jeweiligen mit der äußeren Klemmfläche 34 versehenen radial äußeren Schieber 30 von radial außen betätigbar sind, sind die Schieber 28, 30 bei anderen Ausführungsformen auch anders betätigbar.

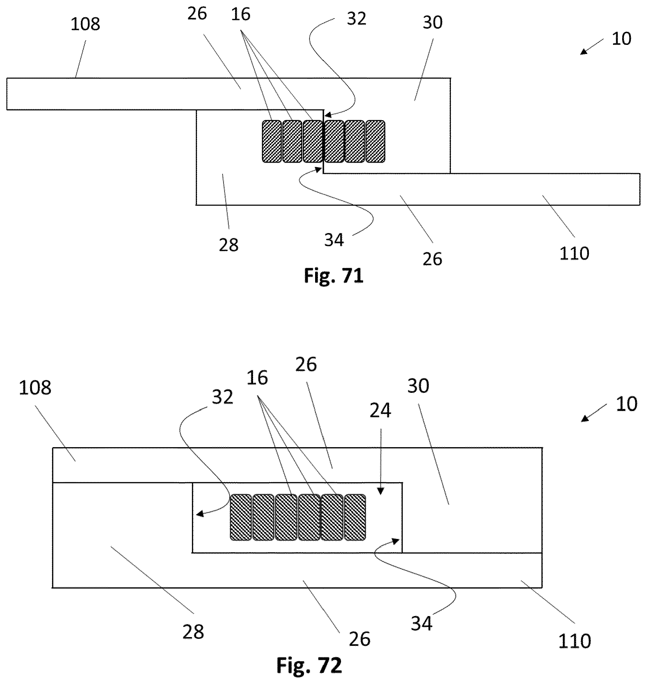

Bei einigen nicht dargestellten Ausführungsformen sind die jeweiligen mit der inneren Klemmfläche 32 versehenen radial inneren Schieber 28 von radial innen betätigbar - beispielsweise in der aus [6] bekannten Weise - und die jeweiligen mit der äußeren Klemmfläche versehenen radial äußeren Schieber sind von radial außen betätigbar, beispielsweise wie dies in den zuvor erläuterten Ausführungsformen verwirklicht ist. Bei einigen weiteren, nicht dargestellten Ausführungsformen sind die jeweiligen mit der inneren Klemmfläche 32 versehenen radial inneren Schieber 28 von radial innen betätigbar und auch die jeweiligen mit der äußeren Klemmfläche 34 versehenen radial äußeren Schieber 30 sind von radial innen betätigbar. Bei einigen Ausführungsformen, von denen ein Ausführungsbeispiel schematisch in den Fig. 71 bis 74 gezeigt ist, sind die jeweiligen mit der inneren Klemmfläche 32 versehenen radial inneren Schieber 28 von radial außen betätigbar und die jeweiligen mit der äußeren Klemmfläche 34 versehenen radial äußeren Schieber 30 sind von radial innen betätigbar.

Allgemein werden die gegenläufigen Schieber 28, 30 zum Schließen mit ihren Klemmflächen 32, 34 aufeinander zu gefahren und zum Öffnen mit ihren Klemmflächen 32, 34 voneinander weg gefahren.

Die Fig. 71 bis 74 zeigen die gegenläufigen Schieber 28, 30 für einen der Aufnahmeräume 24 in einer schematischen Darstellung von oben mit in dem Aufnahmeraum 24 aufzunehmenden Leitern 16 in unterschiedlichen Stellungen. Die Schieber 28, 30 sind hier einteilig dargestellt, einer oder beide der Schieber 28, 30 können aber in anderen Versionen auch wie anhand der Fig. 1 bis 70 erläutert mehrteilig ausgebildet sein.

Der radial äußere Schieber 30 mit der äußeren Klemmfläche 34 erstreckt sich als Bauteil mit der Begrenzung 26 einer Seite des Aufnahmeraums 24 und einem Anschlussstück 108 radial nach innen zu einer hier nicht dargestellten radial innen vorgesehenen zweiten Schiebergruppen-Bewegungseinrichtung 42. Der radial innere Schieber 28 mit der inneren Klemmfläche 32 erstreckt sich als Bauteil mit der Begrenzung 26 einer anderen Seite des Aufnahmeraums 24 und einem Anschlussstück 110 radial nach außen zu einer hier ebenfalls nicht dargestellten radial weiter außen vorgesehenen ersten Schiebergruppen-Bewegungseinrichtung 40.

In Fig. 71 sind die Schieber 28, 30 geschlossen. Hierzu wird der sich bei dieser Ausführung insgesamt mit Begrenzung 26 und Anschlussstück 108 radial nach innen erstreckende Schieber 30 mit der äußeren Klemmfläche 34 (d.h. der radial äußere, d.h. von radial außen wirkende Schieber 30) radial nach innen gefahren; und der sich bei dieser Ausführung insgesamt mit Begrenzung 26 und Anschlussstück 110 radial nach außen erstreckende Schieber 28 mit der inneren Klemmfläche 32 (d.h. der radial innere, d.h. von radial innen wirkende Schieber 28) wird radial nach außen gefahren. Der als Nut ausgebildete Aufnahmeraum 24 des Sammelnests bzw. der Sammelaufnahme 22 (hier nicht dargestellt) wird geschlossen und hat einen Boden. Die Leiter 16 befinden sich in der Steckposition, in der die Hairpins 18 zum größten Teil aus der Kranzanordnungsvorrichtung 10 herausstehen (wie dies auch in der Literaturstelle [6] erläutert ist). Die Leiter 16 stehen dabei auf den Stützflächenbereichen 44, 46 auf den Oberseiten der Schieber 28, 30 auf.

Fig. 72 zeigt die gleiche Ausführung wie in Fig. 71, wobei die Schieber 28, 30 vollständig geöffnet sind. Hierzu wird der bei dieser Ausführung von radial innen betätigte und sich demnach radial nach innen erstreckende Schieber 30 mit der äußeren Klemmfläche 34 (d.h. der radial äußere, d.h. von radial außen wirkende Schieber 30) radial nach außen gefahren; und der bei dieser Ausführung von radial außen betätigte und sich demnach radial nach außen erstreckende Schieber 28 mit der inneren Klemmfläche 32 (d.h. der radial innere, d.h. von radial innen wirkende Schieber 28) wird radial nach innen gefahren. Der als Nut ausgebildete Aufnahmeraum 24 des Sammelnests bzw. der Sammelaufnahme 22 (hier nicht dargestellt) wird geöffnet und hat keinen Boden. Die Leiter 16 befinden sich in der Lagerposition, in der die Hairpins 18 zum größten Teil in der Kranzanordnungsvorrichtung 10 aufgenommen sind (wie dies auch in der Literaturstelle [6] erläutert ist). Die Leiter 16 sind durch die Schieber 28, 30 nicht geklemmt und demnach auch nicht positioniert oder gehalten.

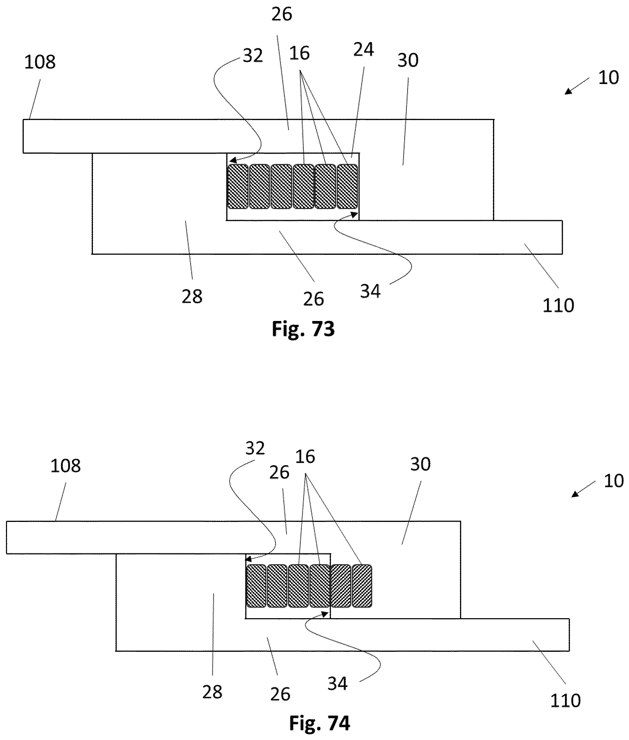

Fig. 73 zeigt die gleiche Ausführung wie in Fig. 71 und 72 in einer Klemmstellung. Hierzu fahren die Schieber 28, 30 auf Pin-Kontakt. Hierzu wird der bei dieser Ausführung von radial innen betätigte und sich demnach radial nach innen erstreckende Schieber 30 mit der äußeren Klemmfläche 34 (d.h. der radial äußere, d.h. von radial außen wirkende Schieber 30) radial nach innen bis zum Kontakt mit dem Leiter-Paket gefahren; und der bei dieser Ausführung von radial außen betätigte und sich demnach radial nach außen erstreckende Schieber 28 mit der inneren Klemmfläche 32 (d.h. der radial innere, d.h. von radial innen wirkende Schieber 28) wird radial nach außen bis zum Kontakt mit dem Leiter-Paket gefahren. Die Leiter 16 befinden sich in der Lagerposition. Die Leiter 16 werden mit den Klemmflächen 32, 34 der Schieber 28, 30 geklemmt und demnach positioniert und gehalten.

Wie man Fig. 74 beispielhaft entnehmen kann, gibt es auch jeglichen Zwischenzustand. Die Schieber 28, 30 sind unabhängig voneinander bewegbar, so dass sie Zwischenstellungen einnehmen können. Teile des Leiter-Pakets - hier beispielsweise zwei rechts dargestellte Leiter 16 - stehen auf Stützflächenbereichen 44 oder 46 auf den Oberseiten der Schieber 28, 30 auf und befinden sich in der Steckposition. Bei der dargestellten beispielhaften Zwischenstellung werden Teile des Leiter-Pakets von den Klemmflächen 32, 34 - diese können auch als Positionierflächen wirken und als solche bezeichnet werden - der Schieber 28, 30 geklemmt/positionier/gehalten, siehe hier die vier rechts dargestellten Leiter 16.

Es ist eine Kranzanordnungsvorrichtung (10) zum Bilden einer Kranzanordnung (12) von elektrischen Leitern (16, 18) zum Bilden einer Spulenwicklung beschrieben worden, die mit einer Sammelaufnahme (22) mit mehreren um eine Achse herum angeordneten Aufnahmeräumen (24) zur Aufnahme von beim Bilden des Kranzes (14, 14.1, 14.2) darin axial einzufügenden Leiterabschnitten (16.1, 16.2) der Leiter (16, 18) versehen ist.

Bei einer Alternative zur prozesstechnischen Verbesserung wird jeweils wenigstens ein radial innerer Schieber (28) pro Aufnahmeraum (24) mit einer ersten Klemmfläche (32) und jeweils wenigstens ein radial äußerer Schieber (30) pro Aufnahmeraum (24) mit einer zweiten Klemmfläche (34) vorgeschlagen, wobei die radial inneren und die radial äußeren Schieber (28, 30) insbesondere gegenläufig radial bewegbar sind.

Bei einer anderen Alternative zur prozesstechnischen Verbesserung, bei der auch nur wenigstens einem Schieber (28, 30) pro Aufnahmeraum (24) zum Klemmen darin befindlicher Leiter (16) vorgesehen sein kann, wird vorgeschlagen, dass wenigstens einer, mehrere oder alle der Schieber (28, 34) mehrteilig ausgebildet sind, so dass an einem ersten Schieberteil (28.1, 30.1) die Klemmfläche (32, 34) ausgebildet ist und an einem zweiten Schieberteil (28.2, 30.2) ein Anschluss (52, 54) zum Verbinden mit einer Schiebergruppen-Bewegungseinrichtung (40, 42) zum gemeinsamen Bewegen einer Schiebergruppe ausgebildet ist, wobei die Schieberteile (28.1, 30.1; 28.2, 30.2) in Schieberbewegungsrichtung relativ zueinander bewegbar sind.

### Bezugszeichenliste:

- 10: Kranzanordnungsvorrichtung
- 12: Kranzanordnung
- 14: Kranz
- 14.1: erster Kranz
- 14.2: zweiter Kranz
- 16: Leiter
- 16.1: Schenkel (Beispiel für Leiterabschnitt)
- 16.2: Schenkel (Beispiel für Leiterabschnitt)
- 16.3: Dachbereich
- 18: Hairpin
- 20: I-Pin
- 22: Sammelaufnahme
- 24: Aufnahmeräume
- 26: Begrenzung
- 28: radial innerer Schieber
- 28.1: erster Schieberteil (des radial inneren Schiebers)
- 28.2: zweiter Schieberteil (des radial inneren Schiebers)
- 30: radial äußerer Schieber
- 30.1: erster Schieberteil (des radial äußeren Schiebers)
- 30.2: zweiter Schieberteil (des radial äußeren Schiebers)
- 32: innere Klemmfläche
- 34: äußere Klemmfläche
- 36: erster Anschluss (zum Verbinden erster Schiebergruppen-Bewegungseinrichtung)
- 38: zweiter Anschluss (zum Verbinden zweiter Schiebergruppen-Bewegungseinrichtung)
- 40: erste Schiebergruppen-Bewegungseinrichtung
- 42: zweite Schiebergruppen-Bewegungseinrichtung
- 44: innerer Stützflächenbereich
- 46: äußerer Stützflächenbereich
- 50: Feder
- 52: dritter Anschluss (zum Verbinden mit erster Individualbewegungseinrichtung)
- 54: vierter Anschluss (zum Verbinden mit zweiter Individualbewegungseinrichtung
- 56: erste Individualbewegungseinrichtung (zum Bewegen des ersten Schieberteils des radial inneren Schiebers)
- 58: zweite Individualbewegungseinrichtung (zum Bewegen des ersten Schieberteils des radial äußeren Schiebers)
- 60: Längsöffnung
- 61: zentrales Getriebe
- 62: erste Kurvenscheibe
- 64: erster Aktor (erste Schiebergruppen-Bewegungseinrichtung)
- 66: zweite Kurvenscheibe
- 68: zweiter Aktor (zweite Schiebergruppen-Bewegungseinrichtung)
- 70: erste Kurven-Mitnehmer-Kopplung
- 72: zweite Kurven-Mitnehmer-Kopplung
- 74: Vorstecknest
- 76: Schieberführung
- 78: Vorstecknestring
- 80: dritter Aktor
- 82: Halterung
- 84: Begrenzungswandbereiche
- 86: außenstehendes Betätigungselement (erste Individualbetätigungseinrichtung)
- 88: außenstehendes Betätigungselement (zweite Individualbetätigungseinrichtung)
- 90: Kurvenrolle
- 92: Kurvenrolle
- 94: Steuerung
- 96: Prozessor
- 98: Speicher
- 100: Vorsteckstellung
- 102: Vorsteckposition (auch Steckposition genannt)
- 104: Lagerposition
- 106: Zwischenposition
- 108: Anschlussstück

## Patentansprüche

1. Kranzanordnungsvorrichtung (10) zum Bilden einer Kranzanordnung (12) aus einem Kranz (14) oder aus mehreren konzentrisch angeordneten Kränzen (14.1, 14.2) von elektrischen Leitern (16, 18), um eine Spulenwicklung eines Bauteils einer elektrischen Maschine zu bilden, mit einer Sammelaufnahme (22) mit mehreren um eine Achse ringförmig angeordneten in axialer Richtung offenen und durch sich in radialer Richtung erstreckende Begrenzungen (26) begrenzten Aufnahmeräumen (24) zur Aufnahme von beim Bilden des Kranzes (14, 14.1, 14.2) darin axial einzufügenden Leiterabschnitten (16.1, 16.2) der Leiter (16, 18),
jeweils wenigstens einem radial inneren Schieber (28) pro Aufnahmeraum (24), wobei der radial innere Schieber (28) eine in die eine radiale Richtung gerichtete Klemmfläche (32) in dem Aufnahmeraum (24) aufweist,
jeweils wenigstens einem radial äußeren Schieber (30) pro Aufnahmeraum (24), wobei der radial äußere Schieber (30) eine in die andere radiale Richtung gerichtete Klemmfläche (34) in dem Aufnahmeraum (24) aufweist,
wobei die radial inneren Schieber (28) radial bewegbar sind und wobei die radial äußeren Schieber (30) radial bewegbar sind.

2. Kranzanordnungsvorrichtung (10) nach Anspruch 1, **dadurch gekennzeichnet,**
**dass** der radial innere Schieber (28) eine radial nach außen gerichtete Stirnfläche als innere Klemmfläche (32) in dem Aufnahmeraum (24) aufweist und der radial äußere Schieber (30) eine radial nach innen gerichtete Stirnfläche als äußere Klemmfläche (34) in dem Aufnahmeraum aufweist.

3. Kranzanordnungsvorrichtung (10) nach einem der voranstehenden Ansprüche, **dadurch gekennzeichnet,**
**dass** die radial inneren Schieber (28) und/oder die radial äußeren Schieber (30) jeweils an ihrer Oberseite einen ebenen Stützflächenbereich (44, 46) aufweisen, auf dem jeweils wenigstens ein Leiter (16) zur Positionierung beim Bilden eines Kranzes (14, 14.1, 14.2) abstützbar ist.

4. Kranzanordnungsvorrichtung (10) nach einem der voranstehenden Ansprüche, **dadurch gekennzeichnet**,
4.1 dass von den jeweils einem Aufnahmeraum (24) zugordneten Schiebern (28, 30) einer den anderen übergreift; und/oder
4.2 dass die radial inneren Schieber (28) jeweils einen radial äußeren Schieber (30) umgreifen; und/oder
4.3 dass die sich in radialer Richtung erstreckenden Begrenzungen (26) eines Aufnahmeraums (24) jeweils zumindest teilweise an einem der dem Aufnahmeraum (24) zugeordneten Schieber (28) ausgebildet sind; und/oder
4.4 dass die radial inneren Schieber (28) unabhängig von den radial äußeren Schiebern (34) bewegbar sind.

5. Kranzanordnungsvorrichtung (10) nach einem der voranstehenden Ansprüche, **dadurch gekennzeichnet,**
**dass** wenigstens einer, mehrere oder alle der radial inneren Schieber (28) und/oder radial äußeren Schieber (30) jeweils mehrteilig ausgebildet sind, wobei an einem ersten Schieberteil (28.1, 30.1) eine als Klemmfläche (32, 34; 134, 132) wirkende Stirnfläche und an einem zweiten Schieberteil (28.2, 30.2) ein Anschluss (36, 38) zum Verbinden mit einer Schiebergruppen-Bewegungseinrichtung (40, 42) zum gemeinsamen Bewegen einer Schiebergruppe ausgebildet ist, wobei der erste und der zweite Schieberteil (28.1, 30.1,; 28.2, 30.2) durch einen Kraftspeicher oder ein elastisches Element miteinander verbunden sind, wobei der erste Schieberteil (28.1, 30.1) gegen den Widerstand des Kraftspeichers oder des elastischen Elements relativ zu dem zweiten Schieberteil (28.2, 30.2) radial beweglich ist.

6. Kranzanordnungsvorrichtung (10) nach Anspruch 5, **dadurch gekennzeichnet,**
**dass** an dem ersten Schieberteil (28.1, 20.1) ein Anschluss (52, 54) zum Verbinden mit einer Individualbewegungseinrichtung (56, 58) ausgebildet ist, mittels welcher der erste Schieberteil (28.1, 30.1) gegen den Widerstand des Kraftspeichers oder des elastischen Elements relativ zu dem zweiten Schieberteil (28.2, 30.2) radial beweglich ist.

7. Kranzanordnungsvorrichtung (10) nach einem der voranstehenden Ansprüche, **gekennzeichnet durch** eine erste Schiebergruppen-Bewegungseinrichtung (40) zum gemeinsamen radialen Bewegen der radial inneren Schieber (28) und eine unabhängig von der ersten Schiebergruppen-Bewegungseinrichtung (40) betätigbare zweite Schiebergruppen-Bewegungseinrichtung (42) zum gemeinsamen radialen Bewegen der radial äußeren Schieber (30).

8. Kranzanordnungsvorrichtung (10) nach Anspruch 7, **dadurch gekennzeichnet**,
8.1 dass die erste Schiebergruppen-Bewegungseinrichtung (40) eine erste Kurvenscheibe (62) hat, die mittels eines ersten Aktors (64) drehbar ist und deren Drehbewegung mittels einer Kurven-Mitnehmer-Kopplung (70) in eine Radialbewegung der radial inneren Schieber (28) umwandelbar ist; und/oder
8.2 dass die zweite Schiebergruppen-Bewegungseinrichtung (42) eine zweite Kurvenscheibe (66) hat, die mittels eines zweiten Aktors (68) drehbar ist und deren Drehbewegung mittels einer Kurven-Mitnehmer-Kopplung (72) in eine Radialbewegung der radial äußeren Schieber (30) umwandelbar ist; und/oder
8.3 dass die Schiebergruppen-Bewegungseinrichtungen (40, 42) zueinander konzentrische Kurvenscheiben (62, 66) haben und/oder
8.4 dass die erste und die zweite Schiebergruppen-Bewegungseinrichtung (40, 42) mittels radial außen angeordneter Aktoren (64, 68) angetrieben werden.

9. Kranzanordnungsvorrichtung (10) nach Anspruch 6 und nach einem der Ansprüche 7 oder 8, **gekennzeichnet durch** eine an den ersten Schieberteil (28.1, 30.1) eines der Schieber (28, 30) angeschlossene Individualbewegungseinrichtung (56, 58), die dazu eingerichtet ist, den ersten Schieberteil (28.1, 30.1) individuell und unabhängig von der Schiebergruppen-Bewegungseinrichtung (40, 42), an die der zweite Schieberteil (28.2, 30.2) des Schiebers (28, 30) zusammen mit anderen Schiebern(28, 30) der gleichen Schiebergruppe gekoppelt ist, zu bewegen.

10. Kranzanordnungsvorrichtung (10) nach einem der voranstehenden Ansprüche, **dadurch gekennzeichnet,**
**dass** die Sammelaufnahme (22) einen axial versetzt zu den Schiebern (28, 30) angeordneten Vorstecknestring (78) hat, in dem zumindest ein Teilbereich der Aufnahmeräume (24) durch feststehende radiale Begrenzungswandbereiche (84) begrenzt sind.

11. Kranzanordnungsvorrichtung (10) nach Anspruch 10, **dadurch gekennzeichnet,**
**dass** der Vorstecknestring (78) axial relativ zu den radial inneren und radial äußeren Schiebern (28, 30) bewegbar ist.

12. Kranzanordnungsverfahren zum Bilden einer Kranzanordnung (12) aus einem Kranz (14) oder mehreren konzentrisch angeordneten Kränzen (14.1, 14.2) von elektrischen Leitern (16), um eine Spulenwicklung eines Bauteils einer elektrischen Maschine zu bilden, umfassend:
a) Bereitstellen einer Kranzanordnungsvorrichtung (10) nach einem der voranstehenden Ansprüche,
b) Bereitstellen der radial inneren Schieber (28) und/oder radial äußeren Schieber (30) in einer Vorsteckstellung (100), in der sie zumindest teilweise in die Aufnahmeräume (24) eingefahren sind;
c) Einstecken von Leiterabschnitten (16.1, 16.2) elektrischer Leiter (16, 18) in die Aufnahmeräume (24) so, dass die Leiterabschnitte (16.1, 16.2) auf den in der Vorsteckstellung (100) zumindest teilweise in die Aufnahmeräume (24) eingefahrenen Schiebern (28, 30) aufstützen und ein Kranz (14, 14.1, 14.2) aus den elektrischen Leitern (16, 18) gebildet wird,
d) Verlagern des Kranzes (14, 14.1, 14.2) aus einer Vorsteckposition (100), in der die den Kranz (14, 14.1, 14.2) bildenden Leiter (16, 18) aus der Sammelaufnahme (22) vorstehen, in eine Lagerposition (104), in der die einen zuvorigen Kranz (14.1) bildenden Leiter (16, 18) zum Stecken eines weiteren Kranzes (14.2) gelagert werden oder in eine zwischen der Vorsteckposition (100) und der Lagerposition (104) angeordnete Zwischenposition (106);
e) relatives Verfahren der radial inneren Schieber (28) und radial äußeren Schieber (30), um die Leiter (16, 18) in der Lagerposition (104) oder der Zwischenposition (106) zwischen den an den Schiebern (28, 30) ausgebildeten Klemmflächen (32, 34) zu klemmen.

13. Kranzanordnungsverfahren nach Anspruch 12, **dadurch gekennzeichnet,**
**dass** Schritt e) relatives Aufeinander zu Fahren oder Zusammendrücken der radial inneren Schieber (28) und radial äußeren Schieber (30) umfasst, um die Leiter (16, 18) in der Lagerposition (104) oder der Zwischenposition (106) zwischen den an den Schiebern (28, 30) ausgebildeten Klemmflächen (32, 34) zu klemmen.

14. Kranzanordnungsvorrichtung (10) nach einem der Ansprüche 1 bis 11, **gekennzeichnet durch** eine Steuerung (94), die dazu eingerichtet ist, die Kranzanordnungsvorrichtung (10) zum Durchführen des Kranzanordnungsverfahrens nach Anspruch 12 oder 13 zu veranlassen.
